(19) Europäisches Patentamt
European Patent Office
Office européen des brevets

(11) **EP 1 849 327 B1**

(12) **EUROPEAN PATENT SPECIFICATION**

(45) Date of publication and mention
of the grant of the patent:
**06.12.2017 Bulletin 2017/49**

(21) Application number: **06710229.3**

(22) Date of filing: **11.01.2006**

(51) Int Cl.:
*H04W 12/06* (2009.01)    *H04L 29/06* (2006.01)
*H04L 29/12* (2006.01)    *G06F 21/57* (2013.01)
*G06F 21/55* (2013.01)

(86) International application number:
**PCT/IB2006/000041**

(87) International publication number:
**WO 2006/085170 (17.08.2006 Gazette 2006/33)**

(54) **METHODS, APPARATUSES, SYSTEM AND COMPUTER PROGRAM FOR OPTIMAL TRANSFER OF GUSS DATA IN A WIRELESS COMMUNICATIONS SYSTEM**

VERFAHREN, VORRICHTUNGEN, SYSTEM UND COMPUTERPROGRAMM ZUM OPTIMALEN TRANSFER VON GUSS DATEN IN EINEM DRAHTLOSEN KOMMUNIKATIONSSYSTEM

PROCÉDÉS, APPAREILS, SYSTÈME ET PROGRAMME D´ORDINATEUR POUR LE TRANSFERT OPTIMAL DE DONNÉES GUSS DANS UN SYSTÈME DE COMMUNICATIONS SANS FIL

(84) Designated Contracting States:
**AT BE BG CH CY CZ DE DK EE ES FI FR GB GR HU IE IS IT LI LT LU LV MC NL PL PT RO SE SI SK TR**

(30) Priority: **14.02.2005 US 652633 P**

(43) Date of publication of application:
**31.10.2007 Bulletin 2007/44**

(73) Proprietor: **Nokia Technologies Oy**
**02610 Espoo (FI)**

(72) Inventors:
• **LAITINEN, Pekka**
  **FIN-00800 Helsinki (FI)**
• **GINZBOORG, Philip**
  **FIN-02360 Espoo (FI)**

(74) Representative: **Ruuskanen, Juha-Pekka et al**
**Page White & Farrer**
**Bedford House**
**John Street**
**London WC1N 2BF (GB)**

(56) References cited:
**US-A1- 2005 028 165**

• **NOKIA: "Bootstrapping key lifetime and timestamp", 3GPP DRAFT; S3-040077_NOKIA_KEY-LIFETIME-TIMESTAMP, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. SA WG3, no. Edinburgh; 20040203, 3 February 2004 (2004-02-03), XP050275078, [retrieved on 2004-02-03]**
• **NOKIA: "TS 29.109 - Multiple AVs downloding in Zh", 3GPP DRAFT; N4-040571, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. CN WG4, no. Zagreb; 20040517, 17 May 2004 (2004-05-17), XP050083199, [retrieved on 2004-05-17]**
• **'Update of GUSS in BSF' 3GPP TSG SA WG3 SECURITY SA3#36; S3-040933, [Online] 23 November 2004 - 26 November 2004, XP002999124 Retrieved from the Internet: <URL:www.3gpp.org>**
• **'Fetching of one AV only on each Zh run between BSF and HSS' 3GPP TSG SA WG3 SECURITY S3#36; S3-040986, [Online] 23 November 2004 - 26 November 2004, SHENZHEN, CHINA, XP002999125 Retrieved from the Internet: <URL:www.3gpp.org>**

EP 1 849 327 B1

- 'GBA User Security Settings (GUSS) transfer optimisation' 3GPP TSG SA WG3 SECURITY SA3#37; S3-050056, [Online] 21 February 2005 - 25 February 2005, SOPHIA ANTIPOLIS, FRANCE, XP002999126 Retrieved from the Internet: <URL:www.3gpp.org>

**Description**

BACKGROUND OF THE INVENTION

Field of the Invention

The present invention relates to an apparatus and method for sharing secured data between functions and elements in a communications system, and in particular, to an apparatus and method for determining a validity of secure data and subsequent sharing of the data based on the result of the determination.

Description of the Related Art

Communications, and more particularly, wireless communications systems have become increasingly available and affordable to vast sections of the world's population. The success of such wireless communications systems has in turn resulted in a need to accommodate the tremendous growth in the number of subscribers. One method of addressing the need to accommodate the tremendous growth has been to make the wireless communications system scalable. Another method has been to optimize the elements, and functions that make the wireless communications systems. As a result, the architectural framework of communications systems has been constantly evolving.

One such area that has been evolving is an authentication architecture in the wireless communication systems. In the wireless communications systems, a number of applications share a need for mutual authentication between a client/User Equipment (UE) and an application/application server before further communication can take place. Examples include, but are not limited to, a communication between a client and a presence server or a communication with a content server. Because many applications share this common need for a peer authentication mechanism, a Generic Authentication Architecture (GAA) has been developed.

Initial authentication (i.e., bootstrapping) of Third Generation Project Partnership (3GPP) Generic Authentication Architecture (GAA) is based on AKA (Authentication and Key Agreement Protocol). The GAA architecture is described in a document produced by the 3rd Generation Partnership Project (3GPP). The document reference is, 3GPP TS 33.919 version 6.2.0 (2005-03): "3rd Generation Partnership Project; Technical Specification Group Services and System Aspects; 3G security; Generic Authentication Architecture (GAA); System description,".

One of the salient aspects of the GAA, is that includes an application independent mechanism that provides a client/ UE and an application/application server with a common shared secret. This shared secret can subsequently be used to authenticate the wireless communication between the client/UE and the application/application server. This aspect is described in a document produced by the 3rd Generation Partnership Project (3GPP) and the document reference is, "3GPP TS 33.220 version 7.1.1 (2005-10): 3rd Generation Partnership Project; Technical Specification Group Services and System Aspects; 3G security; Generic Authentication Architecture (GAA); Generic bootstrapping architecture (Release 7),"and "3GPP TS 29.109 version 7.0.0 (2005-09): 3rd Generation Partnership Project; Technical Specification Group Core Networks and Terminals; Generic Authentication Architecture (GAA); Zh and Zn Interfaces based on the Diameter protocol; Stage 3 (Release 7),".

Change request for 3GPP TSG SA WG3 Security S3#36;S3-040986; Fetching of one AV only on each Zh run between BSF and HSS; November 23 - 26 2004, Shenzhen, China, XP002999125, discloses use of only one authentication vector AV that maybe fetched from HSS by BSF on each protocol run over Zh reference point.

US2005/028165 discloses a solution where an enterprise application and corresponding client properties file is provided on a mobile device. Upon initiation of the mobile device, the client properties file is read into application memory. The user can then made modifications to the client properties file to change the user settings. If an updated properties file is later received from the server, it is reconciled with the client properties file. Thus, the users modifications are not discarded or overwritten. In addition, the reconciled properties file could be synchronized to the server so that if the mobile device is lost or fails, the user settings can be restored.

SUMMARY OF THE INVENTION

The invention is defined by the appended independent claims. Certain more specific aspects of the invention are defined by the dependent claims.

BRIEF DESCRIPTION OF THE DRAWINGS

The accompanying drawings, which are included to provide a further understanding of the invention and are incorporated in and constitute a part of this specification, illustrate embodiments of the invention that together with the description serve to explain the principles of the invention, wherein:

FIG. 1 illustrates an apparatus to provide generic mechanism for a network application server, in accordance with an embodiment of the present invention;

FIG. 2 is one embodiment of an example of information transferred between a bootstrapping server function and a home subscriber server; and

FIGS. 3A and 3B illustrate a method providing a generic bootstrapping architecture user security setting timestamp to minimize traffic load, in accordance with an embodiment of the present invention.

DETAILED DESCRIPTION OF THE PREFERRED EMBODIMENTS

The present invention now will be described more fully hereinafter with reference to the accompanying drawings, in which some, but not all embodiments of the inventions are shown. Indeed, these inventions may be embodied in many different forms and should not be construed as limited to the embodiments set forth herein; rather, these embodiments are provided so that this disclosure will satisfy applicable legal requirements. Like numbers refer to like elements throughout.

3GPP GBA is a proposed (3GPP TS 33.220, and 3GPP TS 29.209, the contents of which are hereby incorporated by reference) authentication infrastructure. This infrastructure may be utilized to enable application functions in a network side and on a user side to communicate in situations where the network side and the user side would not otherwise be able to communicate. This functionality is referred to as "bootstrapping of application security," or more generally simply as "bootstrapping."

The general principles of bootstrapping are that a generic bootstrapping server function (BSF) allows user equipment (UE) to authenticate therewith, and agree on session keys. Such authentication may be based on authentication and key agreement (AKA). By running AKA, the mobile terminal and the network mutually authenticate each other and agree on keys, specifically a confidentiality key (CK) and an integrity key (IK). After this authentication, the UE and a network application function (NAF), which may also be referred to as a service provider, may run some application specific protocol where the authentication of messages is based on the session keys agreed between the UE and the BSF.

The bootstrapping function is not intended to be dependent upon any particular network application function. The server implementing the bootstrapping function must be trusted by a home operator to handle authentication vectors. Network application functions may be supported in the operator's home network, a visited network, or in a third network.

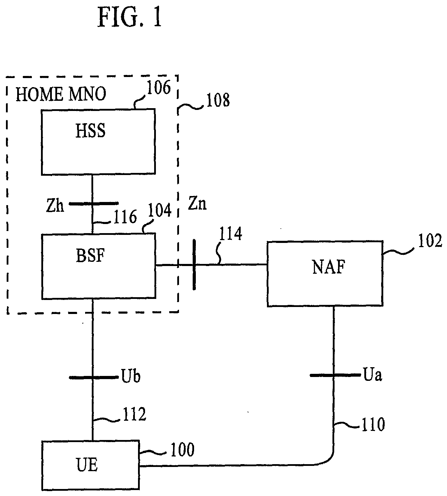

FIG. 1 illustrates an exemplary network architecture, in accordance with an embodiment of the present invention. The network architecture includes a user equipment (UE) 100, at least one network application function (NAF) 102, a bootstrapping server function (BSF) 104, and a home subscriber system (HSS) 106. The BSF 104 and HSS 106 form part of a home mobile network operator (MNO) 108. The UE 100 connects into the MNO 108 in accordance with well-known mobile communication techniques.

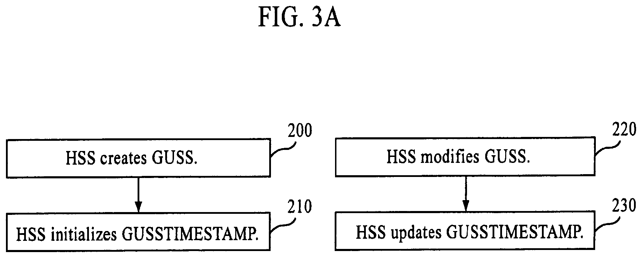

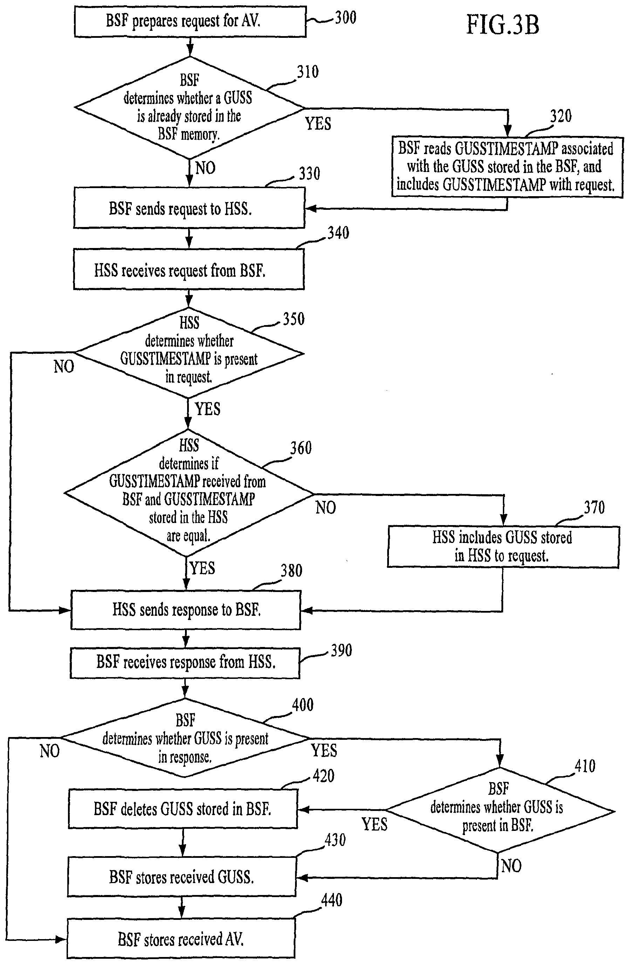

The NAF 102 is hosted in a network element, under the control of the MNO 108, for instance, and the BSF 104 may be also hosted in a network element under the control of the MNO 108. Thus, for practical purposes, each of the NAF 102 and the BSF 104 may be considered to be a network element. In addition, the MNO 108 may include a controller (not shown) to execute operations to be described in FIGS. 3A and 3B. The controller may include permanent or removable storage, such as magnetic and optical discs, RAM, ROM, etc., on which the process and data structures of the present invention may be stored and distributed.

As illustrated in FIG. 1, the UE 100 communicates with the NAF 102 through a Ua interface 110. The UE 100 communicates with the BSF 104 through an Ub interface 112. The NAF 102 communicates with the BSF 104 through a Zn interface 114. The BSF 104 communicates with the HSS 106 through a Zh interface 116.

The NAF 102 may be provided in a further separate network. For instance, as illustrated in FIG. 1, an exemplary network architecture is provided in which NAF 102 is in the visited network. In the case where UE 100 has contacted a NAF 102 that is operated in another network than the home network, this visited NAF 102 may use a diameter proxy (D-Proxy) of the NAFs network to communicate with subscriber's BSF (i.e. home BSF) 104. The NAF 102 would then communicate with the BSF 104 through the Zn interface 114 to the D-Proxy and through a Zn' interface 120 to the BSF 104.

For FIG. 1, the principle of bootstrapping is that the UE 100 and the bootstrapping server function mutually authenticate each other, for instance, using the AKA protocol, and agree on a master shared secret. Afterwards the master shared secret is used to derive one or more network application function specific shared secrets that are applied between the UE 100 and the particular NAF in question. A NAF specific shared secret key material is generated specifically for each network application function independently. After the bootstrapping operation has been completed, the UE 100 and the network application function may run some specific protocols where the securing of messages will be based on those keys generated during the mutual authentication between the UE 100 and the bootstrapping server function. Thus, the keys may be used for authentication and integrity protection, and for confidentiality. The network application function is then able to acquire the NAF specific shared secret derived from the master shared secret established between the user equipment and the bootstrapping server function.

Furthermore, the communication Ub interface 112 supports the bootstrapping authentication and key agreement protocol, to provide the mutual authentication and key agreement between the UE 100 and the BSF 104. The Zh interface 116 allows the BSF 104 to fetch any required authentication information and subscriber profile information (e.g., an authentication vector, AV) from the HSS 106. The set of subscriber's user security settings (USS) are part of subscriber's GUSS, which may be stored in the HSS. In a case where a person has multiple subscriptions, i.e., multiple IP Multimedia Subsystem Subscriber Identity Module cards (ISIMs) or Universal Subscriber Identity Module cards (USIMs) applications on an Universal Mobile Telecommunications System Integrated Circuit Card (UICCs), the HSS 106 shall contain one or more GUSSs that can be mapped to any one or more identities, e.g., IP Multimedia Private Identity (IMPIs) and International Mobile Subscriber Identity - IMSIs. The Ua interface 110 supports any application specific protocol, which is secured using the NAF specific shared secret derived from the master shared secret agreed between the UE 100 and the BSF 104, based on the protocol supported by the Ub interface 112. The Zn interface 114 is used by the NAF 102 to fetch the NAF specific shared secret that has derived from the master shared secret agreed in the protocol supported on the Ub interface 112 from the BSF 104. The Zn interface 114 may also be used to fetch subscriber profile information from the BSF 104.

A message transmitted from BSF 104 to the NAF 102 includes bootstrapping information. The bootstrapping information may include a transaction identifier, the NAF specific shared secret, and subscriber profile information ("prof_naf" or "any NAF specific USSs").

Furthermore, a set of Generic Bootstrapping Architecture User Security Settings (GUSS) may be also included in the bootstrapping information and a set of all application-specific USSs. Typically, BSF requests an AV for a particular subscriber and then in receives also the GUSS of that subscriber together with the requested AV. During operation, the BSF 104 may be able to retrieve a single authentication vector (AV) at a time from the HSS 106 over Zh, an HSS interface from BSF 104, thereby forcing the BSF 104 to update the GUSS stored therein with the new copy of the GUSS from the HSS 106 when the UE 100 bootstraps with the BSF 104. So, if the NAF 102 needs to obtain an updated USS, or multiple USSs, from the BSF 104, the NAF 102 needs to request the UE 100 to bootstrap with the BSF 104, that is, renegotiate, and a next time the NAF 102 requests a particular USS from the BSF 104, the NAF 102 knows that the GUSS is up-to-date.

However, this update procedure forces the HSS 106 to send the GUSS every time a new AV is requested, regardless of whether the GUSS has been updated in the HSS 106 since the last time the BSF 104 received the GUSS. During the update procedure, the traffic load is large between the BSF 104 and the HSS 106 by sending the AV with the GUSS, as the GUSS may be quite large in size. The sending of GUSS to the BSF 104 even in cases where the BSF 104 has already a copy of same GUSS is unnecessary, and causes waste of bandwidth and computer resources. Accordingly, the number of times the GUSS is transferred from the HSS 106 to the BSF 104 needs to be minimized.

To do so, the apparatus and method of the present invention configure and transmit the GUSS to include a timestamp from the HSS 106 to the BSF 104 to minimize the traffic load related to the GUSS transfer procedure between the BSF 104 and the HSS 106. The apparatus and method of the present invention, therefore, allow sharing of secured data between functions and elements in a communications system by determining a validity of secure data and subsequent sharing of the data based on the result of the determination.

In accordance with embodiments of the present invention, data in the transmitting or source network element, for instance the HSS 106 in the GBA, is transferred to or shared with a requesting or a receiving network element, for instance, the BSF 104 in the GBA, only when the requesting or receiving network element does not have a copy of or access to the very same data that exists on the transmitting or source network element.

Accordingly, a GUSS timestamp is added to each GUSS indicating when the GUSS was last changed by the HSS 106. This timestamp is used to optimize the GUSS transfer policy between the HSS 106 and the BSF 104. If the BSF 104 has subscriber's GUSS in memory when it needs to retrieve a new authentication vector (AV) for the subscriber, it will also include the GUSS timestamp to the request. Upon receiving the GUSS timestamp, the HSS 106 will compare it to the timestamp of the GUSS stored in its databases. If the timestamps are equal, the HSS 106 does not send the GUSS to the BSF 104 as the BSF 104 already has a copy of the GUSS. If the timestamps are not equal, the HSS 106 sends the GUSS as the BSF 104 has an invalid GUSS, which needs to be updated. If the HSS 106 has no GUSS, for instance, because the GUSS has been deleted using a management interface of the HSS, then the HSS 106 will send a no GUSS message to the BSF 104 and the BSF 104 will delete the old GUSS.

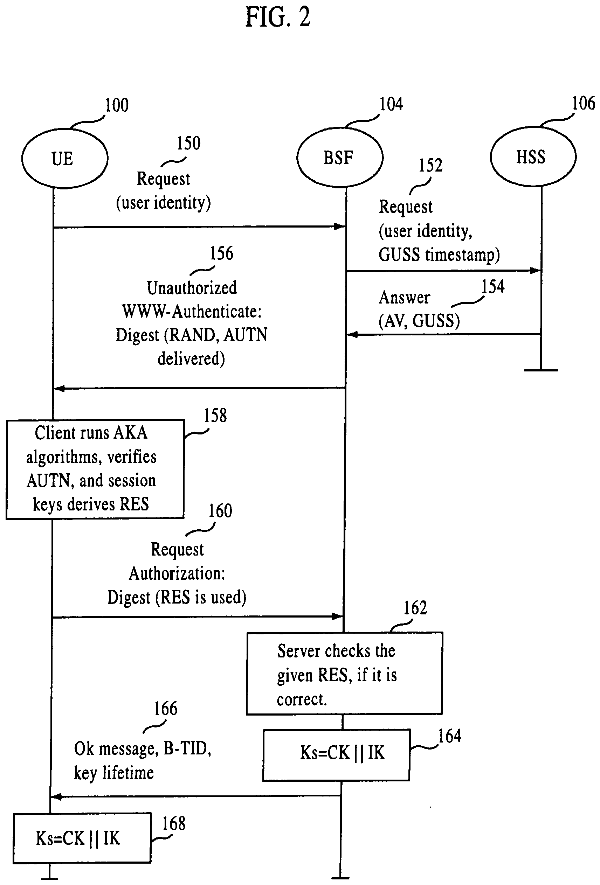

FIG. 2 illustrates a communication between the BSF 104 and the HSS 106 including the GUSS timestamp, in accordance with an embodiment of the present invention. At operation 150, the UE 100 issues a request for a new bootstrapping including user identity information pertaining to the UE 100. When the BSF 104 is retrieving or requesting the new AV from the HSS 106, at operation 152, the request for a new AV would also include a GUSS timestamp if the GUSS already exists or is stored in a memory of the BSF 104 (i.e., a BSF memory). Upon receiving the GUSS timestamp, the HSS 106 checks and compares the GUSS timestamp with the GUSS timestamp stored in a memory provided therein (i.e., an HSS memory). At operation 154, if the GUSS timestamp received from the BSF 104 and the GUSS timestamp stored in the HSS 106 are different, the HSS 106 includes the updated GUSS, the GUSS timestamp for the updated GUSS, and the new AV requested. If the GUSS timestamps are the same, that is, the GUSS in the BSF 104 memory and the GUSS in the HSS 106 memory are the same, the GUSS is not sent to the BSF 104 with the new AV requested.

Naturally, the GUSS timestamp may be sent from the BSF 104 to the HSS 106 only if the BSF 104 has a GUSS for a particular subscriber in the BSF memory. In this instance, the GUSS timestamp is not sent to the HSS 106 and the HSS 106 returns the subscriber specific GUSS from databases therein back to the BSF 104.

At operation 156, the BSF 104 forwards a Random Challenge Data (RAND) and an Authentication Token (AUTN) to the UE 100 in a message to demand the UE 100 to authenticate itself. At operation 158, a client associated with the UE 100 runs Authentication and Key Agreement (AKA) algorithms, verifies the AUTN, and derives an Authentication Result (RES). The UE 100 also calculates a Confidentiality Key (CK), an Integrity Key (IK), and RES, which will result in to same session keys IK and CK in both BSF 104 and UE 100. At operation 160, the UE 100 sends a Hypertext Transport Protocol (HTTP) request containing an AKA response, calculated using RES, to the BSF 104. At operation 162, the BSF 104 authenticates the UE 100 by verifying the AKA response. At operation 164, the BSF 104 generates a key material (Ks) by concatenating the CK and IK. At operation 166, the BSF 104 sends an OK message and the bootstrapping transaction identifier (B-TID) and lifetime of the key Ks to the UE 100 to indicate the success of the authentication. In addition, at operation 168, the UE 100 generates the key material (Ks) the same way the BSF 104 generated in operation 164 and stores the Ks. B-TID, and the lifetime of Ks.

Accordingly, each of the GUSS in the HSS 106 includes a new timestamp parameter, e.g., labeled GUSSTIMESTAMP. The GUSSTIMESTAMP of the GUSS is set by the HSS 106, and it is a numeric or alphanumeric parameter indicative of the last time when the HSS 106 modified the GUSS. The parameter, GUSSTIMESTAMP, may also be indicative of a version of the GUSS data. The GUSSTIMESTAMP changes when a content of the GUSS changes. That is, if the GUSS in the HSS 106 is modified or updated, the HSS 106 assigns a new GUSSTIMESTAMP to the updated GUSS.

The GUSSTIMESTAMP may also be stored or communicated in an equivalent form or different form (i.e., numeric or alphanumeric) from the way the GUSSTIMESTAMP is stored or saved with the GUSS in the HSS 106. However, if stored or communicated in different form, this altered form of the GUSSTIMESTAMP may be transformed back to the original representation of the GUSSTIMESTAMP in the HSS 106. This transformation is done, for instance, when there is a need to compare multiple GUSSTIMESTAMPs.

In accordance with one aspect of the present invention, the BSF 104 receives the GUSS or its equivalent, from the HSS 106, and stores the GUSS in the BSF memory. When the BSF 104 requests the AV from the HSS 106, and it had previously received the corresponding GUSS, the request may include the GUSSTIMESTAMP. The HSS 106 compares the received GUSSTIMESTAMP, with the GUSSTIMESTAMP already stored in the HSS 106, and includes the GUSS in the reply only if both GUSSTIMESTAMPs are different. Both GUSSTIMESTAMPs may be different, for example, when the BSF 104 has an invalid or an outdated GUSS. If the GUSSTIMESTAMPs are equal, then the HSS 106 will not send the GUSS to the BSF 104 with the AV.

FIG. 3A illustrates a method to create and modify a GUSSTIMESTAMP, in accordance with an embodiment of the present invention. The initialization of GUSSTIMESTAMP happens when the particular GUSS is created. At operation 200, the HSS 106 creates the GUSS. At operation 210, the HSS 106 initializes the GUSSTIMESTAMP. The update operation of the GUSSTIMESTAMP is done whenever the particular GUSS is modified. At operation 220, the HSS 106 modifies the GUSS. At operation 230, the HSS 106 updates the GUSSTIMESTAMP.

There could be several methods used to assign the value of the GUSSTIMESTAMP parameter for a particular GUSS in HSS. In one embodiment of the present invention, GUSSTIMESTAMP may be assigned in a monotonically increasing sequence or a monotonically decreasing sequence. For instance, when a GUSS is first created, GUSSTIMESTAMP could be assigned or initialized to some numeric value or to the time and/or date indicated by a clock in the HSS 106. Each time the GUSS is modified and therefore becomes a new version, GUSSTIMESTAMP can, for example, be incremented or decremented by 1 or be changed to the current time and/or date indicated by the clock in the HSS 106. In another embodiment, the GUSS may be assigned a GUSSTIMESTAMP value that is a hash or part of that hash, such as SHA-1 or MD5, of the particular instance of the GUSS.

FIG. 3B illustrates a method providing a generic bootstrapping architecture user security setting timestamp to minimize traffic load, in accordance with an embodiment of the present invention. At operation 300, the method at the BSF 104 prepares a request for an authentication vector, AV. At operation 310, a determination is made at the BSF 104 as to whether the GUSS is already stored in the BSF memory. If the method determines that the GUSS is already stored, at operation 320, the method reads at the BSF 104 the GUSSTIMESTAMP associated with the GUSS stored in the BSF 104 and includes the GUSSTIMESTAMP with the request. However, if the method determines that the GUSS is not stored in the BSF 104, at operation 330, the method at the BSF 104 sends the request to the HSS 106.

At operation 340, the method receives the request from the BSF 104 at the HSS 106. At operation 350, a determination is made by the HSS 106 as to whether the GUSSTIMESTAMP is present in the request. If the method determines that the GUSSTIMESTAMP is present in the request, at operation 360, the method performs another determination at the HSS 106 as to whether the GUSSTIMESTAMP received from the BSF 104 and the GUSSTIMESTAMP stored in the HSS 106 are equal. Otherwise, if the method determines that the GUSSTIMESTAMP is not present in the request, after operation 350, the method proceeds to operation 380, to be later described.

If, at operation 360, the method determines that the GUSSTIMESTAMP received from the BSF 104 and the GUSSTIMESTAMP stored in the HSS 106 are equal, the method proceeds to operation 380, otherwise the method proceeds to operation 370. At operation 370, the method includes the GUSS stored in the HSS 106 in the response and proceeds to operation 380.

At operation 380, the method configures the HSS 106 to send a response to the BSF 104. At operation 390, the BSF 104 receives the response from the HSS 106. At operation 400, the method determines at the BSF 104 whether the GUSS is present in the response. If the GUSS is present in the response, at operation 410, the method determines at the BSF 104 whether the GUSS is already present in the BSF 104. Otherwise, the method proceeds to operation 440, to be later described. If the method determines that the GUSS is present in the BSF 104, the method proceeds to operation 420. Otherwise, the method proceeds to operation 430, to be later described.

At operation 420, the method at the BSF 104 deletes the GUSS stored in the BSF 104 and proceeds to operation 430. At operation 430, the method at the BSF 104 stores the received GUSS and, at operation 440, the BSF 104 stores the received AV.

It is to be understood that in the embodiment of the present invention, the operations are performed in the sequence and manner as shown although the order of some operations and the like may be changed without departing from the scope of the present invention as defined by the appended claims.

Accordingly, the present invention provides adding a GUSS timestamp to each GUSS exchanged between a BSF and an HSS indicating when the GUSS was last changed by the HSS. The GUSS timestamp optimizes a data transfer policy between the BSF and the HSS. Specifically, if the BSF has data associated with a subscriber stored in a memory when a request to retrieve a new authentication vector is requested from the subscriber through a user equipment, the new AV request also includes the GUSS timestamp associated with the GUSS stored in the memory of the BSF. Upon receiving the GUSS timestamp, the HSS compares the GUSS timestamp received with a GUSS timestamp stored in a memory of the HSS. If the GUSS timestamps are the same or equal, the HSS does not send the GUSS to the BSF as the BSF already has a copy of the GUSS. If the GUSS timestamps are not equal, the HSS sends the GUSS as the BSF has an invalid GUSS, which needs to be updated. In addition, while the terms packet and datagram have been used in the description of the present invention, the invention has import to many types of network data. For purposes of this invention, the term packet includes packet, cell, frame, datagram, bridge protocol data unit packet, packet data and any equivalents thereof.

The many features and advantages of the invention are apparent from the detailed specification and, thus, it is intended by the appended claims to cover all such features and advantages of the invention which fall within the scope of the invention as defined by the claims. Further, since numerous modifications and changes will readily occur to those skilled in the art, it is not desired to limit the invention to the exact construction and operation illustrated and described, and accordingly all suitable modifications and equivalents may be resorted to, falling within the scope of the claims.

**APPENDIX A**

**Contents**

|  |  | Foreword | 4 |
|---|---|---|---|
|  |  | Introduction | 4 |
| 1 |  | Scope | 5 |
| 2 |  | References | 5 |
| 3 |  | Definitions and abbreviations | 6 |
| 3.1 |  | Definitions | 6 |
| 3.2 |  | Abbreviations | 6 |
| 4 |  | Generic Authentication Architecture | 7 |
| 4.1 |  | GAA overview | 7 |
| 4.2 |  | Authentication using shared secret | 7 |
| 4.3 |  | Authentication based on (public, private) key pair and certificates | 7 |
| 5 |  | Issuing authentication credentials | 8 |
| 5.1 |  | Schematic overview | 8 |
| 5.2 |  | GBA: Mechanism to issue shared secret | 8 |

(continued)

| 5.3 | SSC: Mechanism to issue subscriber certificates | 8 |
|---|---|---|
| 6 | GAA building blocks | 9 |
| 6.1 | GAA structural overview | 9 |
| 6.2 | GAA | 9 |
| 6.3 | GBA | 9 |
| 6.4 | SSC | 10 |
| 6.5 | Access to Network Application Functions using HTTPS | 10 |
| 6.5.1 | HTTPS with Authentication Proxy | 10 |
| 6.5.2 | HTTPS without Authentication Proxy | 10 |
| 7 | Application guidelines to use GAA | 11 |
| 7.1 | Use of shared secrets and GBA | 12 |
| 7.2 | Use of certificates | 12 |
| **Annex A:** | **Change history** | **13** |

**Foreword**

This Technical Report has been produced by the 3rd Generation Partnership Project (3GPP).

The contents of the present document are subject to continuing work within the TSG and may change following formal TSG approval. Should the TSG modify the contents of the present document, it will be re-released by the TSG with an identifying change of release date and an increase in version number as follows:

   Version x.y.z

where:

x   the first digit:

   1 presented to TSG for information;

   2 presented to TSG for approval;

   3 or greater indicates TSG approved document under change control.

y   the second digit is incremented for all changes of substance, i.e. technical enhancements, corrections, updates, etc.

z   the third digit is incremented when editorial only changes have been incorporated in the document.

**Introduction**

This section provides an introduction on the context of GAA and some clarification of why this TR was written (with some reference to three related Technical Specifications).

**Figure 1: Schematic illustration of GAA**

A number of applications share a need for mutual authentication between a client ((i.e. the UE) and an application server before further communication can take place. Examples include (but are not limited to) communication between a client and a presence server (possibly via an authentication proxy), communication with a PKI portal where a client requests a digital certificate, communication with a content server, a BM-SC, etc.

Since a lot of applications share this common need for a peer authentication mechanism, it has been considered useful to specify a Generic Authentication Architecture (GAA). This GAA describes a generic architecture for peer authentication that can *a priori* serve for any (present and future) application.

This TR can be considered as a framework document for the generic authentication architecture as is illustrated in Figure 1. GBA, AP and Certificates are building blocks of the GAA and they are specified each in a separate TS. How they fit together in GAA is explained in this document.

## 1 Scope

This 3GPP Technical Report aims to give an overview of the different mechanisms that mobile applications can rely upon for authentication between server and client (i.e. the UE). Additionally it provides guidelines related to the use of GAA and to the choice of authentication mechanism in a given situation and for a given application.

To this end the TR puts the different GAA specifications that are related to peer authentication, into perspective. It clarifies the logic for having three technical specifications, sketches their content and explains the inter-relation between these three TSs and their relation with this TR.

Figure 1 depicts protocols used over GAA interfaces and the relationships between different GAA specifications. New GAA specifications will be added to the figure as they become available. Also other protocols may be added in the future. In particular, new kinds of Ua interfaces could be added in the future and then other protocols may be added below the Ua interface.

\* The GAA supports potentially many protocols on Ua interface. One example is HTTP digest

**Figure 2: Relationships between GAA specifications and the protocols used by GAA interfaces**

**2 References**

The following documents contain provisions which, through reference in this text, constitute provisions of the present document.

- References are either specific (identified by date of publication, edition number, version number, etc.) or non-specific.

- For a specific reference, subsequent revisions do not apply.

- For a non-specific reference, the latest version applies. In the case of a reference to a 3GPP document (including a GSM document), a non-specific reference implicitly refers to the latest version of that document *in the same Release as the present document.*

[1] 3GPP TS 33.102: "3rd Generation Partnership Project; Technical Specification Group Services and System Aspects; 3G Security; Security architecture".

[2] 3GPP TS 33.220: "3rd Generation Partnership Project; Technical Specification Group Services and System Aspects; 3G Security; Generic Authentication Architecture (GAA); Generic bootstrapping architecture".

[3] 3GPP TS 33.221: "3rd Generation Partnership Project; Technical Specification Group Services and System Aspects; 3G Security; Generic Authentication Architecture (GAA); Support for subscriber certificates".

[4] 3GPP TS 33.222: "3rd Generation Partnership Project; Technical Specification Group Services and System Aspects; 3G Security; Generic Authentication Architecture (GAA); Access to network application functions using secure hypertext transfer protocol (HTTPS)".

[5] IETF RFC 2818: "HTTP Over TLS".

[6] 3GPP TS 29.109: "3rd Generation Partnership Project; Technical Specification Group Core Network; Generic Authentication Architecture (GAA); Zh and Zn Interfaces based on the Diameter protocol; Protocol details".

[7] 3GPP TS 24.109: "3rd Generation Partnership Project; Technical Specification Group Core Network; Bootstrapping interface (Ub) and Network application function interface (Ua); Protocol details".

[8] 3GPP TS 29.198-03: "3rd Generation Partnership Project; Technical Specification Group Core Network; Open Service Access (OSA); Application Programming Interface (API); Part 3: Framework".

[9] 3GPP TS 29.199-01: "3rd Generation Partnership Project; Technical Specification Group Core Network; Open Service Access (OSA); Parlay X web services; Part 1: Common".

3 **Definitions and abbreviations**

**3.1 Definitions**

For the purposes of the present document, the following terms and definitions apply.
**Subscriber certificate:** a certificate issued by a mobile network operator to a subscriber based on his/her subscription. It contains the subscriber's own public key and possibly other information such as the subscriber's identity in some form.

**3.2 Abbreviations**

For the purposes of the present document, the following abbreviations apply:

AKA    Authentication and Key Agreement
AP    Authentication Proxy
AS    Application Server
BSF    Bootstrapping Server Function
GAA    Generic Authentication Architecture

GBA     Generic Bootstrapping Architecture
HSS     Home Subscriber System
NAF     Network Application Function
NE      Network Element
PKI     Public Key Infrastructure
SSC     Support for Subscriber Certificates
UE      User Equipment

## 4 Generic Authentication Architecture

### 4.1 GAA overview

There are generally speaking two types of authentication mechanisms. One is based on a secret shared between the communicating entities, the other one is based on (public, private) key pairs and digital certificates. Also in GAA these are the two options that are a priori available for mobile applications as is illustrated in Figure 3.

Figure 3: GAA schematic overview

### 4.2 Authentication using shared secret

There are several authentication protocols that rely on a pre-shared secret between the two communicating entities. Popular examples include HTTP Digest, IKE with pre-shared secret and a priori any mechanism based on username and password.

The main problem with these mechanisms is how to agree on this pre-shared secret. Clause 5.2 and GBA TS 33.220 [2] describe how in a mobile context an AKA based mechanism can be used to provide both communicating entities with a pre-shared secret.

### 4.3 Authentication based on (public, private) key pair and certificates

An alternative to using shared secrets for authentication is to rely on asymmetric cryptography. This assumes that the entity that needs to be authenticated (one or both partners in the communication) possesses a (public, private) key pair and a corresponding digital certificate. The latter validates the key pair and binds the key pair to its legitimate owner. Well-known protocols whose authentication is based on (public, private) key pairs include PGP and HTTP over TLS, RFC 2818 [5] (the later is commonly called by its protocol identifier, "HTTPS").

The main disadvantage of this type of authentication is that a PKI is needed and that asymmetric key cryptographic operations often require substantially more computational effort than symmetric key operations. Clause 5.3 and SSC TS 33.221 [3] describe how a mobile operator can issue digital certificates to its subscribers (hence providing a basic PKI).

## 5 Issuing authentication credentials

5.1 Schematic overview

NOTE: Other mechanisms for issuing authentication credentials may exist but are out of scope for this TR.

**Figure 4: Illustration of mechanisms to issue authentication credentials**

Figure 3 illustrates the relation between this TR and TS 33.220 [2] and TS 33.221 [3]. There are on the one hand authentication methods that are based on shared secrets and GBA, described in TS 33.220 [2], specifies a mechanism to provide communicating parties with such a shared secret. On the other hand there are authentication methods that rely on (public, private) key pairs and digital certificates and SSC, described in TS 33.221 [3], specifies how to issue certificates to mobile subscribers.

**5.2 GBA: Mechanism to issue shared secret**

TS 33.220 [2] specifies an application independent mechanism based on the 3GPP AKA mechanism to provide a client and an application server with a common shared secret. This shared secret can subsequently be used to authenticate the communication between the client and an application server.

**5.3 SSC: Mechanism to issue subscriber certificates**

TS 33.221 [3], specifies a mechanism to issue a digital certificate to a mobile subscriber.
Once a mobile subscriber has a (public, private) key pair and has obtained a certificate for it, he can use the certificate together with the corresponding key pair to produce digital signatures in e.g. m-commerce applications but also to authenticate to a server (e.g. in TLS).

**6 GAA building blocks**

6.1 GAA structural overview

**Figure 5: Detailed overview of inter-relation of GAA building blocks**

This clause gives a high level overview of the content of the different GAA documents and describes how these documents fit together.

### 6.2 GAA

GAA refers to this TR that describes the general framework of the Generic Authentication Architecture.

### 6.3 GBA

As briefly indicated in clause 5.2, GBA provides a general mechanism based on 3GPP AKA to install a shared secret between a UE and a server.

AKA is a very powerful mechanism that mobile networks make use of. GBA takes benefit of this mechanism and reuses AKA to bootstrap application security. GBA introduces a new network element (NE) called the Bootstrapping Server Function (BSF). This BSF has an interface with the HSS. The UE runs AKA with the HSS via the BSF. From the resulting (CK, IK), a session key is derived in BSF and UE. An application server (called Network Application Function (NAF) in TS 33.220 [2]) can fetch this session key from the BSF together with subscriber profile information. In this way the application server (NAF) and the UE share a secret key that can subsequently be used for application security, in particular to authenticate UE and NAF at the start of the application session (possibly also for integrity and/or confidentiality protection although that might not be strictly in the scope of GAA). The communication between the UE and the BSF as well as that between NAF and BSF and between BSF and HSS are application independent and are described in TS 33.220 [2].

The following argument lead to the introduction of this new NE (BSF):

- keep the number of different types of NEs as well as the total number of NEs that retrieve AVs from the HSS to a minimum.

One generic mechanism for different applications avoids a large diversity of mechanisms and allows to address security issues once and in a consistent way.

### 6.4 SSC

If a client wants to make use of asymmetric encryption technology, he needs a digital certificate that is created by a certification authority (CA). Such a certificate binds a public key to the identity of its legitimate owner and certifies the validity of the public key. If a mobile subscriber wants to have and make use of a (public, private) key pair, the key pair and a certificate should either be preloaded or the subscriber must have the means to either generate or obtain a key pair and dynamically obtain a corresponding digital certificate. As briefly indicated in clause 5.3, SSC specifies a mechanism to dynamically issue a digital certificate to a mobile subscriber.

To dynamically obtain a digital certificate a UE must send an appropriate certificate request to a PKI portal of his home operator, and the PKI portal must authenticate the certificate request. The certificate enrolment process i.e. the issuing of a certificate to a subscriber and the corresponding communication session between a UE and a PKI portal is in fact an example of a mobile application. As with many mobile applications it requires authentication of the communicating entities, in this case the UE and the PKI portal (the latter plays the role of the application server). As for any other application there are 2 options for this authentication: pre-shared secret based or based on asymmetric cryptography and certificates. The latter is only an option when a new certificate is requested from the PKI portal while another still valid certificate is already loaded in the UE. The former method requires a shared secret between the PKI portal and the UE. If the shared secret is not pre-configured, GBA can be used to obtain such a shared secret.

As indicated in Figure 4, the result of the process of issuing a certificate to a mobile subscriber which is described in the SSC TS 33.221 [3] is that the UE is loaded with a certificate corresponding to its (public, private) key pair. This is indicated by the green upward arrow.

Once the certificate is in place it can be used (together with the corresponding (public, private) key pair) to authenticate the UE. This is indicated by the black dotted lines that connect "certificates" to the underlying applications (HTTPS and SSC in Figure 4). The (public, private) key pair and the corresponding digital certificate can also be used for integrity protection (or less likely confidentiality) but these are not part of the scope of GAA.

### 6.5 Access to Network Application Functions using HTTPS

It is envisaged that HTTPS (or HTTP/TLS) may be used in a number of services to secure the application session between the UE and the application server (Ua interface in TS 33.220, see TS 33.222 [4]). TS 33.222 [4] describes the details of the possible authentication options when HTTPS is used between a UE and an application server. Any existing or future application based on HTTPS can refer to TS 33.222 [4] for details on authentication and the set up of a secure HTTPS session.

### 6.5.1 HTTPS with Authentication Proxy

TS 33.222 [4] describes a mechanism where a reverse proxy (called authentication proxy (AP)) is used between the UE and the AS.

The AP is the TLS end point and the UE shall be able to simultaneously connect to different ASs behind one AP. The AP shall be able to authenticate the UE using the means of GAA, and shall send the authenticated UE identity to the AS. If UE authentication is based on a shared secret then the AP acts as the NAF in the GAA architecture and terminology.

Possible advantages of the use of such an AP may include reduced consumption of authentication vectors, minimization of SQN synchronization failures and reduction of number of TLS sessions that a UE needs to set up and maintain.

### 6.5.2 HTTPS without Authentication Proxy

HTTP based application servers can also be deployed without the use of an authentication proxy. In this case the HTTPS (or TLS) session is between the UE and the AS. In this case the AS shall be able to authenticate the UE using the means of GAA. If UE authentication is based on a shared secret then the AS acts as the NAF in the GAA architecture and terminology.

### 7 Application guidelines to use GAA

GAA provides different alternatives to an AS or an AP to perform user authentication (i.e. force the UE to run AKA with the BSF as specified in TS 33.220 [2] or use a mechanism based on subscriber certificates). Also under GAA, an AS may understand that the user request is already authenticated by an Authentication Proxy.

GAA as described in this TR has not the invention to impose any one authentication mechanism onto applications. It is rather aimed to be a tool at developers disposal which they can use to their benefit. Application developers may save development time by using GAA instead of designing and implementing application-specific authentication mechanisms. An additional advantage of the mechanisms of GAA is that they can provide global coverage, inherited from the GSM/UMTS coverage.

Depending on network configuration and policies of the operator, an AS or an AP will be able to use any of the alternatives provided by GAA or even any other user authentication mechanisms specified outside of 3GPP if such mechanisms are at their disposal. It is therefore assumed that an AS and an AP should be able to take the decision what parts of GAA shall be used if any.

This section tries to give an overview of arguments that can play a role in the choice of authentication mechanism. The authentication mechanism selected will be dependent on:

1. Requirements/policies relating to the user/server/application/device that needs authentication. This may be in both directions (mutual authentication), but the usual emphasis is user to server authentication.

2. Device and service characteristics, user capabilities and preferences as defined in the user profile.

3. Policies of the network or networks providing the transport service and the service providers of the applications.

Requirements/policies relating to authentication will depend on whether there is a need for:

a) **Device authentication:** The device is genuine and not a clone i.e. Authentication of a (U)SIM by challenge response.

b) **Integrity protection:** An example is signalling protection in UTRAN access A weakness in GSM is that it is very easy for a man in the middle to manipulate signalling message e.g. cipher mode command and a way to prevent it being compromised is to use device authentication **and** integrity protection via a keyed MAC (Message Authentication Code) on the specific signalling messages.

c) **Application authentication:** It will often be necessary to check the authenticity of the application software. An example is TS 29.198-03 [8] and TS 29.199-01 [9]. Application authentication is however out of the scope of GAA.

d) **User authentication:.** This refers to authentication of the end user, the person who is using the end user device. One way of doing this is to make the USIM availability to devices/protocols/applications dependent, logically, by user PIN input or physically, by a policy of removal and insertion. The entry of a PIN may also be required before access is allowed to a specific application.

e) **Transaction authentication and non-repudiation:** For some business transactions that are carried out using the mobile device it is necessary to digitally sign the transaction with a users private key, specifically where there is a need for non repudiation i.e. to prevent:

- the False Denial of the: SENDING of the Message, e.g. "I never sent it!"

- the CONTENT of the Message, e.g. "I said you should sell, not buy!"

- the TIME of the Message, e.g. "I sent it a different time!"

NOTE: Many authentication techniques such as 3GPP AKA are based on a single key which is shared between the network and the user - this is OK for authentication between sender and recipient, but non repudiation provable to a third party may require the use of public key technique where the private key is only held by the sender.

Figure 5 shows how device and service characteristics can impact the choice of a particular technique from the Spectrum of Authentication Mechanisms.

| | authentication type | | |
|---|---|---|---|
| | device (client) auth | server auth | transaction auth |
| PIN/password | stored PIN/password | signature or password | x |
| GAA subscriber certificate | client private key, signature | signature | private key, signature |
| GAA GBA at UE | shared secret (GBA), keyd MAC | shared secret (GBA), keyd MAC OR server private key, signature | x |

x = client characteristics do not allow authentication requirement to be met.

**Figure 5: Authentication characteristics comparison**

### 7.1 Use of shared secrets and GBA

Some examples of where shared secrets from the innovation of GBA can be used are:

- distribution of symmetric ciphering and integrity keys for securing applications running between the UE and a server in he network. Example protocols that can be used to secure an application and that require a shared secret include HTTP Digest, shared secret TLS and IPsec;

- distribution of passwords and PIN for third party applications;

- for protecting the distribution of certificates between the UE and the certificate authority.

### 7.2 Use of certificates

Some examples of where certificates can be used for authentication are:

- when it is necessary to check the identity of the end user;

- when the application security protocol works smoothly with (public, private) key pair authentication and subscriber certificates are available (e.g. normal TLS);

- where there is a need for non-repudiation and where the user is required to digitally sign the transaction with a user's private key as many authentication techniques such as 3GPP AKA are based on a single key, which is shared between the network and the user. Non-repudiation provable to a third party may require the use of public key technique where the private key is only held by the sender.

**Annex A:**

**Change history**

| Change history | | | | | | | |
|---|---|---|---|---|---|---|---|
| Date | TSG # | TSG Doc. | CR | Rev | Subject/Comment | Old. | New |
| 2003-10 | SA3#30 | | | | New Draft TR: Generic Authentication Architecture (GAA) | | 0.1.0 |
| 2003-11 | SA3#31 | | | | Text has been added to the introduction and to sections 1 to 6 | 0.1.0 | 0.2.0 |

(continued)

| | Change history | | | | | | | |
|---|---|---|---|---|---|---|---|---|
| Date | TSG # | TSG Doc. | CR | Rev | Subject/Comment | Old. | New |
| 2003-12 | SP-22 | SP-030582 | - | - | Presentation to TSG SA#22 for Information | 0.2.0 | 1.0.0 |
| 2004-01 | SA3#32 | - | - | - | Editorial changes plus an additional reference | 1.0.0 | 1.0.1 |
| 2004-02 | SA3#32 | - | - | - | References have been added. An aditor's note in section 6.5 has been removed, Figure with explanation has been added and text has been added to sections 6.3, 6.4, 6.5 and 7. | 1.0.1 | 1.2.0 |
| 2004-06 | SP-24 | Sup-040365 | - | - | Editorial changes for Presentation to TSG SA#24 for Information | 1.2.0 | 1.2.1 |
| 2004-07 | SA3#34 | | - | - | Text has been added to section 7 | 1.2.1 | 1.3.0 |
| 2004-09 | SP-25 | SP-040025 | - | - | Edited by MCC for presentation to TSG SA #25 for approval | 1.3.0 | 2.0.0 |
| 2004-09 | - | - | - | - | Updated to v6.0.0 after TSG SA approval | 2.0.0 | 6.0.0 |
| 2004-12 | SP-26 | ISP-040861 | 002 | - | Removal of unnecessary editor's notes | 6.0.0 | 6.1.0 |
| 2005-03 | SP-27 | SP-050140 | 003 | - | Correct the "Application guidelines to use GAA" | 6.1.0 | 8.2.0 |
| | | | | | | | |

**APPENDIX B**

**Contents**

| | | | |
|---|---|---|---|
| | Foreword | | 6 |
| 1 | | Scope | 8 |
| 2 | | References | 8 |
| 3 | | Definitions, abbreviations symbols and conventions | 10 |
| 3.1 | | Definitions | 10 |
| 3.2 | | Abbreviations | 11 |
| 3.3 | | Symbols | 11 |
| 3.4 | | Conventions | 11 |
| 4 | | Generic Bootstrapping Architecture | 12 |
| 4.1 | | Reference model | 12 |
| 4.2 | | Network elements | 13 |
| 4.2.1 | | Bootstrapping server function (BSF) | 13 |
| 4.2.2 | | Network application function (NAF) | 14 |
| 4.2.2a | | Diameter proxy (D-Proxy) | 14 |
| 4.2.3 | | HSSS | 14 |
| 4.2.4 | | UE | 15 |
| 4.2.5 | | SLF | 15 |
| 4.3 | | Bootstrapping architecture and reference points | 16 |
| 4.3.1 | | Reference point Ub | 16 |
| 4.3.2 | | Reference point Ua | 16 |

(continued)

| | | |
|---|---|---|
| 4.3.3 | Reference point Zh | 16 |
| 4.3.4 | Reference point Zn | 16 |
| 4.3.5 | Reference point Dz | 16 |
| 4.4 | Requirements and principles for bootstrapping | 16 |
| 4.4.1 | Access Independence | 17 |
| 4.4.2 | Authentication methods | 17 |
| 4.4.3 | Roaming | 17 |
| 4.4.4 | Requirements on reference point Ub | 17 |
| 4.4.5 | Requirements on reference point Zh | 17 |
| 4.4.6 | Requirements on reference point Zn | 18 |
| 4.4.7 | Requirements on Bootstrapping Transaction Identifier | 19 |
| 4.4.8 | Requirements on selection of UICC application and related keys | 19 |
| 4.4.9 | Requirements on reference point Ua | 20 |
| 4.4.10 | Requirements on reference point Dz | 21 |
| 4.5 | Procedures | 21 |
| 4.5.1 | Initiation of bootstrapping | 21 |
| 4.5.2 | Bootstrapping procedures | 21 |
| 4.5.3 | Procedures using bootstrapped Security Association | 23 |
| 4.5.4 | Procedure related to service discovery | 26 |
| 5 | DICC-based enhancements to Generic Bootstrapping Architecture (GBA_U) | 26 |
| 5.1 | Architecture and reference points for bootstrapping with UICC-based enhancements | 26 |
| 5.2 | Requirements and principles for bootstrapping with UICC-based enhancements | 26 |
| 5.2.1 | Requirements on UE | 26 |
| 5.2.2 | Requirements on BSF | 27 |
| 5.3 | Procedures for bootstrapping with UICC-based enhancements | 27 |
| 5.3.1 | Initiation of bootstrapping | 27 |
| 5.3.2 | Bootstrapping procedure | 27 |
| 5.3.3 | Procedures using bootstrapped Security Association | 29 |
| 5.3.4 | Procedure related to service discovery | 32 |
| **Annex A:** | **Void** | **33** |
| **Annex B (normative):** | **Specification of the key derivation function KDF** | **34** |
| B.1 | Introduction | 34 |
| B.2 | Generic key derivation function | 34 |
| B.2.1 | Input parameter encoding | 34 |
| B.3 | NAF specific key derivation in GBA and GBA_U | 35 |
| **Annex C:** | **Void** | **16** |
| **Annex D (informative):** | **Dialog example for user selection of UICC application used in GBA......** | **37** |
| **Annex E (normative):** | **TLS profile for securing Zn' reference point** | **38** |
| **Annex F (informative):** | **Handling of TLS certificates** | **39** |
| F.1 | TLS certificate enrollment | 39 |
| F.2 | TLS Certificate revocation | 39 |
| **Annex G (normative):** | **GBA_U UICC-ME interface** | **40** |
| G.1 | GBA_U Bootstrapping procedure | 40 |
| G.2 | GBA_U NAF Derivation procedure | 40 |
| **Annex H (normative):** | **Ua security protocol identifier** | **42** |
| H.1 | Definition | 42 |
| H.2 | Organization Octet | 42 |
| H.3 | Ua security protocol identifiers for 3GPP specified protocols | 42 |
| **Annex I (normative):** | **2G GBA** | **44** |
| I.1 | Reference model | 44 |

(continued)

| | | | |
|---|---|---|---|
| I.2 | | Network elements | 44 |
| I.2.1 | | Bootstrapping server function (BSF) | 44 |
| I.2.2 | | Network application function (NAF) | 44 |
| I.2.2a | | Diameter proxy (D-Proxy) | 45 |
| I.2.3 | | HSS | 45 |
| I.2.4 | | UE | 46 |
| I.3 | | Bootstrapping architecture and reference points | 46 |
| I.3.1 | | Reference point Ub | 46 |
| I.3.2 | | Reference point Ua | 46 |
| I.3.3 | | Reference point Zh | 46 |
| I.3.4 | | Reference point Zn | 46 |
| I.4 | | Requirements and principles for bootstrapping | 46 |
| I.4.1 | | Access Independence | 47 |
| I.4.2 | | Authentication methods | 47 |
| I.4.3 | | Roaming | 47 |
| I.4.4 | | Requirements on reference point Ub | 47 |
| I.4.5 | | Requirements on reference point Zh | 47 |
| I.4.6 | | Requirements on reference point Zn | 48 |
| I.4.7 | | Requirements on Bootstrapping Transaction Identifier | 49 |
| I.4.8 | | Requirements on selection of UICC application and SIM card | 49 |
| I.4.9 | | Requirements on reference point Ua | 50 |
| I.5 | | Procedures | 50 |
| I.5.1 | | Initiation of bootstrapping | 50 |
| I.5.2 | | Bootstrapping procedures | 50 |
| I.5.3 | | Procedures using bootstrapped Security Association | 53 |
| I.5.4 | | Procedure related to service discovery | 55 |
| I.6 | | TLS Profile | 55 |
| I.6.1 | | Protection mechanisms | 56 |
| I.6.2 | | Authentication of the BSF | 56 |
| I.6.3 | | Authentication of the UE | 56 |
| I.6.4 | | Set-up of Security parameters | 56 |
| **Annex J (informative):** | | **Usage of USS with local policy enforcement in BSF** | **57** |
| J.1 | | General | 57 |
| J.2 | | Usage scenarios | 57 |
| J.2.1 | | Scenario 1: NAF does not use BSF does not have local policy for NAF | 58 |
| J.2.2 | | Scenario 2: NAF does not use USSs, BSF does have local policy for NAF | 58 |
| J.2.3 | | Scenario 3: NAF does use USSs, BSF does not have local policy for NAF | 58 |
| J.2.4 | | Scenario 4: NAF does use USSs, BSF does have local policy for NAF | 59 |
| **Annex K (informative):** | | **Change history** | **60** |

**Foreword**

This Technical Specification has been produced by the 3rd Generation Partnership Project (3GPP).

The contents of the present document arc subject to continuing work within the TSG and may change following formal TSG approval. Should the TSG modify the contents of the present document, it will be re-released by the TSG with an identifying change of release date and an increase in version number as follows:

Version x.y.z

where:

x    the first digit:

1 presented to TSG for information;
2 presented to TSG for approval;
3 or greater indicates TSG approved document under change control.

y   the second digit is incremented for all changes of substance, i.e. technical enhancements, corrections, updates, etc.
z   the third digit is incremented when editorial only changes have been incorporated in the document.

## 1 Scope

The present document describes the security features and a mechanism to bootstrap authentication and key agreement for application security from the 3GPP AKA mechanism. Candidate applications to use this bootstrapping mechanism include but are not restricted to subscriber certificate distribution TS 33.221 [5]. Subscriber certificates support services whose provision mobile operator assists, as well as services that mobile operator provides.
The scope of this specification includes a generic AKA bootstrapping function, an architecture overview and the detailed procedure how to bootstrap the credential.
Clause 4 of this specification describes a mechanism, called GBA_ME, to bootstrap authentication and key agreement, which does not require any changes to the UICC. Clause 5 of this specification describes a mechanism, called GBA_U, to bootstrap authentication and key agreement, which does require changes to the UICC, but provides enhanced security by storing certain derived keys on the UICC.

## 2 References

The following documents contain provisions which, through reference in this text, constitute provisions of the present document.

• References are either specific (identified by date of publication, edition number, version number, etc.) or non-specific.

• For a specific reference, subsequent revisions do not apply.

• For a non-specific reference, the latest version applies. In the case of a reference to a 3GPP document (including a GSM document), a non-specific reference implicitly refers to the latest version of that document *in the same Release as the present document.*

[1] 3GPP TS 31.102: "3rd Generation Partnership Project; Technical Specification Group Terminals; Characteristics of the USIM application".

[2] 3GPP TS 33.102: "3rd Generation Partnership Project; Technical Specification Group Services and System Aspects; 3G Security; Security architecture".

[3] Franks J., et al,: "HTTP Authentication: Basic and Digest Access Authentication", RFC 2617, June 1999.

[4] A. Niemi, et al,: "Hypertext Transfer Protocol (HTTP) Digest Authentication Using Authentication and Key Agreement (AKA)", RFC 3310, September 2002.

[5] 3GPP TS 33.221: "3rd Generation Partnership Project; Technical Specification Group Services and System Aspects; Generic Authentication Architecture (GAA); Support for Subscriber Certificates".

[6] T. Dierks, et al,: "The TLS Protocol Version 1.0", RFC 2246, January 1999.

[7] OMA: "Provisioning Content Version 1.1", Version 13-Aug-2003. Open Mobile Alliance.

[8] 3GPP TS 23.228: "3rd Generation Partnership Project; Technical Specification Group Services and System Aspects; IP Multimedia Subsystem (IMS); Stage 2 (Release 6)".

[9] IETF RFC 3546 (2003): "Transport Layer Security (TLS) Extensions".

[10] 3GPP TS 31.103: "3rd Generation Partnership Project; Technical Specification Group Terminals; Characteristics of the IP Multimedia Services Identity Module (ISIM) application".

[11] 3GPP TS 23.003: "3rd Generation Partnership Project; Technical Specification Group Core Network; Numbering, addressing and identification".

[12] IETF RFC 3548 (2003): "The Base16, Base32, and Base64 Data Encodings".

[13] 3GPP TS 33.210: "3rd Generation Partnership Project; Technical Specification Group Services and System Aspects; 3G Security; Network domain security; IP network layer security".

[14] IETF RFC 3588 (2003): "Diameter Base Protocol".

[15] 3GPP TS 31.101: "3rd Generation Partnership Project; Technical Specification Group Terminals; UICC-terminal interface; Physical and logical characteristics".

[16] 3GPP TS 33.203: "3rd Generation Partnership Project; Technical Specification Group Services and System Aspects; 3G security; Access security for IP-based services".

[17] IETF RFC 3280 (2002): "Internet X.509 Public Key Infrastructure Certificate and Certificate Revocation List (CRL) Profile".

[18] IETF RFC 2818 (2000): "HTTP over TLS".

[19] 3GPP TS 33.310: "3rd Generation Partnership Project; Technical Specification Group Service and System Aspects; Network Domain Security (NDS); Authentication Framework (AF)".

[20] IETF RFC 2560 (1999): "X.509 Internet Public Key Infrastructure Online Certificate Status Protocol - OCSP".

[21] FIPS PUB 180-2 (2002): "Secure Hash Standard".

[22] IETF RFC 2104 (1997): "HMAC: Keyed-Hashing for Message Authentication".

[23] ISO/IEC 10118-3:2004: "Information Technology-Security techniques-Hash-functions-Part 3: Dedicated hash-functions".

[24] IETF RFC 3629 (2003): "UTF-8, a transformation format of ISO 10646".

[25] 3GPP TS 33.222: "3rd Generation Partnership Project; Technical Specification Group Services and System Aspects; Generic Authentication Architecture (GAA); Access to network application functions using Hypertext Transfer Protocol over Transport Layer Security (HTTPS)".

[26] 3GPP TS 33.246: "3G Security; Security of Multimedia Broadcast/Multicast Service (MBMS)".

[27] IETF Internet-Draft: "Pre-Shared Key Ciphersuites for Transport Layer Security (TLS)", December 2005, URL: http://www.ietf.org/internet-drafts/draft-ietf-tls-psk-09.txt.

[28] IETF RFC 2246 (1999): "The TLS Protocol Version 1".

[29] 3GPP TS 24.109: 3rd Generation Partnership Project; Technical Specification Group Core Network and Terminals; Bootstrapping interface (Ub) and network application function interface (Ua); Protocol details".

[30] OMA WAP-219-TLS, 4.11.2001:http://www.openmobilealliance.org/tech/affiliates/wap/wap-219-tls-20010411-a.pdf.

[31] OMA WAP-211-WAPCert,22.5.2001:
http://www.openmobilealliance.org/tech/affiliates/wap/wap-211-wapcert-20010522-a.pdf.

## 3 Definitions, abbreviations symbols and conventions

### 3.1 Definitions

For the purposes of the present document, the following terms and definitions apply:

**Application:** In all places in this document where the term application is used to refer to a service offered by the MNO or a third party to the mobile subscriber, then it always denotes the type of application and not the actual instance of an application installed on an application server.

**Bootstrapping Server Function:** BSF is hosted in a network element under the control of an MNO. BSF, HSS, and UEs participate in GBA in which a shared secret is established between the network and a UE by running the bootstrapping procedure. The shared secret can be used between NAFs and UEs, for example, for authentication purposes.

**Bootstrapping Usage Procedure:** A procedure using bootstrapped security association over Ua reference point.

**GBA Function:** A function on the ME executing the bootstrapping procedure with BSF (i.e. supporting the Ub reference point) and providing Ua applications with security association to run bootstrapping usage procedure. GBA function is called by a Ua application when a Ua application wants to use bootstrapped security association.

**ME-based GBA:** in GBA_ME, all GBA-specific functions are carried out in the ME. The UICC is GBA-unaware. If the term GBA is used in this document without any further qualification then always GBA_ME is meant, see clause 4 of this specification.

**UICC-based GBA:** this is a GBA with UICC-based enhancement. In GBA_U, the GBA-specific functions are split between ME and UICC, see clause 5 of this specification.

**Network Application Function:** NAF is hosted in a network element. GBA may be used between NAFs and UEs for authentication purposes, and for securing the communication path between the UE and the NAF.

**Bootstrapping Transaction Identifier:** the bootstrapping transaction identifier (B-TID) is used to bind the subscriber identity to the keying material in reference points Ua, Ub and Zn.

**GBA User Security Settings:** GUSS contains the BSF specific information element and the set of all application-specific USSs.

**GUSS timestamp:** the timestamp of the GUSS is set by the HSS. It changes whenever the HSS has modified the GUSS.

**NAF Group:** A grouping of NAFs to allow assignment of different USSs to NAFs representing the same application. This grouping is done in each home network separately, i.e. one NAF contacting BSFs in different home networks belongs to different groups in every home network.

**NAF_Id:** The full DNS name of the NAF, concatenated with the Ua security protocol identifier.

**Ua Application:** An application on the ME intended to run bootstrapping usage procedure with a NAF.

**Ua security protocol identifier:** An identifier which is associated with a security protocol over Ua.

**User Security Setting:** A USS is an application and subscriber specific parameter set that defines two parts, an authentication part, which contains the list of identities of the user needed for the application (e.g. IMPUs, MSISDN, pseudonyms), and an authorisation part, which contains the user permission flags (e.g. access to application allowed, type of certificates which may be issued). In addition, a USS may contain a key selection indication, which is used in the GBA_U case to mandate the usage of either the ME-based key (Ks_(ext)_NAF) or the UICC-based key (Ks_int_NAF) or both. Sometimes also called application-specific user security setting. The USS is delivered to the BSF as a part of GUSS from the HSS, and from the BSF to the NAF if requested by the NAF.

**3.2 Abbreviations**

For the purposes of the present document, the following abbreviations apply:

| | |
|---|---|
| AK | Anonymity Key |
| AKA | Authentication and Key Agreement |
| B-TID | Bootstrapping Transaction Identifier |
| BSF | Bootstrapping Server Function |
| CA | Certificate Authority |
| FQDN | Fully Qualified Domain Name |
| GAA | Generic Authentication Architecture |
| GBA | Generic Bootstrapping Architecture |
| GBA_ME | ME-based GBA |
| GBA_U | GBA with UICC-based enhancements |
| GUSS | GBA User Security Settings |
| HSS | Home Subscriber System |
| IK | Integrity Key |
| KDF | Key Derivation Function |
| Ks_int_NAF | Derived key in GBA_U which remains on UICC |
| Ks_ext_NAF | Derived key in GBA_U |
| MNO | Mobile Network Operator |
| NAF | Network Application Function |
| PKI | Public Key Infrastructure |
| SLF | Subscriber Locator Function |
| USS | User Security Setting |

**3.3 Symbols**

For the purposes of the present document, the following symbols apply:

∥    Concatenation
⊕    Exclusive or

**3.4 Conventions**

All data variables in this specification are presented with the most significant substring on the left hand side and the least significant substring on the right hand side. A substring may be a bit, byte or other arbitrary length bitstring. Where a variable is broken down into a number of substrings, the leftmost (most significant) substring is numbered 0, the next most significant is numbered 1, and so on through to the least significant.

**4 Generic Bootstrapping Architecture**

The 3GPP authentication infrastructure, including the 3GPP Authentication Centre (AuC), the USIM or the ISIM, and the 3GPP AKA protocol run between them, is a very valuable asset of 3GPP operators. It has been recognised that this infrastructure could be leveraged to enable application functions in the network and on the user side to establish shared keys. Therefore, 3GPP can provide the "bootstrapping of application security" to authenticate the subscriber by defining a Generic Bootstrapping Architecture (GBA) based on AKA protocol.

**4.1 Reference model**

Figure 4.1 shows a simple network model of the entities involved in the bootstrapping approach, and the reference points used between them.

**Figure 4.1: Simple network model for bootstrapping**

Figure 4.1a shows a simple network model of the entities involved when the network application function is located in the visited network.

NOTE:   The Zn' reference point is distinguished from the Zn reference point in that it is used between operators.

**Figure 4.1a: Simple network model for bootstrapping in visited network**

### 4.2 Network elements

### 4.2.1 Bootstrapping server function (BSF)

A generic Bootstrapping Server Function (BSF) and the UE shall mutually authenticate using the AKA protocol, and agree on session keys that are afterwards applied between UE and a Network Application Function (NAF). The BSF shall restrict the applicability of the key material to a specific NAF by using the key derivation procedure as specified in Annex B. The key derivation procedure may be used with multiple NAFs during the lifetime of the key material. The lifetime of the key material is set according to the local policy of the BSF. The generation of key material is specified in clause 4.5.2.

The BSF shall be able to acquire the GBA user security settings (GUSS) from the HSS.

The BSF shall be able to keep a list, which assigns NAFs to NAF Groups. This list is used to select if any and which application-specific USS within GUSS is valid for a certain NAF.

NOTE 1: The operator does the assignment of NAFs to NAF Groups. NAF Group definitions in HSS and all connected BSFs belonging to the same operator's network shall be equal (cf., clause 4.2.3). As these network elements belong to the same operator's network, standardisation of the NAF Group definitions themselves is not necessary in 3GPP.

NOTE 2: The NAF grouping may be e.g. "home" and "visited". It allows the BSF to send USSs for the same application with e.g. different authorization flags to different NAFs, e.g., in home network and visited networks. The NAF e.g. in visited network indicates only the requested application, but it is unaware of the grouping in home network of the subscriber.

### 4.2.2 Network application function (NAF)

After the bootstrapping has been completed, the UE and a NAF can run some application specific protocol where the authentication of messages will be based on those session keys generated during the mutual authentication between UE and BSF.
General assumptions for the functionality of a NAF are:

- there is no previous security association between the UE and the NAF;

- NAF shall be able to locate and communicate securely with the subscriber's BSF;

- NAF shall be able to acquire a shared key material established between UE and the BSF during the run of the application-specific protocol;

- NAF shall be able to acquire zero or more application-specific USSs from the HSS via the BSF;

- NAF shall be able to set the local validity condition of the shared key material according to the local policy;

- in the case of GBA_U, the NAF shall be able to determine which key (i.e., Ks_ext_NAF or Ks_int_NAF or both) should be used by using a local policy in the NAF or a key selection indication in the application-specific USS. If the NAF has received an application-specific USS, which contains the key selection indication, this shall override the local policy in the NAF;

- NAF shall be able to check lifetime and local validity condition of the shared key material.

NOTE: Without additional measures, GBA does not guarantee the freshness of the key, Ks(_int/ext)_NAF in the sense that it does not guarantee that the key was not used in a previous run of the Ua protocol. The additional measures which may be taken by the UE and the NAF to ensure key freshness in GBA are:

1) enforce a new run of the Ub protocol (thus generating a new Ks) before deriving a new Ks_NAF.
2) store previously used keys Ks(_int/ext)_NAF, or the corresponding key identifiers B-TID, until the end of their lifetime.
A UE and a NAF that support a Ua protocol that does not provide replay protection over unconnected runs of the protocol, will need to take corresponding action to avoid replay attacks if desired.

### 4.2.2a Diameter proxy (D-Proxy)

In the case where UE has contacted a NAF that is operated in another network than home network, this visited NAF shall use a diameter proxy (D-Proxy) of the NAFs network to communicate with subscriber's BSF (i.e. home BSF).

NOTE: D-Proxy functionality may be implemented as a separate network element, or be part of any NE in the visited network that implements Diameter proxy functionality (examples of such NE's are the BSF of the network that the visited NAF belongs to, or an AAA-server).

General requirements for the functionality of D-Proxy are:

- D-Proxy shall be able to function as a proxy between the visited NAF, and the subscriber's home BSF;

- D-Proxy shall be able to locate subscriber's home BSF and communicate with it over secure channel;

- D-Proxy shall be able to validate that the visited NAF is authorized to participate in GBA and shall be able to assert to subscriber's home BSF the visited NAFs DNS name. The D-Proxy shall also be able to assert to the BSF that the visited NAF is authorized to request the GBA specific user profiles contained in the NAF request;

- the physical security level of the D-proxy shall not be lower than the highest level of the NAFs which it interfaces with.

### 4.2.3 HSS

The set of all user security settings (USSs), i.e. GUSS, is stored in the HSS. In the case where the subscriber has multiple subscriptions, i.e. multiple ISIM or USIM applications on the UICC, the HSS shall contain one or more GUSSs that can be mapped to one or more private identities, i.e. IMPIs and IMSIs.

The requirements on the HSS are:

- HSS shall provide the only persistent storage for GUSSs;

- GUSS shall be defined in such a way that interworking of different operators for standardised application profiles is possible;

- GUSS shall be defined in such a way that profiles for operator specific applications and extensions to existing application profiles are supported without need for standardisation of these elements.

- GUSS shall be able to contain application-specific USSs that contain parameters that are related to key selection indication in the case of GBA_U (i.e., whether the NAF shall use Ks_ext_NAF or Ks_int_NAF), identification or authorization information of one or more applications hosted by one ore more NAFs. Any other types of parameters are not allowed in the application-specific USS.

NOTE 1: The necessary subscriber profile data may be fetched by the NAF directly from HSS or from its local database using identity information provided by the application-specific USS.

NOTE 2: The HSS may temporarily remove an application-specific USS from the GUSS if the service is temporarily revoked from the subscriber.

- GUSS shall be able to contain parameters intended for the BSF usage:

  - the type of the UICC the subscriber is issued (i.e. is it GBA_U aware or not, cf. subclause 5);

  - subscriber specific key lifetime:

  - optionally the timestamp indicating the time when the GUSS has been last modified by the HSS.

NOTE 3: These parameters are optional and if they are missing from subscriber's GUSS or subscriber does not have GUSS then the BSF will use the default values in the BSF local policy defined by the particular MNO.

- HSS shall be able to assign application-specific USSs to a NAF Group. This shall be defined in such a way that different USSs for the same application, but for different groups of NAFs, are possible. The restrictions on the number of USSs per GUSS are dependent on the usage of NAF Groups by the operator:

  - if no NAF Groups are defined for this application then at most one USS per application is stored in GUSS;

  - if NAF Groups are defined for this application then at most one USS per application and NAF Group is stored in GUSS.

- NAF Group definitions in the HSS and all connected BSFs belonging to the same operator's network shall be equal.

**4.2.4 UE**

The required functionalities from the UE are:

- the support of HTTP Digest AKA protocol;

- the capability to use both a USIM and an ISIM in bootstrapping;

- the capability to select either a USIM or an ISIM to be used in bootstrapping, when both of them are present;

- the capability for a Ua application on the ME to indicate to the GBA Function on the ME the type or the name of UICC application to use in bootstrapping (see clause 4.4.8);

- the capability to derive new key material to be used with the protocol over Ua interface from CK and IK;

- support of NAF-specific application protocol (For an example see TS 33.221 [5]).

A GBA-aware ME shall support both GBA_U, as specified in clause 5.2.1 and GBA_ME procedures, as specified in clause 4.5.

**4.2.5 SLF**

The SLF:

- is queried by the BSF in conjunction with the Zh interface operation to get the name of the HSS containing the required subscriber specific data.

- is accessed via the Dz interface by the BSF.

The SLF is not required in a single HSS environment. Use of SLF is not required when BSF are configured/managed to use pre-defined HSS.

**4.3 Bootstrapping architecture and reference points**

**4.3.1 Reference point Ub**

The reference point Ub is between the UE and the BSF. Reference point Ub provides mutual authentication between the UE and the BSF. It allows the UE to bootstrap the session keys based on 3GPP AKA infrastructure.
The HTTP Digest AKA protocol, which is specified in RFC 3310 [4], is used on the reference point Ub. It is based on the 3GPP AKA TS 33.102 [2] protocol. The interface to the USIM is as specified in TS 31.102 [1] and to the ISIM is as specified in TS 31.103 [10].

**4.3.2 Reference point Ua**

The reference point Ua carries the application protocol, which is secured using the keys material agreed between UE and BSF as a result of the run of HTTP Digest AKA over reference point Ub. For instance, in the case of support for subscriber certificates TS 33.221 [5], it is a protocol, which allows the user to request certificates from the NAF. In this case the NAF would be the PKI portal.

**4.3.3 Reference point Zh**

The reference point Zh used between the BSF and the HSS allows the BSF to fetch the required authentication information and all GBA user security settings from the HSS. The interface to the 3G Authentication Centre is HSS-internal, and it need not be standardised as part of this architecture.

**4.3.4 Reference point Zn**

The reference point Zn is used by the NAF to fetch the key material agreed during a previous HTTP Digest AKA protocol run over the reference point Ub from the UE to the BSF. It is also used to fetch application-specific user security settings from the BSF, if requested by the NAF.

### 4.3.5 Reference point Dz

The reference point Dz used between the BSF and the SLF allows the BSF to get the name of the HSS containing the required subscriber specific data.

### 4.4 Requirements and principles for bootstrapping

The following requirements and principles are applicable to bootstrapping procedure:

- the bootstrapping function shall not depend on the particular NAF;

- the server implementing the bootstrapping function needs to be trusted by the home operator to handle authentication vectors;

- the server implementing the NAF needs only to be trusted by the home operator to handle derived key material;

- it shall be possible to support NAF in the operator's home network and in the visited network;

- the architecture shall not preclude the support of network application function in a third network;

- to the extent possible, existing protocols and infrastructure should be reused;

- in order to ensure wide applicability, all involved protocols are preferred to run over IP;

- it shall be prevented that a security breach in one NAF who is using the GBA, can be used by an attacker to mount successful attacks to the other NAFs using the GBA.

- an attacker shall not be able to exploit a security breach in one security protocol over Ua in order to mount a successful attack against a different security protocol over Ua.

#### 4.4.1 Access Independence

Bootstrapping procedure is access independent. Bootstrapping procedure requires IP connectivity from UE.

#### 4.4.2 Authentication methods

Authentication between the UE and the BSF shall not be possible without a valid cellular subscription. Authentication shall be based on the 3GPP AKA protocol.

#### 4.4.3 Roaming

The requirements on roaming are:

- The roaming subscriber shall be able to utilize the bootstrapping function in the home network. The subscriber shall be able to utilize network application function that is in a visited network.

- The home network shall be able to control whether its subscriber is authorized to use the service in the visited network.

#### 4.4.4 Requirements on reference point Ub

The requirements for reference point Ub are:

- the BSF shall be able to identify the UE;

- the BSF and the UE shall be able to authenticate each other based on AKA;

- the BSF shall be able to send a bootstrapping transaction identifier to the UE;

- the UE and the BSF shall establish shared keys;

- the BSF shall be able to indicate to the UE the lifetime of the key material. The key lifetime sent by the BSF over Ub shall indicate the expiry time of the key.

  NOTE: This does not preclude a UE to refresh the key before the expiry time according to the UE's local policy.

**4.4.5 Requirements on reference point Zh**

The requirements for reference point Zh are:

- mutual authentication, confidentiality and integrity shall be provided;

  NOTE 1: This requirement may be fulfilled by physical or proprietary security measures if BSF and HSS are located within the same operator's network.

- the BSF shall be able to send bootstrapping information request concerning a subscriber;

- optionally the BSF may have the capability able to send the timestamp of subscriber's GBA user security settings to the HSS (timestamp option);

- the HSS shall be able to send one 3GPP AKA vector at a time to the BSF;

- the HSS shall be able to send the complete set of subscriber's GBA user security settings needed for security purposes to the BSF.optionally the HSS may have the capability to indicate to the BSF whether the BSF already has the latest copy of the GUSS based on the GUSS timestamp (timestamp option);

  NOTE 2: If subscriber's GUSS is updated in HSS, this is not propagated to the BSF. The GUSS in the BSF is updated when the BSF next time fetches the authentication vectors and GUSS from the HSS over Zh reference point as part of the bootstrapping procedure.

- no state information concerning bootstrapping shall be required in the HSS;

- all procedures over reference point Zh shall be initiated by the BSF;

- the number of different interfaces to HSS should be minimized.

**4.4.6 Requirements on reference point Zn**

The requirements for reference point Zn are:

- mutual authentication, confidentiality and integrity shall be provided;

- If the BSF and the NAF are located within the same operator's network, the Zn reference point shall be secured according to NDS/IP [13];

- If the BSF and the NAF are located in different operators' networks, the Zn' reference point between the D-Proxy and the BSF shall be secured using TLS as specified in RFC 2246 [6];

  NOTE 1: Annex E specifies the TLS profile that is used for securing the Zn' reference point.

- The BSF shall verify that the requesting NAF is authorised to obtain the key material or the key material and the requested USS;

- The NAF shall be able to send a key material request to the BSF, containing NAF's public hostname used by the UE's corresponding request. The BSF shall be able to verify that a NAF is authorized to use this hostname, i.e. the FQDN used by UE when it contacts the NAF;

- The BSF shall be able to send the requested key material to the NAF;

- The NAF shall be able to get a selected set of application-specific USSs from the BSF, depending on the policy of the BSF and the application indicated in the request from the NAF over Zn;

- The NAF shall be able to indicate to the BSF the single application or several applications it requires USSs for;

NOTE 2: If some application needs only a subset of an application-specific USS, e.g. only one IMPU, the NAF selects this subset from the complete set of USS sent from BSF.

- The BSF shall be able to be configured on a per NAF or per application basis if private subscriber identity and which application-specific USSs may be sent to a NAF;

NOTE 3: If the BSF does not send the IMPI or any other user identities in the USS to the NAF, the user remains anonymous towards the NAF; or more precisely, the B-TID functions as a temporary user pseudonym.

- If a NAF requests USSs from the BSF and they are not present in subscriber's GUSS, it shall not cause an error, provided the conditions of the local policy of the BSF are fulfilled. The BSF shall then send only the requested and found USSs to the NAF;

- It shall be possible to configure a local policy as follows: BSF may require one or more application-specific USS to be present in a particular subscriber's GUSS for a particular requesting NAF, and to reject the request from the NAF in case the conditions are not fulfilled. In order to satisfy this local policy, it is not required that the NAF requests the USSs over the Zn reference point, which the BSF requires to be present in the GUSS, rather it is sufficient that the BSF checks the presence of the USSs locally. It shall also be possible to configure the BSF in such a way that no USS is required for the requesting NAF;

NOTE 4: For more information on the local policy usage, see Annex J.

- The BSF shall be able to indicate to the NAF the bootstrapping time and the lifetime of the key material. The key lifetime sent by the BSF over Zn shall indicate the expiry time of the key, and shall be identical to the key lifetime sent by the BSF to the UE over Ub.

NOTE 5: This does not preclude a NAF to refresh the key before the expiry time according to the NAF's local policy.

NOTE 6: If one or more of the USSs that have been delivered to the NAF has been updated in subscriber's GUSS in the HSS, this change is propagated to the NAF the next time it fetches the USS from the BSF over Zn reference point (provided that the BSF has updated subscriber's GUSS from the HSS over Zh reference point).

### 4.4.7 Requirements on Bootstrapping Transaction Identifier

Bootstrapping transaction identifier (B-TID) shall be used to bind the subscriber identity to the keying material in reference points Ua, Ub and Zn.
Requirements for B-TID are:

- B-TID shall be globally unique;

- B-TID shall be usable as a key identifier in protocols used in the reference point Ua;

- NAF shall be able to detect the home network and the BSF of the UE from the B-TID.

NOTE 1: NAF can remove the security association based on deletion conditions after the key has become invalid.

NOTE 2: Care has to be taken that the parallel use of GBA and non-GBA authentication between UE and NAF does not lead to conflicts, e.g. in the name space. This potential conflict cannot be resolved in a generic way as it is dependent on specific protocol and authentication mechanism used between UE and application server. It is therefore out of scope of this specification.

For the example of HTTP Digest authentication used between UE and NAF, parallel use is possible as the following applies: <username,password>-pairs must be unique to one realm only. As the NAF controls the realm names, it has to ensure that only the GBA based realm is named with the reserved 3GPP realm name. In the special case that the NAF wants to allow non GBA based authentication in the GBA realm also, it has to ensure that no usernames in the format of a B-TID are used outside GBA based authentication.

### 4.4.8 Requirements on selection of UICC application and related keys

When several applications are present on the UICC, which are capable of running AKA, then the ME shall choose one of these UICC applications for performing the GBA procedures specified in this document in the following order of preference:

1. The UE determines which UICC application is to be involved:

   a. the application on the ME that needs Ks_NAF (Ua application) may indicate to the GBA support function (GBA function) the type or the name of the UICC application: no preference, USIM, ISIM, or the "Label" (see definition in TS 31.101 [15]) of the UICC application.
   If the application on the ME indicated a "Label" of the UICC application, step b below shall be executed.
   If the application on the ME indicated that the UICC application type should be:

   - the USIM on the UICC; step b below is skipped and in steps c and d only USIM applications are considered.

   - the ISIM on the UICC; step b below is skipped and in steps c and d only ISIM applications are considered.
     if the application on the ME did not indicate a preference, step b below is skipped and the selection process is executed as described below, starting with step c;

   b. if a "Label" was indicated in step a, the GBA function shall select (see definition in TS 31.102 [1]) the UICC application with the "Label" indicated; if selection of this UICC application does not succeed the selection procedure fails;

   c. if no "Label" was indicated in step a, the GBA function shall choose among the active UICC applications; if there is more than one active UICC applications, the GBA function may show a UICC application choosing dialogue to the end user (the list contains the "Labels" from the application list of the UICC), from which the end user chooses the UICC application to be selected; if no dialogue is shown the GBA function shall select the "last selected" active UICC application; in case the Ua application indicated "no preference" and both a "last selected" USIM and a "last selected" ISIM are active, then the "last selected" USIM is selected.

   d. if there are no UICC applications active:

   - if there is only one UICC application, the GBA function selects it, if possible;

   - if there is more than one UICC application, the GBA function may show a UICC application choosing dialogue to the end user (the list contains the "Labels" from the application list of the UICC), from which the end user chooses the UICC application to be selected; if no dialogue is shown the GBA function shall select the "last selected" UICC application, if possible.

   e. if the type indicated in step a and used in step d was ISIM, but there was no ISIM to select, then step d is repeated with type USIM; otherwise the selection process fails.

   NOTE 1: Step e is required for the case that an ISIM as defined in TS 33.203 [16] may be realised using a USIM application on the UICC.

2. If there already is a key Ks derived from the chosen UICC application, the UE takes this key to derive Ks_NAF.

3. If there is no such key Ks, the UE first runs the Ub protocol involving the selected UICC application and then goes to step 2.

If a USIM is chosen, the IMPI obtained from the IMSI stored on the USIM as specified in TS 23.003 [11] clause 13.3, is used in the protocol run over Ub.

NOTE 2: Strictly speaking, an IMPI, and the derivation of an IMPI from an IMSI as in TS 23.003 [11], clause 13 are only defined in the context of the IMS. For the purposes of this specification, however, an identifier obtained from an IMSI as specified in TS 23.003 [11], clause 13.3 is also called an IMPI, even if the user has no IMS subscription.

If an ISIM is selected, the IMPI stored on the ISIM is used in the protocol run over Ub.

Whenever a UICC application is successfully selected or terminated, the rules in this clause for choosing the UICC application are re-applied and, consequently, the UICC application chosen for GBA may change.

Whenever a UICC application is terminated the shared key Ks established from it in the protocol over the Ub reference point (according to clauses 4.5.2 and 5.3.2) shall be deleted.

NOTE 3: At any one time, there is at most one UICC application chosen for performing the GBA procedures.

NOTE 4: The Ua applications can continue using the NAF specific keys (Ks_(ext/int)_NAF) derived also after the shared key Ks itself has been deleted until the Ks lifetime expires.

### 4.4.9 Requirements on reference point Ua

The generic requirements for reference point Ua are:

- the UE and the NAF shall be able to secure the reference point Ua using the GBA-based shared secret;

NOTE 1: The exact method of securing the reference point Ua depends on the application protocol used over reference point Ua.

- in the case of GBA_U, the UE and the NAF shall be able to agree which key (i.e, Ks_ext_NAF or Ks_int_NAF or both) is used as the GBA-based shared secret if both keys may be used;

NOTE 2: There are two ways to have an agreement between the UE and the NAF which key shall be used Ks_(ext)_NAF or Ks_int_NAF or both:

1) In a generic case, where the protocol used over reference point Ua can be used for different applications (e.g., HTTPS), the protocol should be able to indicate which key should be used.
2) In a specific case, where the protocol is application specific (e.g., MIKEY in MBMS), the agreement can be based on implicit knowledge.

- any security protocol over Ua shall be associated with a Ua security protocol identifier. This identifier shall be specified in Annex H of this specification.

- the NAF shall be able to indicate to the UE that GBA-based shared secret should be used;

- the NAF shall be able to indicate to the UE that the current shared secret has expired and the UE should use newer shared secret with the NAF.

- The default lifetime of the NAF specific key material Ks_(ext/int)_NAF shall be equal to the lifetime of Ks when not specified within the Ua-application specification. The lifetime of the Ks_(ext/int)_NAF shall not exceed the lifetime of corresponding Ks.

- The UE and NAF may adapt the key material Ks_(ext/int)_NAF to the specific needs of the reference point Ua. This adaptation is outside the scope of this specification. The default lifetime of the adapted key material shall be equal to the lifetime of Ks_(ext/int)_NAF when not specified within the Ua-application specification. The lifetime of the adapted key material shall not exceed the lifetime of corresponding Ks_(ext/int)_NAF.

### 4.4.10 Requirements on reference point Dz

This interface between BSF and SLF is used to retrieve the address of the HSS which holds the subscription for a given user. This interface is not required in a single HSS environment.

### 4.5 Procedures

This chapter specifies in detail the format of the bootstrapping procedure that is further utilized by various applications. It contains the AKA authentication procedure with BSF, and the key material generation procedure.

### 4.5.1 Initiation of bootstrapping

Before communication between the UE and the NAF can start, the UE and the NAF first have to agree whether to use the GBA. When a UE wants to interact with a NAF, but it does not know if the NAF requires the use of shared keys obtained by means of the GBA, the UE shall contact the NAF for further instructions (see figure 4.2).

**Figure 4.2: Initiation of bootstrapping**

1. UE starts communication over reference point Ua with the NAF without any GBA-related parameters.

2. If the NAF requires the use of shared keys obtained by means of the GBA,but the request from UE does not include GBA-related parameters, the NAF replies with a bootstrapping initiation message. The form of this indication may depend on the particular reference point Ua and is specified in the relevant stage 3-specifications.

### 4.5.2 Bootstrapping procedures

When a UE wants to interact with a NAF, and it knows that the bootstrapping procedure is needed, it shall first perform a bootstrapping authentication (see figure 4.3). Otherwise, the UE shall perform a bootstrapping authentication only when it has received bootstrapping initiation required message or a bootstrapping negotiation indication from the NAF, or when the lifetime of the key in UE has expired (cf. subclause 4.5.3).

NOTE 1: The main steps from the specifications of the AKA protocol in TS 33.102 [2] and the HTTP digest AKA protocol in RFC 3310 [4] are repeated in figure 3 for the convenience of the reader. In case of any potential conflict, the specifications in TS 33.102 [2] and RFC 3310 [4] take precedence.

**Figure 4.3: The bootstrapping procedure**

1. The UE sends an HTTP request towards the BSF.

2. BSF retrieves the complete set of GBA user security settings and one Authentication Vector (AV, AV = RAND||AUTN||XRES||CK||IK) over the reference point Zh from the HSS.

If the BSF implements the timestamp option and has a local copy of the GUSS for the subscriber that has been fetched from the HSS during a previous bootstrapping procedure, and this GUSS includes a timestamp, the BSF may include the GUSS timestamp in the request message. Upon receiving that timestamp, if the HSS implements the timestamp option, the HSS may compare it with the timestamp of the GUSS stored in the HSS. In this case, if and only if the HSS has done the comparison and the timestamps are equal, then the HSS shall send "GUSS TIMESTAMP EQUAL" indication to the BSF. In any other case, the HSS shall send the GUSS (if available) to the BSF. If the BSF receives "GUSS TIMESTAMP EQUAL" indication, it shall keep the local copy of the GUSS. In any other case, the BSF shall delete the local copy of the GUSS, and store the received GUSS (if sent).

NOTE 2: In a multiple HSS environment, the BSF may have to obtain the address of the HSS where the subscription of the user is stored by querying the SLF, prior to step 2.

3. Then BSF forwards the RAND and AUTN to the UE in the 401 message (without the CK, IK and XRES). This is to demand the UE to authenticate itself.

4. The UE checks AUTN to verify that the challenge is from an authorised network; the UE also calculates CK, IK and RES. This will result in session keys IK and CK in both BSF and UE.

5. The UE sends another HTTP request, containing the Digest AKA response (calculated using RES), to the BSF.

6. The BSF authenticates the UE by verifying the Digest AKA response.

7. The BSF generates key material Ks by concatenating CK and IK. The B-TID value shall be also generated in format of NAI by taking the base64 encoded [12] RAND value from step 3, and the BSF server name, i.e. base64encode(RAND)@BSF_servers_domain_name.

8. The BSF shall send a 200 OK message, including a B-TID, to the UE to indicate the success of the authentication. In addition, in the 200 OK message, the BSF shall supply the lifetime of the key Ks. The key material Ks is generated in UE by concatenating CK and IK.

9. Both the UE and the BSF shall use the Ks to derive the key material Ks_NAF during the procedures as specified in clause 4.5.3. Ks_NAF shall be used for securing the reference point Ua.
Ks_NAF is computed as Ks_NAF = KDF (Ks, "gba-me", RAND, IMPI, NAF_Id), where KDF is the key derivation function as specified in Annex B, and the key derivation parameters consist of the user's IMPI, the NAF_Id and RAND. The NAF_Id consists of the full DNS name of the NAF, concatenated with the Ua security protocol identifier as specified in Annex H. KDF shall be implemented in the ME.

NOTE 3: To allow consistent key derivation based on NAF name in UE and BSF, at least one of the three following prerequisites shall be fulfilled:

(1) The NAF is known in DNS under one domain name (FQDN) only, i.e. no two different domain names point to the IP address of the NAF. This has to be achieved by administrative means.
This prerequisite is not specific to 3GPP, as it is necessary also under other circumstances, e.g. for TLS V1.0 without use of wildcard or multiple-name certificates.

(2) Each DNS entry of the NAF points to a different IP address. The NAF responds to all these IP addresses. Each IP address is tied to the corresponding FQDN by NAF configuration. The NAF can see from the IP address, which FQDN to use for key derivation.

(3) Ua uses a protocol which transfers the host name (FQDN of NAF as used by UE) to NAF (e.g. HTTP/1.1 with mandatory Host request header field). This requires the NAF to check the validity of the host name, to use this name in all communication with UE where appropriate, and to transfer this name to BSF to allow for correct derivation of Ks_NAF.
In case of a TLS tunnel this requires either multiple-identities certificates or the deployment of RFC 3546 [9] or other protocol means with similar purpose.

The UE and the BSF shall store the key Ks with the associated B-TID for further use, until the lifetime of Ks has expired, or until the key Ks is updated.

## 4.5.3 Procedures using bootstrapped Security Association

Before communication between the UE and the NAF can start, the UE and the NAF first have to agree whether to use shared keys obtained by means of the GBA. If the UE does not know whether to use GBA with this NAF, it uses the Initiation of Bootstrapping procedure described in clause 4.5.1.
Once the UE and the NAF have established that they want to use GBA then every time the UE wants to interact with an NAF the following steps are executed as depicted in figure 4.4.

1. UE starts communication over reference point Ua with the NAF;

- in general, UE and NAF will not yet share the key(s) required to protect the reference point Ua. If they already do (i.e. if a key Ks_NAF for the corresponding key derivation parameter NAF_Id is already available)" the UE and the NAF can start to securely communicate right away. If the UE and the NAF do not yet share a key, the UE proceeds as follows:

    - if a key Ks for the selected UICC application is available in the UE, the UE derives the key Ks_NAF from Ks, as specified in clause 4.5.2;

- if no key Ks for the selected UICC application is available in the UE, the UE first agrees on a new key Ks with the BSF over the reference point Ub, and then proceeds to derive Ks_NAF;

NOTE 1: If it is not desired by the UE to use the same Ks for the selected UICC application to derive more than one Ks_NAF then the UE should agree on a new key Ks with the BSF over the reference point Ub, and then proceed to derive Ks_NAF;

- if the NAF shares a key with the UE, but the NAF requires an update of that key, e.g. because the key's lifetime has expired or will expire soon, or the key can not meet the NAF local validity condition, it shall send a suitable bootstrapping renegotiation request to the UE, see figure 4.5. If the key's lifetime has expired the protocol used over reference point Ua shall be terminated. The form of this indication depends on the particular protocol used over reference point Ua. If the UE receives a bootstrapping renegotiation request, it starts a run of the protocol over reference point Ub, as specified in clause 4.5.2, in order to obtain a new key Ks.

NOTE 2: To allow for consistent key derivation in BSF and UE, both have to use the same FQDN for derivation (see NOTE 2 of clause 4.5.2). For each protocol used over Ua it shall be specified if only cases (1) and (2) of NOTE 2 of clause 4.5.2 are allowed for the NAF or if the protocol used over Ua shall transfer also the FQDN used for key derivation by UE to NAF.

NOTE 3: If the shared key between UE and NAF is invalid, the NAF can set deletion conditions to the corresponding security association for subsequent removal.

- the UE supplies the B-TID to the NAF, in the form as specified in clause 4.3.2, to allow the NAF to retrieve the corresponding keys from the BSF;

NOTE 4: The UE may adapt the key material Ks_NAF to the specific needs of the reference point Ua. This adaptation is outside the scope of this specification.

- key management for GBA related keys in the ME (i.e. Ks and Ks_NAF keys):

    - all GBA related keys shall be deleted from the ME when a different UICC is inserted. Therefore the ME needs to store in non-volatile memory the last inserted UICC-identity to be able to compare that with the used UICC-identity at UICC insertion and power on;

    - the Key Ks shall be deleted from the ME when the ME is powered down;

    - all other GBA related keys may be deleted from the ME when the ME is powered down. If the ME does not delete the GBA keys at power down then the GBA keys need to be stored in non-volatile memory.

- when a new Ks is agreed over the reference point Ub and a key Ks_NAF, derived from one NAF_Id, is updated, the other keys Ks_NAF, derived from different values NAF_Id, stored on the UE shall not be affected;

NOTE 5: According to the procedures defined in clauses 4.5.2 and 4.5.3, in the UE there is at most one Ks_NAF key stored per NAF-Id.

2. NAF starts communication over reference point Zn with BSF

- The NAF requests key material corresponding to the B-TID supplied by the UE to the NAF over reference point Ua. If the NAF has several FQDNs, which may be used in conjunction with this specification, then the NAF shall transfer in the request over Zn the same FQDN, which was used over Ua (see NOTE 2 on key derivation in this clause);

- The NAF may also request one or more application-specific USSs for the applications, which the request received over Ua from UE may access;

- With the key material request, the NAF shall supply NAF's public hostname that UE has used to access NAF to BSF, and BSF shall be able verify that NAF is authorized to use that hostname;

3. The BSF derives the keys required to protect the protocol used over reference point Ua from the key Ks and the key derivation parameters, as specified in clause 4.5.2, and supplies to NAF the requested key Ks_NAF, as well as the bootstrapping time and the lifetime of that key, and the requested application-specific and potentially NAF group specific USSs if they are available in subscriber's GUSS and if the NAF is authorized to receive the requested USSs. If the key identified by the B-TID supplied by the NAF is not available at the BSF, the BSF shall indicate this in the reply to the NAF. The NAF then indicates a bootstrapping renegotiation request to the UE.

NOTE 6: The NAF can further set the local validity condition of the Ks_NAF according to the local policy, for example a limitation of reuse times of a Ks_NAF.

NOTE 7: The NAF will adapt the key material Ks_NAF to the specific needs of the reference point Ua in the same way as the UE did. This adaptation is outside the scope of this specification.

-   The BSF may require that one or more application-specific and potentially NAF group specific USSs shall be present in subscriber's GUSS for the NAF (see clause 4.4.6). If one or more of these required settings are missing from the GUSS, the BSF shall indicate this in the reply to the NAF.

-   The BSF may also send the private user identity (IMPI) and requested USSs to NAF according to the BSF's policy;

4. NAF continues with the protocol used over the reference point Ua with the UE.

Once the run of the protocol used over reference point Ua is completed the purpose of bootstrapping is fulfilled as it enabled UE and NAF to use reference point Ua in a secure way.

**Figure 4.4: The bootstrapping usage procedure**

**Figure 4.5: Bootstrapping renegotiation request**

### 4.5.4 Procedure related to service discovery

The UE shall discover the address of the BSF the from the identity information related to the UICC application that is used during bootstrapping procedure, i.e., IMSI for USIM, or IMPI for ISIM. The address of the BSF is derived as specified in 3GPP TS 23.003 [11].

## 5 UICC-based enhancements to Generic Bootstrapping Architecture (GBA_U)

It is assumed that the UICC, BSF, and HSS involved in the procedures specified in this clause are capable of handling the GBA_U specific enhancements. The procedures specified in this clause also apply if NAF is not GBA_U aware.

### 5.1 Architecture and reference points for bootstrapping with UICC-based enhancements

The text from clause 4.4 of this specification applies also here, with the addition that the interface between the ME and the UICC, as specified in TS 31.102 [1] and TS 31.103 [10], needs to be enhanced with GBA_U specific commands. The requirements on these commands can be found in clause 5.2.1, details on the procedures are in clause 5.3.

### 5.2 Requirements and principles for bootstrapping with UICC-based enhancements

The requirements and principles from clause 4.3 also apply here with the following addition:

### 5.2.1 Requirements on UE

The 3G AKA keys CK and IK resulting from a run of the protocol over the Ub reference point shall not leave the UICC.
The UICC shall be able to distinguish between authentication requests for GBA_U, and authentication requests for other 3G authentication domains.
Upon an authentication request from the ME, which the UICC recognises as related to GBA_U, the UICC shall derive the bootstrapping key.
Upon request from the ME, the UICC shall be able to derive further NAF-specific keys from the derived key stored on the UICC.
All GBA-aware MEs shall support procedures for the two previous requests.

### 5.2.2 Requirements on BSF

BSF shall support both GBA_U and GBA_ME bootstrapping procedures. The decision on running one or the other shall be based on subscription information (i.e. UICC capabilities).
The BSF shall be able to acquire the UICC capabilities related to GBA as part of the GBA user security settings received from the HSS.

**5.3 Procedures for bootstrapping with UICC-based enhancements**

**5.3.1 Initiation of bootstrapping**

The text from clause 4.5.1 of this document applies also here.

**5.3.2 Bootstrapping procedure**

The procedure specified in this clause differs from the procedure specified clause 4.5.2 in the local handling of keys and Authentication Vectors in the UE and the BSF. The messages exchanged over the Ub reference point are identical for both procedures.
When a UE wants to interact with a NAF, and it knows that the bootstrapping procedure is needed, it shall first perform a bootstrapping authentication (see figure 5.1). Otherwise, the UE shall perform a bootstrapping authentication only when it has received bootstrapping initiation required message or a bootstrapping renegotiation indication from the NAF, or when the lifetime of the key in UE has expired (see clause 5.3.3).

> NOTE: The main steps from the specifications of the AKA protocol in TS 33.102 [2] and the HTTP digest AKA protocol in RFC 3310 [4] are repeated in figure 5.1 for the convenience of the reader. In case of any potential conflict, the specifications in TS 33.102 [2] and RFC 3310 [4] take precedence.

**Figure 5.1: The bootstrapping procedure with UICC-based enhancements**

1. The ME sends an HTTP request towards the BSF.

2. The BSF retrieves the complete set of GBA user security settings and one Authentication Vector (AV, AV = RAND‖AUTN‖XRES‖CK‖IK) over the Zh reference point from the HSS.

If the BSF implements the timestamp option and has a local copy of the GUSS for the subscriber that has been fetched from the HSS during a previous bootstrapping procedure, and this GUSS includes a timestamp, the BSF may include the GUSS timestamp in the request message. Upon receiving that timestamp, if the HSS implements the timestamp option, the HSS may compare it with the timestamp of the GUSS stored in the HSS. In this case, if and only if the HSS has done the comparison and the timestamps are equal, then the HSS shall send "GUSS TIMESTAMP EQUAL" indication to the BSF. In any other case, the HSS shall send the GUSS (if available) to the BSF. If the BSF receives "GUSS TIMESTAMP EQUAL" indication, it shall keep the local copy of the GUSS. In any other case, the BSF shall delete the local copy of the GUSS, and store the received GUSS (if sent).

The BSF can then decide to perform GBA_U, based on the user security settings (USSs). In this case, the BSF proceeds in the following way:

- BSF computes MAC* - MAC⊕ Trunc(SHA-1(IK))

NOTE 1: Trunc denotes that from the 160 bit output of SHA-1 [21], the 64 bits numbered as [0] to [63] are used within the * operation to MAC.
The BSF stores the XRES after flipping the least significant bit.
NOTE 2: In a multiple HSS environment, the BSF may have to obtain the address of the HSS where the subscription of the user is stored by querying the SLF, prior to step 2.

3. Then BSF forwards the RAND and AUTN* (where AUTN* = SQN ⊕ AK ‖ AMF ‖ MAC*) to the UE in the 401 message (without the CK, IK and XRES). This is to demand the UE to authenticate itself.

4. The ME sends RAND and AUTN* to the UICC. The UICC calculates IK and MAC (by performing MAC= MAC* ⊕ Trunc(SHA-1(IK))). Then the UICC checks AUTN(i.e. SQN ⊕ AK ‖AMF‖ MAC) to verify that the challenge is from an authorised network; the UICC also calculates CK and RES. This will result in session keys CK and IK in both BSF and UICC. The UICC then transfers RES (after flipping the least significant bit) to the ME and stores Ks, which is the concatenation of CK and IK, on the UICC.

5. The ME sends another HTTP request, containing the Digest AKA response (calculated using RES), to the BSF.

6. The BSF authenticates the UE by verifying the Digest AKA response.

7. The BSF generates the key Ks by concatenating CK and IK. The B-TID value shall be also generated in format ofNAI by taking the base64 encoded [12] RAND value from step 3, and the BSF server name, i.e. base64encode(RAND)@BSF_servers_domain_name.

8. The BSF shall send a 200 OK message, including the B-TID, to the UE to indicate the success of the authentication. In addition, in the 200 OK message, the BSF shall supply the lifetime of the key Ks.

9. Both the UICC and the BSF shall use the Ks to derive NAF-specific keys Ks_ext_NAF and Ks_int_NAF during the procedures as specified in clause 5.3.3, if applicable. Ks_ext_NAF and Ks_int_NAF are used for securing the Ua reference point.

Ks_ext_NAF is computed in the UICC as Ks_ext_NAF = KDF(Ks, "gba-me", RAND, IMPI, NAF_Id), and Ks_int_NAF is computed in the UICC as Ks_int_NAF = KDF(Ks, "gba-u, RAND, IMPI, NAF_Id), where KDF is the key derivation function as specified in Annex B, and the key derivation parameters include the user's IMPI, the NAF_Id and RAND. The NAF_Id consists of the full DNS name of the NAF, concatenated with the Ua security protocol identifier as specified in Annex H. The key derivation parameters used for Ks_ext_NAF derivation must be different from those used for Ks_int_NAF derivation. This is done by adding a static string "gba-me" in Ks_ext_NAF and "gba-u" in Ks_int_NAF as an input parameter to the key derivation function.

NOTE 3: The NOTE 3 of clause 4.5.2 also applies here.
The UICC and the BSF store the key Ks with the associated B-TID for further use, until the lifetime of Ks has expired, or until the key Ks is updated.

**5.3.3 Procedures using bootstrapped Security Association**

Before communication between the UE and the NAF can start, the UE and the NAF first have to agree whether to use shared keys obtained by means of the GBA. If the UE does not know whether to use GBA with this NAF, it uses the Initiation of Bootstrapping procedure described in clause 5.3.1.

Once the UE and the NAF have established that they want to use GBA then every time the UE wants to interact with a NAF the following steps are executed as depicted in figure 5.3.

Next, the UE and the NAF have to agree, which type of keys to use, Ks_ext_NAF or Ks_int_NAF, or both. The default is the use of Ks_ext_NAF only. This use is also supported by MEs and NAFs, which are GBA_U unaware. If Ks_int_NAF, or both Ks_ext_NAF and Ks_int_NAF are to be used, this use has to be agreed between UE and NAF prior to the execution of the procedure described in the remainder of this clause 5.3.3. Any such agreement overrules the default use of the keys. A key selection indication, which key (i.e. Ks_int_NAF or Ks_ext_NAF) the NAF shall use in the Ua reference point may be present in the application specific USS as defined in stage 3 specification. If the indication exists, the NAF shall use the indicated key. If the Ks_int_NAF key was indicated in the USS, the UE attempts to use Ks_ext_NAF key, the NAF shall terminate the communication with the UE.

NOTE 1: This agreement may be mandated by the specification, which defines the Ua reference point between UE and NAF, e.g. TS 33.246 for the use of GBA in MBMS, or negotiated by the NAF and the UE over the Ua reference point, or reached by configuration.

In general, UE and NAF will not yet share the key(s) required to protect the Ua reference point. If they do not, the UE proceeds as follows:

- if Ks_ext_NAF is required and a key Ks for the selected UICC application is available in the UICC, the ME requests the UICC to derive the key Ks_ext_NAF from Ks, as specified in clause 5.3.2;

- if Ks_int_NAF is required and a key Ks for the selected UICC application is available in the UICC, the ME requests the UICC to derive the key Ks_int_NAF from Ks, as specified in clause 5.3.2;

NOTE 2: If it is not desired by the UE to use the same Ks for the selected UICC application to derive more than one Ks_ext/int_NAF then the UE should first agree on new key Ks with the BSF over the Ub reference point, as specified in clause 5.3.2, and then proceeds to derive Ks_ext_NAF or Ks_int_NAF, or both, as required.

- if Ks for the selected UICC application is not available in the UE, the UE first agrees on a new key Ks with the BSF over the Ub reference point, as specified in clause 5.3.2, and then proceeds to derive Ks_ext_NAF or Ks_int_NAF, or both, as required;

- if the NAF shares a key with the UE, but the NAF requires an update of that key, it shall send a suitable bootstrapping renegotiation request to the UE. If the key's lifetime has expired the protocol used over reference point Ua shall be terminated. The form of this indication depends on the particular protocol used over Ua reference point. If the UE receives a bootstrapping renegotiation request, it starts a run of the protocol over Ub, as specified in clause 5.3.2, in order to obtain new keys.

NOTE 3: If the shared keys between UE and NAF become invalid, the NAF can set deletion conditions to the corresponding security association for subsequent removal.

NOTE 4: If it is not desired by the NAF to use the same Ks to derive more than one Ks_int/ext_NAF then the NAF should always reply to the first request sent by a UE by sending a key update request to the UE.

1. UE and NAF can now start the communication over Ua reference point using the keys Ks_ext_NAF or Ks_int_NAF, or both, as required. They proceed as follows:

- The UE supplies the B-TID to the NAF, as specified in clause 5.3.2, to allow the NAF to retrieve the corresponding keys from the BSF

NOTE 5: To allow for consistent key derivation in BSF and UE, both have to use the same FQDN for derivation (cf. NOTE 2 of clause 4.5.2). For each protocol used over Ua it shall be specified if only cases (1) and (2) of NOTE 2 of clause 4.5.2 are allowed for the NAF or if the protocol used over Ua shall transfer also the FQDN used for key derivation by UE to NAF.

NOTE 6: The UE may adapt the keys Ks_ext_NAF or Ks_int_NAF to the specific needs of the Ua reference point. This adaptation is outside the scope of this specification.

- key management for GBA related keys in the ME (i.e. Ks_ext_NAF keys):

  - all GBA related keys shall be deleted from the ME when a different UICC is inserted. Therefore the ME needs to store in non-volatile memory the last inserted UICC-identity to be able to compare that with the used UICC-identity at UICC insertion and power on.

  - all GBA related keys may be deleted from the ME when the ME is powered down. If the ME does not delete the GBA keys at power down then the GBA keys need to be stored in non-volatile memory.

  - all GBA related keys in the UICC do not need to be deleted when the ME is powered down.

  NOTE 7: After each run of the protocol over the Ub reference point, a new key Ks, associated with a new B-TID, are derived in the UE according to clause 5.3.2, so that it can never happen, that key Ks with different B-TIDs simultaneously exist in the UE.

- When new key Ks is agreed over the Ub reference point and new NAF-specific keys need to be derived for one NAF_Id, then both, Ks_ext_NAF and Ks_int_NAF (if present), shall be updated for this NAF_Id, but other keys Ks_ext_NAF or Ks_int_NAF relating to other NAF_Ids, which may be stored on the UE, shall not be affected.

  NOTE 8: According to the procedures defined in clauses 5.3.2 and 5.3.3, in the UE there is at most one Ks_int_NAF/Ks_ext_NAF key pair stored per NAF_Id.
  NOTE 9: This rule ensures that the keys Ks_ext_NAF and Ks_int_NAF are always in synch at the UE and the NAF.

2. NAF now starts communication over the Zn reference point with the BSF.

- The NAF requests from the BSF the keys corresponding to the B-TID, which was supplied by the UE to the NAF over the Ua reference point. If the NAF is GBA_U aware it indicates this by including a corresponding flag in the request. If the NAF has several FQDNs, which may be used in conjunction with this specification, then the NAF shall transfer in the request over Zn the same FQDN, which was used over Ua (see note above on key derivation in this clause).

- The NAF may also request one or more application-specific USSs for the applications, which the request received over Ua from UE may access;

- With the keys request over the Zn reference point, the NAF shall supply NAF's public hostname that UE has used to access NAF to BSF, and BSF shall be able to verify that NAF is authorized to use that hostname.

3. The BSF derives the keys Ks_ext_NAF, and Ks_int_NAF (if additionally required), as specified in clause 5.3.2. If the NAF indicated in its request that it is GBA_U aware, the BSF supplies to NAF both keys, Ks_ext_NAF, and Ks_int_NAF, otherwise the BSF supplies only Ks_ext_NAF. In addition, the BSF supplies the bootstrapping time and the lifetime time of these keys, and the requested application-specific and potentially NAF group specific USSs if they are available in subscriber's GUSS and if the NAF is authorized to receive the requested USSs. If the key identified by the B-TID supplied by the NAF is not available at the BSF, the BSF shall indicate this in the reply to the NAF. The NAF then indicates a bootstrapping renegotiation request (See figure 4.5) to the UE;

  NOTE 10:The NAF can further set the local validity condition of the Ks_NAF according to the local policy, for example a limitation of reuse times of a Ks_NAF.

  NOTE 11:The NAF will adapt the keys Ks_ext_NAF and Ks_int_NAF to the specific needs of the Ua reference point in the same way as the UE did. This adaptation is outside the scope of this specification.

- The BSF may require that one or more application-specific and potentially NAF group specific USSs shall be present in subscriber's GUSS for the NAF (see clause 4.4.6). If one or more of these required settings are missing from the GUSS, the BSF shall indicate this in the reply to the NAF.

- The BSF may also send the private user identity (IMPI) and requested USSs to NAF according to the BSF's policy.

4. The NAF now continues with the protocol used over the Ua reference point with the UE.

- If the NAF requested an application-specific USS from the BSF and the USS was returned the NAF, the NAF shall check whether this USS contains an key selection indication. If the key selection indication is present, the NAF shall use only the indicated key. If a different key was used over Ua, then the protocol used over reference point Ua shall be terminated.

Once the run of the protocol used over Ua reference point is completed the purpose of bootstrapping is fulfilled as it enabled the UE and NAF to use Ua reference point in a secure way.

msg is application specific dataset
Prof is application specific part of user profile

**Figure 5.3: The bootstrapping usage procedure with UICC-based enhancements**

### 5.3.4 Procedure related to service discovery

The text from clause 4.5.4 of this document applies also here.

Annex A:

Void

**Annex B (normative):**

**Specification of the key derivation function KDF**

**B.1 Introduction**

This annex specifies the key derivation function (KDF) that is used in the NAF specific key derivation in both GBA (i.e. GBA_ME) and GBA_U. The key derivation function defined in the annex takes the following assumptions:

1. the input parameters to the key derivation functions are octet strings - not bit strings of arbitrary length:
2. a single input parameter will have lengths no greater than 65535 octets.

**B.2 Generic key derivation function**

The input parameters and their lengths shall be concatenated into a string S as follows:

1. The length of each input parameter in octets shall be encoded into two-octet string:

a) express the number of octets in input parameter Pi as a number k in the range [0, 65535].
b) Li is then a two-octet representation of the number k, with the most significant bit of the first octet of Li equal to the most significant bit of k, and the least significant bit of the second octet of Li equal to the least significant bit of k,

EXAMPLE: If Pi contains 258 octets then Li will be the two-octet string 0x01 0x02.
2. String S shall be constructed from n input parameters as follows:

$$S = FC \parallel P0 \parallel L0 \parallel P1 \parallel L1 \parallel P2 \parallel L2 \parallel P3 \parallel L3 \parallel ... \parallel Pn \parallel Ln$$

where

FC is single octet used to distinguish between different instances of the algorithm,
P0 is a static ASCII-encoded string,
L0 is the two octet representation of the length of the P0,
P1 ... Pn are the n input parameters, and
L1 ... Ln are the two-octet representations of the corresponding input parameters.

3. The final output, i.e. the derived key is equal to HMAC-SHA-256 (as specified in [22] and [23]) computed on the string S using the key Key:

$$\text{derived key} = \text{HMAC-SHA-256} (\text{Key}, S)$$

**B.2.1 Input parameter encoding**

A character string shall be encoded to an octet string according to UTF-8 encoding rules as specified in IETF RFC 3629 [24].

**B.3 NAF specific key derivation in GBA and GBA_U**

In GBA and GBA_U, the input parameters for the key derivation function shall be the following:

- FC = 0x01,
- P1 =RAND,
- L1 = length of RAND is 16 octets (i.e. 0x00 0x10),
- P2 = IMPI encoded to an octet string using UTF-8 encoding (see clause B.2.1),
- L2 = length of IMPI is variable (not greater that 65535),
- P3 = NAF_ID encoded to an octet string using UTF-8 encoding (see clause B.2.1), and
- L3 = length of NAF_ID is variable (not greater that 65535).

In the key derivation of Ks_NAF as specified in clause 4 and Ks_ext_NAF as specified in clause 5,

- P0 = "gba-me" (i.e. 0x67 0x62 0x61 0x2d 0x6d 0x65), and
- L0 = length of P0 is 6 octets (i.e., 0x00 0x06).

In the key derivation of Ks_int_NAF as specified in clause 5,

- P0 = "gba-u" (i.e. 0x67 0x62 0x61 x2d 0x75), and
- L0 = length of P0 is 5 octets (i.e., 0x00 0x05).

The Key to be used in key derivation shall be:

- Ks (i.e. CK ‖ IK concatenated) as specified in clauses 4 and 5,

 NOTE: In the specification this function is denoted as:

 Ks_NAF = KDF (Ks, "gba-me", RAND, IMPI, NAF_Id),
 Ks_ext_NAF = KDF (Ks, "gba-me", RAND, IMPI, NAF_Id), and
 Ks_int_NAF = KDF (Ks, "gba-u", RAND, IMPI, NAF_Id).

Annex C:

Void

**Annex D (informative):**

**Dialog example for user selection of UICC application used in GBA**

For certain cases, clause 4.4.8 specifies user involvement in the selection of the UICC application used for GBA procedures. A dialog window example for such an involvement is described below:

- The title of the dialog: "Authentication request".

- Explanation: "A service requires you to authenticate, please select your identity:"

- List of identities: A selectable list of applications on the UICC. The text visible for each application is extracted from the "Label" field of the application list on the UICC.

- Buttons: "Select" and "Cancel".

**Annex E (normative):**

**TLS profile for securing Zn' reference point**

The TLS profile for securing the Zn' reference point is specified in RFC 3588 [14] section 13.2.
In addition, the D-Proxy certificate, i.e. the client certificate used in TLS handshake shall contain the subjectAltName extension as specified in RFC 3280 [17]. The subjectAltName extension shall contain one or more dNSName names. The dNSName name may contain the wildcard character '*' and the matching is performed as specified in RFC 2818 [18] section 3.1.

 NOTE: The D-Proxy certificate shall contain all the DNS names of NAFs that may send a request for NAF specific shared secret through the D-Proxy to the subscriber's home BSF. If a new NAF is added, the new DNS name is either covered in the certificate by using the wildcard character approach (e.g. "*.operator.com"), or a new dNSName name needs to be added to the certificate. In the latter case, new certificate is needed for the D-Proxy.

**Annex F (informative):**

**Handling of TLS certificates**

An authentication framework as available for IPsec [19] is not available for TLS certificates. The purpose of this Annex is to provide guidelines for TLS certificate handling for use on the Zn' reference point in the absence of a framework for TLS certificates.
Within this Annex following abbreviations are used: $CA_A$ is the certification authority in A's network and $CA_B$ is the certification authority in B's network. $Cert_A$ is the certificate of A and $Cert_B$ is the certificate of B. $I_A$ is the set of identifiers that A may use to identify the NAF towards the BSF. $T_B$ is the set of peers trusted by B.

**F.1 TLS certificate enrollment**

Mutual authentication in TLS is achieved based on public key technology and certificates. Both TLS peers A and B need to contain a certificate store and there shall be at least one certification authority CA that can issue certificates within the security domains in with A and B are part of. $Cert_A$ contains the set $I_A$ of A's identifiers. Each identifier is in the form of fully qualified domain name (FQDN). Similarly, B's certificate is $Cert_B$.

The certificates in the store of B define the group $T_B$ of peers trusted by B. There are several options for creation and enrollment of certificates, three of which are described below.

1. In one option there is a certification authority, $CA_B$, only in the network of B. $CA_B$ issues a certificate $Cert_B$ to B and a certificate $Cert_A$ to A. The certificates are delivered from $CA_B$ to A and B in a secure way "out of band". Both A and B then add their peer into the group of their trusted peers by inserting that peer's certificate into the certificate store: A inserts $Cert_B$ into A's certificate store and B inserts $Cert_A$ into B's certificate store. This insertion is typically manual and the details depend on the implementation of the management interface to the certificate store.

2. In another option both A's and B's networks contain certification authorities, $CA_B$ and $CA_A$, respectively. $CA_B$ issues a certificate $Cert_B$ to B and $CA_A$ issues a certificate $Cert_A$ to A. The certificates are delivered from $CA_B$ to A and from $CA_A$ to B in a secure way "out of band". Both A and B then add their peer into the group of their trusted peers by inserting that peer's certificate into the certificate store: A inserts $Cert_B$ into A's certificate store and B inserts $Cert_A$ into B's certificate store.

3. In a third option the CA certificates of both sides are exchanged: the certificate of $CA_B$ is delivered to A and the certificate of $CA_A$ is delivered to B in a secure way "out of band"', inserted to the certificate store, and marked trusted. The validation of $Cert_A$ and $Cert_B$, that are exchanged during TLS handshake, is based on the presence of the corresponding CA certificates in the certificate store.

NOTE: In options 1 and 2 the need for certification authority may be avoided if the peers generate self signed certificates and exchange them in a secure way, "out of band". Also, instead of certificates themselves, certificate fingerprints may be exchanged "out of band" in those options.

**F.2 TLS Certificate revocation**

In the absence of PKI-revocation interfaces, certificate revocation needs to be performed manually. The revocation operation involves the removal of A from the group $T_B$ of peers trusted by B. In the first two enrollment options described above the revocation happens by B removing the certificate of A, $Cert_A$, from its certificate store. This removal can be done manually. In the third option the certificate of A, $Cert_A$, is not in B's certificate store. For that reason B has to have a way to check the validity of $Cert_A$ with the issuer of the certificate (also in the first two enrollment options the amount of manual maintenance operations will decrease if B can check the validity of $Cert_A$ with the issuer of the certificate). This check may be done by using Online Certificate Status Protocol (OCSP) [20] or by using Certificate Revocation Lists (CRLs) [17] published by the issuer of $Cert_A$.

**Annex G (normative):**

**GBA_U UICC-ME interface**

This annex describes the UICC-ME interface to be used when a GBA_U aware UICC application is active and the ME is involved in a GBA bootstrapping procedure. When the UICC application is not GBA_U aware, the ME uses AUTHENTICATE command in non-GBA_U security context (i.e. UMTS security context in case of USIM application and IMS security context in case of the ISIM) as defined in TS 31.102 [1] and TS 31.103 [10].

**G.1 GBA_U Bootstrapping procedure**

This procedure is part of the Bootstrapping procedure as described in clause 5.3.2.

The ME sends RAND and AUTN to the UICC, which performs the Ks derivation as described in clause 5.3.2.

The UICC then stores Ks. The UICC also stores the used RAND to identify the current bootstrapped values. RAND value in the UICC shall be further accessible by the ME.

The ME then finalizes the Bootstrapping procedure and stores in the UICC the Transaction Identifier (B-TID) and Key Life Time associated with the previous bootstrapped keys (i.e. Ks). Transaction Identifier and Key Life Time values in the UICC shall be further accessible by the ME.

At the end of the GBA_U bootstrapping procedure the UICC stores Ks, Transaction Identifier, Key Life Time and the RAND.

The UICC sends RES to the ME.

A new bootstrapping procedure replaces Ks, B-TID, Key LifeTime and RAND values of the previous bootstrapping procedure.

UICC                                                            ME

*GBA_U Procedure (Bootstrap)*
RAND ‖ AUTN

*User authentication response*
RES

*User authentication reject*
CAUSE

*Storage of*
TID ‖ Key Life Time

**Figure G.1: GBA_U Bootstrap Procedure**

## G.2 GBA_U NAF Derivation procedure

This procedure is part of the Procedures using bootstrapped Security Association as described in clause 5.3.3

The ME sends NAF_ID and IMPI to the UICC. The UICC then performs Ks_ext_NAF and Ks_int_NAF derivation as described in clause 5.3.2. The UICC uses the RAND and Ks values stored from the previous bootstrapping procedure. The UICC returns Ks_ext_NAF to the ME and stores Ks_int_NAF and associated B-TID together with NAF_Id.

NOTE: A previous GBA_U Bootstrap needs to be undertaken before. If Ks is not available in the UICC, the command will answer with the appropriate error message.

The input parameters, IMPI and NAF_ID, sent by the ME shall be encoded to octet strings using UTF-8 encoding rules as specified in IETF RFC 3629 [24].

UICC                                                            ME

*GBA_U Procedure (NAF derivation)*
NAF_ID, IMPI

*GBA_U Procedure response*
Ks_ext_NAF

**Figure G.2: GBA_U NAF derivation procedure**

## Annex H (normative):

## Ua security protocol identifier

## H.1 Definition

The Ua security protocol identifier is a string of five octets. The first octet denotes the organization which specifies the Ua security protocol. The four remaining octets denote a specific security protocol within the responsibility of the organization.

For all Ua protocols specified by 3GPP this Annex shall contain a complete list of these protocols. For Ua protocols specified by other organizations this Annex shall only specify the organization octet of the Ua security protocol identifier. Two organization octets are reserved for special use.

**H.2 Organization Octet**

The organization octet denotes the organization specifying the particular protocol. Each organization intending to specify a Ua security protocol identifier shall apply to 3GPP to receive an organization octet value, which shall be registered within this Annex. Following is a list of registered organization octets:

"0x00" as first octet is the default value for protocols not specified otherwise. When octet "0x00" is used as first octet, only Ua security protocol identifier (0x00,0x00,0x00,0x00,0x00) shall be used.

NOTE: All protocols having this Ua security protocol identifier cannot be separated from each other.

"0x01" .. "0xFE" as the first octet denote organizations specifying Ua security protocol identifiers.

"0xFF" as the first octet denotes the private range of Ua security protocol identifiers.

NOTE: identifiers with "0xFF" as first octet may be used for defining local/experimental protocols without need for registration. When using such an identifier, however, it may happen that a security breach in one security protocol over Ua can be exploited by an attacker to mount successful attacks on a different security protocol over Ua.

The following values for organizations are assigned:

"0x01"  3GPP

NOTE: All protocols having the organization octet "0x01" are specified in annex H.3.

"0x02"  3GPP2
"0x03"  Open Mobile Alliance
"0x04"  GSMA

**H.3 Ua security protocol identifiers for 3GPP specified protocols**

The following Ua security protocol identifiers are specified by 3GPP:

(0x01,0x00,0x00,0x00,0x00) Ua security protocol according to TS 33.221 [5].

(0x01,0x00,0x00,0x00,0x01) Ua security protocols according to TS 33.246 [26].NOTE: TS 33.246[26] provides key separation between the keys that are used within HTTP digest and MIKEY protocols.

(0x01,0x00,0x00, 0x00,0x02) Ua security protocol HTTP digest authentication according to TS 24.109 [29], unless HTTP digest authentication is used in the context of another Ua security protocol, which is already covered elsewhere in this Annex.
(0x01,0x00,0x01,yy,zz) Ua security protocol for "Shared key-based UE authentication with certificate-based NAF authentication", according to TS 33.222 [25], or "Shared key-based mutual authentication between UE and NAF", according to TS 33.222 [25]. Here, "yy,zz" is the protection mechanism CipherSuite code according to the defined values for TLS CipherSuites in TLS V1.0 [28] and PSK Ciphersuites for TLS [27].

NOTE: As an example: RFC2246 [28] CipherSuite TLS_RSA_WITH_3DES_EDE_CBC_SHA has code = { 0x00,0x0A}, thus the according protocol identifier shall be (0x01,0x00,0x01,0x00,0x0A).

**Annex I (normative):**

**2G GBA**

This annex specifies the implementation option to allow the use of SIM cards or SIMs on UICC for GBA. The procedure specified in this annex is called 2G GBA. 2G GBA allows access to applications in a more secure way than would be possible with the use of passwords or with GSM without enhancements. It may be useful for operators who have not yet fully deployed USIMs.

## I.1 Reference model

The reference model is the same as described in section 4.1.

## I.2 Network elements

### I.2.1 Bootstrapping server function (BSF)

A generic Bootstrapping Server Function (BSF) and the UE shall mutually authenticate using the 2G AKA protocol and the TLS protocol, and agree on session keys that are afterwards applied between UE and a Network Application Function (NAF). The BSF shall restrict the applicability of the key material to a specific NAF by using the key derivation procedure as specified in Annex B. The key derivation procedure may be used with multiple NAFs during the lifetime of the key material. The lifetime of the key material is set according to the local policy of the BSF. The generation of key material is specified in clause I.5.2.

The BSF shall be able to acquire the GBA user security settings (GUSS) from the HSS.

The BSF shall be able to discover from the type of authentication vectors sent by the HSS whether the subscriber is a 2G or a 3G subscriber.

The BSF shall be able to keep a list, which assigns NAFs to NAF Groups. This list is used to select if any and which application-specific USS within GUSS is valid for a certain NAF.

NOTE 1: The operator does the assignment of NAFs to NAF Groups. NAF Group definitions in HSS and all connected BSFs belonging to the same operator's network shall be equal (cf., clause 1.2.3). As these network elements belong to the same operator's network, standardisation of the NAF Group definitions themselves is not necessary in 3GPP.

NOTE 2: The NAF grouping may be e.g. "home" and "visited". It allows the BSF to send USSs for the same application with e.g. different authorization flags to different NAFs, e.g., in home network and visited networks. The NAF e.g. in visited network indicates only the requested application, but it is unaware of the grouping in home network of the subscriber.

### I.2.2 Network application function (NAF)

After the bootstrapping has been completed, the UE and a NAF can run some application specific protocol where the authentication of messages will be based on those session keys generated during the mutual authentication between UE and BSF.

General assumptions for the functionality of a NAF are:

- there need not be a previous security association between the UE and the NAF;

- NAF shall be able to locate and communicate securely with the subscriber's BSF;

- NAF shall be able to acquire a shared key material established between UE and the BSF during the run of the application-specific protocol;

- NAF shall be able to acquire zero or more application-specific USSs from the HSS via the BSF;

- NAF shall be able to set the local validity condition of the shared key material according to the local policy;

- NAF shall be able to check lifetime and local validity condition of the shared key material.

- NAF shall have a policy whether to accept 2G subscribers.

NOTE: Without additional measures, GBA does not guarantee the freshness of the key, Ks(_int/ext)_NAF in the sense that it does not guarantee that the key was not used in a previous run of the Ua protocol. The additional measures which may be taken by the UE and the NAF to ensure key freshness in GBA are:

1) enforce a new run of the Ub protocol (thus generating a new Ks) before deriving a new Ks_NAF.

2) store previously used keys Ks(_int/ext)_NAF, or the corresponding key identifiers B-TID, until the end of their lifetime.

A UE and a NAF that support a Ua protocol that does not provide replay protection over unconnected runs of the protocol, will need to take corresponding action to avoid replay attacks if desired.

### I.2.2a Diameter proxy (D-Proxy)

The text from section 4.2.2a applies also here.

### I.2.3 HSS

The set of all user security settings (USSs), i.e. GUSS, is stored in the HSS.

The requirements on the HSS are:

- HSS shall provide the only persistent storage for GUSSs;

- GUSS shall be defined in such a way that interworking of different operators for standardised application profiles is possible;

- GUSS shall be defined in such a way that profiles for operator specific applications and extensions to existing application profiles are supported without need for standardisation of these elements.

- GUSS shall be able to contain application-specific USSs that contain parameters that are related to identification or authorization information of one or more applications hosted by one ore more NAFs. Any other types of parameters are not allowed in the application-specific USS.

    NOTE 1: The necessary subscriber profile data may be fetched by the NAF directly from HSS or from its local database using identity information provided by the application-specific USS.

    NOTE 2: The HSS may temporarily remove an application-specific USS from the GUSS if the service is temporarily revoked from the subscriber.

- GUSS shall be able to contain parameters intended for the BSF usage:

    - subscriber specific key lifetime;

    - optionally the timestamp indicating the time when the GUSS has been last modified by the HSS.

    NOTE 3: These parameters are optional and if they are missing from subscriber's GUSS or subscriber does not have GUSS then the BSF will use the default values in the BSF local policy defined by the particular MNO.

- HSS shall be able to assign application-specific USSs to a NAF Group. This shall be defined in such a way that different USSs for the same application, but for different groups of NAFs, are possible. The restrictions on the number of USSs per GUSS are dependent on the usage of NAF Groups by the operator:

    - if no NAF Groups are defined for this application then at most one USS per application is stored in GUSS;

    - if NAF Groups are defined for this application then at most one USS per application and NAF Group is stored in GUSS.

- NAF Group definitions in the HSS and all connected BSFs belonging to the same operator's network shall be equal.
- Information on UICC type and on key choice are not required for 2G subscribers. 2G GBA is regarded as ME-based.

### I.2.4 UE

The required functionalities from the UE are:

- the support of HTTP Digest AKA protocol;

- the support of TLS;

- the capability to use a SIM in bootstrapping;

- the capability for a Ua application on the ME to indicate to the GBA Function on the ME whether a SIM is allowed for use in bootstrapping (see clause I.4.8);

- the capability to derive new key material to be used with the protocol over Ua interface from Kc, RAND, SRES and Ks-input;

- support of NAF-specific application protocol (For an example see TS 33.221 [5]).

A 2G GBA-aware ME shall support both 3G GBA_U, as specified in clause 5.2 and 3G GBA_ME procedures, as specified in clause 4.5.

## I.3 Bootstrapping architecture and reference points

### 1.3.1 Reference point Ub

The reference point Ub is between the UE and the BSF. Reference point Ub provides mutual authentication between the UE and the BSF. It allows the UE to bootstrap the session keys based on 2G AKA infrastructure.

### I.3.2 Reference point Ua

The reference point Ua carries the application protocol, which is secured using the keys material agreed between UE and BSF as a result of the run of the protocol over reference point Ub.

### I.3.3 Reference point Zh

The reference point Zh used between the BSF and the HSS allows the BSF to fetch the required authentication information and all GBA user security settings from the HSS. The interface to the 2G Authentication Centre is HSS-internal, and it need not be standardised as part of this architecture.

### I.3.4 Reference point Zn

The reference point Zn is used by the NAF to fetch the key material agreed during a previous protocol run over the reference point Ub from the UE to the BSF. It is also used to fetch application-specific user security settings from the BSF, if requested by the NAF.

## I.4 Requirements and principles for bootstrapping

The following requirements and principles are applicable to bootstrapping procedure:

- the bootstrapping function shall not depend on the particular NAF;

- the server implementing the bootstrapping function needs to be trusted by the home operator to handle authentication vectors;

- the server implementing the NAF needs only to be trusted by the home operator to handle derived key material;

- it shall be possible to support NAF in the operator's home network and in the visited network;

- the architecture shall not preclude the support of network application function in a third network;

- to the extent possible, existing protocols and infrastructure should be reused;

- in order to ensure wide applicability, all involved protocols are preferred to run over IP;

- it shall be prevented that a security breach in one NAF who is using the GBA, can be used by an attacker to mount successful attacks to the other NAFs using the GBA.

- Existing SIM cards or SIMs on UICCs and their specifications shall not be impacted.

- If USIM or ISIM are available they shall be used as specified in sections 4 and 5, and 2G GBA shall not be used.

- 2G GBA shall not impact the USIM / ISIM based GBA as specified in sections 4 and 5.

- 2G GBA shall not reduce security for USIM / ISIM users.

- 2G GBA shall minimise the changes to the USIM / ISIM based GBA specified in section 4.

- 2G GBA shall provide measures to mitigate known vulnerabilities of GSM.

**I.4.1 Access Independence**

Bootstrapping procedure is access independent. Bootstrapping procedure requires IP connectivity from UE.

**I.4.2 Authentication methods**

Authentication between the UE and the BSF shall not be possible without a valid cellular subscription. Authentication shall be based on the GSM authentication (also called 2G AKA) protocol. BSF authentication shall in addition be based on TLS with server certificates.

**I.4.3 Roaming**

The text from section 4.4.3 applies also here.

**1.4.4 Requirements on reference point Ub**

The requirements for reference point Ub are:

- the BSF shall be able to identify the UE;

- the BSF and the UE shall be able to authenticate each other based on the methods in 1.4.2;

- the BSF shall be able to send a bootstrapping transaction identifier to the UE;

- the UE and the BSF shall establish shared keys;

- the BSF shall be able to indicate to the UE the lifetime of the key material. The key lifetime sent by the BSF over Ub shall indicate the expiry time of the key.

NOTE: This does not preclude a UE to refresh the key before the expiry time according to the UE's local policy.

**I.4.5 Requirements on reference point Zh**

The requirements for reference point Zh are:

- mutual authentication, confidentiality and integrity shall be provided;

NOTE 1: This requirement may be fulfilled by physical or proprietary security measures if BSF and HSS are located within the same operator's network.

- the BSF shall be able to send bootstrapping information request concerning a subscriber;

- optionally the BSF may have the capability able to send the timestamp of subscriber's GBA user security settings to the HSS (timestamp option);

- the HSS shall be able to send 2G AKA vectors to the BSF;

- the HSS shall be able to send the complete set of subscriber's GBA user security settings needed for security purposes to the BSF. Optionally the HSS may have the capability to indicate to the BSF whether the BSF already has the latest copy of the GUSS based on the GUSS timestamp (timestamp option);

  NOTE 2: If subscriber's GUSS is updated in HSS, this is not propagated to the BSF. The GUSS in the BSF is updated when the BSF next time fetches the authentication vectors and GUSS from the HSS over Zh reference point as part of the bootstrapping procedure.

- no state information concerning bootstrapping shall be required in the HSS;

- all procedures over reference point Zh shall be initiated by the BSF;

- the number of different interfaces to HSS should be minimized.

### I.4.6 Requirements on reference point Zn

The requirements for reference point Zn are:

- mutual authentication, confidentiality and integrity shall be provided;

- If the BSF and the NAF are located within the same operator's network, the Zn reference point shall be secured according to NDS/IP [13];

- If the BSF and the NAF are located in different operators' networks, the Zn' reference point between the D-Proxy and the BSF shall be secured using TLS as specified in RFC 2246 [6];

  NOTE 1: Annex E specifies the TLS profile that is used for securing the Zn' reference point.

- The BSF shall verify that the requesting NAF is authorised to obtain the key material or the key material and the requested USS;

- The NAF shall be able to send a key material request to the BSF, containing NAF's public hostname used by the UE's corresponding request. The BSF shall be able to verify that a NAF is authorized to use this hostname, i.e. the FQDN used by UE when it contacts the NAF;

- The BSF shall be able to send the requested key material to the NAF;

- The NAF shall be able to get a selected set of application-specific USSs from the BSF, depending on the policy of the BSF and the application indicated in the request from the NAF over Zn;

- The NAF shall be able to indicate to the BSF the single application or several applications it requires USSs for;

  NOTE 2: If some application needs only a subset of an application-specific USS the NAF selects this subset from the complete set of USS sent from BSF.

- The BSF shall be able to be configured on a per NAF or per application basis if private subscriber identity and which application-specific USSs may be sent to a NAF;

- If a NAF requests USSs from the BSF and they are not present in subscriber's GUSS, it shall not cause an error, provided the conditions of the local policy of the BSF are fulfilled. The BSF shall then send only the requested and found USSs to the NAF;

- It shall be possible to configure a local policy as follows: BSF may require one or more application-specific USS to be present in a particular subscriber's GUSS for a particular requesting NAF, and to reject the request from the NAF in case the conditions are not fulfilled. In order to satisfy this local policy, it is not required that the NAF requests the USSs over the Zn reference point, which the BSF requires to be present in the GUSS, rather it is sufficient that the BSF checks the presence of the USSs locally. It shall also be possible configure the BSF in such a way that no USS is required for the requesting NAF;

- The BSF shall be able to indicate to the NAF the bootstrapping time and the lifetime of the key material. The key lifetime sent by the BSF over Zn shall indicate the expiry time of the key, and shall be identical to the key lifetime sent by the BSF to the UE over Ub.

NOTE 3: This does not preclude a NAF to refresh the key before the expiry time according to the NAF's local policy.

NOTE 4: If one or more of the USSs that have been delivered to the NAF has been updated in subscriber's GUSS in the HSS, this change is propagated to the NAF the next time it fetches the USS from the BSF over Zn reference point (provided that the BSF has updated subscriber's GUSS from the HSS over Zh reference point).

- The BSF shall send information to the NAF that the subscriber is a 2G subscriber. If no such information is sent the NAF shall assume that the subscriber is a 3G subscriber.

NOTE 5: This requirement enables a NAF to accept 2G subscribers according to its local policy. The second sentence ensures backward compatibility with the procedures specified in section 4 and 5 of this specification. Note also that inclusion of information on the type of subscription in the GUSS would not suffice to satisfy this requirement as a GUSS need not be present for every subscriber.

- The BSF may determine according to its local policy that the NAF shall not serve 2G subscribers. If this is the case, the BSF does not send keys to the NAF.

NOTE 6: this requirement allows an operator controlling the BSF to determine which applications shall use 3G security only. This requirement is also necessary for NAFs, which are not capable to evaluate the information about the subscription type sent by the BSF, e.g. pre-release 7 NAFs.

### I.4.7 Requirements on Bootstrapping Transaction Identifier

Bootstrapping transaction identifier (B-TID) shall be used to bind the subscriber identity to the keying material in reference points Ua, Ub and Zn.

Requirements for B-TID are:

- B-TID shall be globally unique;

- B-TID shall be usable as a key identifier in protocols used in the reference point Ua;

- NAF shall be able to detect the home network and the BSF of the UE from the B-TID.

NOTE 1: NAF can remove the security association based on deletion conditions after the key has become invalid.

NOTE 2: Care has to be taken that the parallel use of GBA and non-GBA authentication between UE and NAF does not lead to conflicts, e.g. in the name space. This potential conflict cannot be resolved in a generic way as it is dependent on specific protocol and authentication mechanism used between UE and application server. It is therefore out of scope of this specification.
For the example of HTTP Digest authentication used between UE and NAF, parallel use is possible as the following applies: <usemame,password>-pairs must be unique to one realm only. As the NAF controls the realm names, it has to ensure that only the GBA based realm is named with the reserved 3GPP realm name. In the special case that the NAF wants to allow non GBA based authentication in the GBA realm also, it has to ensure that no usernames in the format of a B-TID are used outside GBA based authentication.

### I.4.8 Requirements on selection of UICC application and SIM card

If a UICC is present in the UE, containing a USIM or an ISIM, then a USIM or ISIM shall be used as specified in section 4.4.8. Otherwise a SIM shall be used.

If no UICC, but a SIM card is present in the UE, the SIM card shall be used.

**I.4.9 Requirements on reference point Ua**

The text from section 4.4.9 applies also here.

**I.5 Procedures**

This chapter specifies in detail the format of the 2G GBA bootstrapping procedure that is further utilized by various applications. It contains the authentication procedure with BSF, and the key material generation procedure.

**1.5.1 Initiation of bootstrapping**

Before communication between the UE and the NAF can start, the UE and the NAF first have to agree whether to use the GBA. When a UE wants to interact with a NAF, but it does not know if the NAF requires the use of shared keys obtained by means of the GBA, the UE shall contact the NAF for further instructions (see figure 1.2).

**Figure I.2: Initiation of bootstrapping**

1. UE starts communication over reference point Ua with the NAF without any GBA-related parameters.

2. If the NAF requires the use of shared keys obtained by means of the GBA, but the request from UE does not include GBA-related parameters, the NAF replies with a bootstrapping initiation message. The form of this indication may depend on the particular reference point Ua and is specified in the relevant stage 3-specifications.

**1.5.2 Bootstrapping procedures**

When a UE wants to interact with a NAF, and it knows that the bootstrapping procedure is needed, it shall first perform a bootstrapping authentication (see figure 1.3). Otherwise, the UE shall perform a bootstrapping authentication only when it has received bootstrapping initiation required message or a bootstrapping negotiation indication from the NAF, or when the lifetime of the key in UE has expired (cf. subclause I.5.3).

**Figure I.3: The bootstrapping procedure**

1. The UE sets up a confidentiality-protected TLS tunnel with the BSF. In the set up of the TLS tunnel, the UE shall authenticate the BSF by means of a certificate provided by the BSF. The UE shall check that the "realm" attribute contains the same FQDN of the BSF that was present in the certificate offered by the BSF. All further communication between ME and BSF is sent through this TLS tunnel. The UE now sends an initial HTTPS request.

2. The BSF requests authentication vectors and GUSS from the HSS over Zh. The HSS returns the complete set of GBA user security settings (GUSS) and one 2G authentication vectors (AV = RAND, SRES, Kc) over the Zh reference point. The BSF discovers that the UE is equipped with 2G SIM by looking at the type of authentication vectors.

If the BSF implements the timestamp option and has a local copy of the GUSS for the subscriber that has been fetched from the HSS during a previous bootstrapping procedure, and this GUSS includes a timestamp, the BSF may include the GUSS timestamp in the request message. Upon receiving that timestamp, if the HSS implements the timestamp option, the HSS may compare it with the timestamp of the GUSS stored in the HSS. In this case, if and only if the HSS has done the comparison and the timestamps are equal, then the HSS shall send "GUSS TIMESTAMP EQUAL" indication to the BSF. In any other case, the HSS shall send the GUSS (if available) to the BSF. If the BSF receives "GUSS TIMESTAMP EQUAL" indication, it shall keep the local copy of the GUSS. In any other case, the BSF shall delete the local copy of the GUSS, and store the received GUSS (if sent).
The BSF converts one 2G authentication vector (RAND, Kc, SRES) to the parameter RES.

- RES = KDF (key, "3gpp-gba-res", SRES), truncated to 128 bits

where key = Kc $\|$ Kc $\|$ RAND and KDF is the key derivation function specified in Annex B of TS 33.220.
The BSF shall also select a 128-bit random number "Ks-input" and set

server specific data = Ks-input
in the aka-nonce of HTTP Digest AKA, cf. [4].

NOTE: "Truncated to 128 bits" means that from the 256 bits output of KDF, the 128 bits numbered as [0] to [127] are used.

3. The BSF shall forward RAND and server specific data in the 401 message to the UE (without RES). This is to demand the UE to authenticate itself. The BSF shall set qop = int in the www-authenticate header (cf. [3]).

4. The UE extracts RAND from the message and calculates the corresponding Kc and SRES values. It then calculates the parameter RES from these values as specified in step 2.

5. The UE sends another HTTP request, containing the Digest AKA response (calculated using RES as the password) and a cnonce (cf. [3]), to the BSF.

6. The BSF authenticates the UE by verifying the Digest AKA response. If the authentication fails the BSF shall not re-use the authentication vector in any further communication.

7. The BSF shall generate key material Ks by computing Ks = KDF (key, Ks-input, "3gpp-gba-ks", SRES). The B-TID value shall be also generated in format of NAI by taking the base64 encoded [12] RAND value from step 3, and the BSF server name, i.e. base64encoded(RAND)@BSF_servers_domain_name.

8. The BSF shall send a 200 OK message, including a B-TID and an authentication-info header (cf. [3]), to the UE to indicate the success of the authentication. In addition, in the 200 OK message, the BSF shall supply the lifetime of the key Ks.

9. The UE shall abort the procedure if the server authentication according to [3] fails. If it is successful the UE shall generate the key material Ks in the same way as the BSF.

10. Both the UE and the BSF shall use the Ks to derive the key material Ks_NAF for use with the procedures specified in clause I.5.3. Ks_NAF shall be used for securing the reference point Ua.
Ks_NAF is computed as Ks_NAF = KDF (Ks, "gba-me", RAND, IMPI, NAF_Id), where KDF is the key derivation function as specified in Annex B, and the key derivation parameters consist of the user's IMPI, the NAF_Id and RAND. The NAF_Id consists of the full DNS name of the NAF, concatenated with the Ua security protocol identifier as specified in Annex H. KDF shall be implemented in the ME.

NOTE 3: To allow consistent key derivation based on NAF name in UE and BSF, at least one of the three following prerequisites shall be fulfilled:

(1) The NAF is known in DNS under one domain name (FQDN) only, i.e. no two different domain names point to the IP address of the NAF. This has to be achieved by administrative means.

(2) Each DNS entry of the NAF points to a different IP address. The NAF responds to all these IP addresses. Each IP address is tied to the corresponding FQDN by NAF configuration. The NAF can see from the IP address, which FQDN to use for key derivation.

(3) Ua uses a protocol which transfers the host name (FQDN of NAF as used by UE) to NAF (e.g. HTTP/1.1 with mandatory Host request header field). This requires the NAF to check the validity of the host name, to use this name in all communication with UE where appropriate, and to transfer this name to BSF to allow for correct derivation of Ks_NAF.
In case of a TLS tunnel over Ua this requires either multiple-identities certificates for the NAF or the deployment of RFC 3546 [9] over Ua or other protocol means with similar purpose over Ua.

The UE and the BSF shall store the key Ks with the associated B-TID for further use, until the lifetime of Ks has expired, or until the key Ks is updated.

### I.5.3 Procedures using bootstrapped Security Association

Before communication between the UE and the NAF can start, the UE and the NAF first have to agree whether to use shared keys obtained by means of the GBA. If the UE does not know whether to use GBA with this NAF, it uses the Initiation of Bootstrapping procedure described in clause I.5.1.

Once the UE and the NAF have established that they want to use GBA then every time the UE wants to interact with an NAF the following steps are executed as depicted in figure 1.4.

1. UE starts communication over reference point Ua with the NAF:

- in general, UE and NAF will not yet share the key(s) required to protect the reference point Ua. If they already do (i.e. if a key Ks_NAF for the corresponding key derivation parameter NAF_Id is already available), the UE and the NAF can start to securely communicate right away. If the UE and the NAF do not yet share a key, the UE proceeds as follows:

  - if a key Ks for the selected UICC application is available in the UE, the UE derives the key Ks_NAF from Ks, as specified in clause 1.5.2;

  - if no key Ks for the selected UICC application is available in the UE, the UE first agrees on a new key Ks with the BSF over the reference point Ub, and then proceeds to derive Ks_NAF;

  NOTE 1: If it is not desired by the UE to use the same Ks for the selected UICC application to derive more than one Ks_NAF then the UE should agree on a new key Ks with the BSF over the reference point Ub, and then proceed to derive Ks_NAF;

- if the NAF shares a key with the UE, but the NAF requires an update of that key, e.g. because the key's lifetime has expired or will expire soon, or the key can not meet the NAF local validity condition, it shall send a suitable bootstrapping renegotiation request to the UE, see figure 1.5. If the key's lifetime has expired the protocol used over reference point Ua shall be terminated. The form of this indication depends on the particular protocol used over reference point Ua. If the UE receives a bootstrapping renegotiation request, it starts a run of the protocol over reference point Ub, as specified in clause I.5.2, in order to obtain a new key Ks.

  NOTE 2: To allow for consistent key derivation in BSF and UE, both have to use the same FQDN for derivation (see NOTE 2 of clause I.5.2). For each protocol used over Ua it shall be specified if only cases (1) and (2) of NOTE 2 of clause 1.5.2 are allowed for the NAF or if the protocol used over Ua shall transfer also the FQDN used for key derivation by UE to NAF.

  NOTE 3: If the shared key between UE and NAF is invalid, the NAF can set deletion conditions to the corresponding security association for subsequent removal.

- the UE supplies the B-TID to the NAF, in the form as specified in clause 1.3.2, to allow the NAF to retrieve the corresponding keys from the BSF;

  NOTE 4: The UE may adapt the key material Ks_NAF to the specific needs of the reference point Ua. This adaptation is outside the scope of this specification.

- key management for GBA related keys in the ME (i.e. Ks and Ks_NAF keys):

  - all GBA related keys shall be deleted from the ME when a different UICC or SIM card is inserted. Therefore the ME needs to store in non-volatile memory the last inserted UICC-identity or SIM card identity to be able to compare that with the used UICC-identity or SIM card identity at UICC or SIM card insertion and power on;

  - the key Ks shall be deleted from the ME when the ME is powered down;

  - all other GBA related keys may be deleted from the ME when the ME is powered down. If the ME does not delete the GBA keys at power down then the GBA keys need to be stored in non-volatile memory.

- when a new Ks is agreed over the reference point Ub and a key Ks_NAF, derived from one NAF_Id, is updated, the other keys Ks_NAF, derived from different values NAF_Id, stored on the UE shall not be affected;

NOTE 5: According to the procedures defined in clauses 1.5.2 and 1.5.3, in the UE there is at most one Ks_NAF key stored per NAF-Id.

2. NAF starts communication over reference point Zn with BSF

- The NAF requests key material corresponding to the B-TID supplied by the UE to the NAF over reference point Ua. If the NAF has several FQDNs, which may be used in conjunction with this specification, then the NAF shall transfer in the request over Zn the same FQDN, which was used over Ua (see NOTE 2 on key derivation in this clause);

- The NAF may also request one or more application-specific USSs for the applications, which the request received over Ua from UE may access;

- With the key material request, the NAF shall supply NAF's public hostname that UE has used to access NAF to BSF, and BSF shall be able verify that NAF is authorized to use that hostname;

3. The BSF derives the keys required to protect the protocol used over reference point Ua from the key Ks and the key derivation parameters, as specified in clause 1.5.2, and supplies to NAF the requested key Ks_NAF, as well as the bootstrapping time and the lifetime of that key, and the requested application-specific and potentially NAF group specific USSs if they are available in subscriber's GUSS and if the NAF is authorized to receive the requested USSs. In addition, the BSF shall indicate to the NAF that the subscriber is a 2G subscriber. If the key identified by the B-TID supplied by the NAF is not available at the BSF, the BSF shall indicate this in the reply to the NAF. The NAF then indicates a bootstrapping renegotiation request to the UE.

NOTE 6: The NAF can further set the local validity condition of the Ks_NAF according to the local policy, for example a limitation of reuse times of a Ks_NAF.

NOTE 7: The NAF shall adapt the key material Ks_NAF to the specific needs of the reference point Ua in the same way as the UE did. This adaptation is outside the scope of this specification.

- The BSF may require that one or more application-specific and potentially NAF group specific USSs shall be present in subscriber's GUSS for the NAF (see clause I.4.6). If one or more of these required settings are missing from the GUSS, the BSF shall indicate this in the reply to the NAF.

- The BSF may also send the private user identity (IMPI) and requested USSs to NAF according to the BSF's policy;

- If the BSF or the NAF determined, according to their local policies, that the NAF shall not serve 2G subscribers, the NAF shall terminate the protocol over the reference point Ua.

4. NAF continues with the protocol used over the reference point Ua with the UE.

Once the run of the protocol used over reference point Ua is completed the purpose of bootstrapping is fulfilled as it enabled UE and NAF to use reference point Ua in a secure way.

**Figure I.4: The bootstrapping usage procedure**

**Figure I.5: Bootstrapping renegotiation request**

### I.5.4 Procedure related to service discovery

The UE shall discover the address of the BSF from the IMSI on the SIM. The same discovery procedure as specified in Section 4.5.4. shall be used.

### I.6 TLS Profile

The UE and the BSF shall support the TLS version as specified in RFC 2246 [6] and WAP-219-TLS [30] or higher. Earlier versions are not allowed.

NOTE 1: The management of Root Certificates is out of scope of this Technical Specification.

NOTE 2: Revocation of certificates is out of scope of this Technical Specification. It is noted, however, that choosing short lifetimes for BSF certificates may considerably reduce the risk, in case BSF certificates may ever be compromised.

### I.6.1 Protection mechanisms

The UE shall use the CipherSuite TLS_RSA_WITH_3DES_EDE_CBC_SHA or the CipherSuite TLS_RSA_WITH_AES_128_CBC_SHA.

The BSF shall support the CipherSuite TLS_RSA_WITH_3DES_EDE_CBC_SHA and the CipherSuite TLS_RSA_WITH_AES_128_CBC_SHA.

### I.6.2 Authentication of the BSF

The BSF is authenticated by the Client as specified in WAP-219-TLS [30], which in turn is based on RFC 2246 [6].
The BSF certificate profile shall be based on WAP Certificate and CRL Profile as defined in WAP 211 WAPCert [31].

### I.6.3 Authentication of the UE

The BSF shall not request a certificate in a Server Hello Message from the UE. The BSF shall authenticate the UE as specified in clause I.5.2 of this specification.

### I.6.4 Set-up of Security parameters

The TLS Handshake Protocol negotiates a session, which is identified by a Session ID. The Client and the BSF shall allow for resuming a session. The lifetime of a Session ID is subject to local policies of the UE and the BSF. A recommended lifetime is five minutes. The maximum lifetime specified in [6] is 24 hours.

NOTE: if the BSF adheres to the recommended lifetime the UE can be certain to be able to resume the TLS session in case of bootstrapping re-negotiation.

### Annex J (informative):

### Usage of USS with local policy enforcement in BSF

This Annex describes how the local policy enforcement in the BSF is used between the NAF and the BSF to control the key delivery to the NAF.

### J.1 General

A BSF may have a local policy for zero or more NAFs where the policy for a NAF may state that subscriber's GUSS shall include one or more USSs identified by a GSID. In other words, for a particular NAF the BSF may require that one more USSs shall be present in subscriber's GUSS.
In general, there are two network elements where access control based on some local policy is enforced, i.e. NAF and BSF. Thus two phases with access control based on USSs have to be covered:

1) Access control within NAF for Ua requests: Whether the subscriber is allowed to access the service is decided in the NAF and possibly with the help of USSs. Upon receiving the B-TID from the UE, the NAF fetches the NAF specific shared key (Ks_(ext/int)_NAF) from the BSF, and optionally fetches the USSs, which typically contain NAF specific persistent user identities, and authorization flags. Based on a local policy in the NAF, which may include evaluating the contents of the USS, the NAF decides whether the subscriber is allowed to access the service.

2) Access control within BSF for Zn requests: In certain cases, the operator may wish to implement access control in the BSF. This functionality can be used with any NAF, but the main reason for having this is to implement home operator control in the cases where the NAF is in a visited network.

This Annex describes the access control case within the BSF for Zn requests in more detail.
The following facts should be noted on use of this Annex:

- This access control is completely local to the network of the BSF operator (i.e. home operator of subscriber). This implies that no inter-operator agreement is necessary for implementation of this access control.

- The local policies of the BSF may be based on NAF names and on NAF groups. For the sake of brevity only NAFs are mentioned in the following descriptions.

**J.2 Usage scenarios**

Four different scenarios can be identified how the local policy enforcement in the BSF will work:

1) A NAF does not use USSs (i.e. it does not request a USS from the BSF), and the BSF does not have a local policy for this NAF.

2) A NAF does not use USSs (i.e. it does not request a USS from the BSF), and the BSF does have a local policy for this NAF.

3) A NAF does use USSs (i.e., it requests one or more USSs from the BSF), and the BSF does not have a local policy for this NAF.

4) A NAF does use USSs (i.e., it request one or more USSs from the BSF), and the BSF does have a local policy for this NAF.

The steps executed in each of these scenarios are described in more detail in the following subclauses.
In all scenarios the NAF has received B-TID from the UE over the Ua reference point before the following steps are executed. The steps describe only the procedures that are related to the local policy enforcement in the BSF with respect to USS existence. Also transfer of other information elements not related to this access control is not mentioned (e.g. key lifetime, private subscriber identity).

**J.2.1 Scenario 1: NAF does not use USSs, BSF does not have local policy for NAF**

In this scenario, the NAF does not use USSs and the BSF does not have a local policy for this NAF.

1. The NAF requests the NAF specific shared key(s) from the BSF. It does not include any GSIDs in the request.

2. The BSF locates the subscriber information in its local memory using the B-TID.

3. The BSF checks whether a local policy exists for the NAF - in this scenario there is no local policy, i.e. for this particular NAF, the BSF does not require any USSs (identified by GSIDs) to be present in subscriber's GUSS.

4. The BSF derives the NAF specific shared key(s), and sends them to the NAF in the response.

5. The NAF receives the response with the NAF specific shared key(s).

After receiving the NAF specific shared key(s), the NAFmay perform access control to the service according to its own policies and continues to communicate with the UE.

**J.2.2 Scenario 2: NAF does not use USSs, BSF does have local policy for NAF**

In this scenario, the NAF does not use USSs and the BSF does have a local policy for this NAF.

1. The NAF requests the NAF specific shared key(s) from the BSF. It does not include any GSIDs in the request.

2. The BSF locates the subscriber information in its local memory using the B-TID.

3. The BSF checks whether a local policy exists for the NAF - in this scenario there is a local policy for this NAF, i.e. for this particular NAF, the BSF does not require any USSs (identified by GSIDs) to be present in subscriber's GUSS.
The BSF checks whether all the required USSs identified by GSIDs are present in subscriber's GUSS: If yes, the BSF continues from step 4. If not, the BSF the BSF sends an error message to the NAF.

4. The BSF derives the NAF specific shared key(s), and sends them to the NAF in the response.

5. The NAF receives the response with the NAF specific shared key(s).

After receiving the NAF specific shared key(s), the NAF may perform access control to the service according to its own policies and continues to communicate with the UE.

If the NAF received the "not authorized" error message, it may indicate this to the UE over Ua reference point. In any case, the GAA based security setup will fail between the UE and the NAF since the NAF did not get the NAF specific shared key(s).

**J.2.3 Scenario 3: NAF does use USSs, BSF does not have local policy for NAF**

In this scenario, the NAF does use USSs and the BSF does not have a local policy for this NAF.

1. The NAF requests the NAF specific shared key(s) from the BSF. It includes the GSIDs it needs in the request.

2. The BSF locates the subscriber information in its local memory using the B-TID.

3. The BSF checks whether a local policy exists for the NAF - in this scenario there is no local policy, i.e. BSF does not require USSs identified by GSIDs to be present in subscriber's GUSS.

4. The BSF derives the NAF specific shared key(s), and sends them and the USSs identified by the GSIDs to the NAF in the response. If a particular USS is not found in subscriber's GUSS, or the NAF is not authorized to receive a particular USS, these USSs are omitted from the response.

5. The NAF receives the response with the NAF specific shared key(s), and those requested USSs that were available (i.e., found in subscriber's GUSS and allowed by the BSF to be received by the NAF).

After receiving the NAF specific shared key(s) and the available USSs, the NAF may perform access control to the service according to its own policies (e.g. USS required or not, authorization flags required) and continue to communicate with the UE.

**J.2.4 Scenario 4: NAF does use USSs, BSF does have local policy for NAF**

In this scenario, the NAF does use USSs and the BSF does have a local policy for this NAF.

1. The NAF requests the NAF specific shared key(s) from the BSF. It includes the GSIDs it needs in the request.

2. The BSF locates the subscriber information in its local memory using the B-TID.

3. The BSF checks whether a local policy exists for the NAF - in this scenario there is a local policy for this NAF, i.e., one or more USSs identified by GSIDs shall be present in subscriber's GUSS.

The BSF checks whether all the required USSs identified by GSIDs are present in subscriber's GUSS: If yes, the BSF continues from step 4. If not, the BSF the BSF sends an error message to the NAF.

4. The BSF derives the NAF specific shared key(s), and sends them and the USSs identified by the GSIDs to the NAF in the response. If a particular USS is not found in subscriber's GUSS, or the NAF is not authorized to receive a particular USS, these USSs are omitted from the response.

5. The NAF receives the response with the NAF specific shared key(s), and those requested USSs that were available (i.e., found in subscriber's GUSS and allowed by the BSF to be received by the NAF).

After receiving the NAF specific shared key(s) and the available USSs, the NAF may perform access control to the service according to its own policies (e.g. USS required or not, authorization flags required) and continue to communicate with the UE.

If the NAF received the "not authorized" error message, it may indicate this to the UE over Ua reference point. In any case, the GAA based security setup will fail between the UE and the NAF since the NAF did not get the NAF specific shared key(s).

**Annex K (informative):**

**Change history**

| Change history | | | | | | | | | |
|---|---|---|---|---|---|---|---|---|---|
| **Date** | **TSG #** | **TSG Doc.** | **CR** | **Rev** | **Cat** | **Subject/Comment** | **Old** | **New** | **WI** |
| 2004-03 | SP-23 | SP-040175 | - | - | D | Presented for approval at TSG SA #23 | 1.2.1 | 2.0.0 | |
| 2004-03 | SP-23 | - | - | - | F | Approved and placed under Change Control (Rel-6) | 2.0.0 | 6.0.0 | |
| 2004-06 | SP-24 | SP-040375 | 001 | - | F | Removal of Annex A | 6.0.0 | 6.1.0 | SEC1-SC |
| 2004-06 | SP-24 | SP-040376 | 002 | - | B | NAF remove the security associations | 6.0.0 | 6.1.0 | SEC1-SC |
| 2004-06 | SP-24 | SP-040377 | 003 | 1 | D | Removal of editors notes on Transaction Identifiers | 6.0.0 | 6.1.0 | SEC1-SC |
| 2004-06 | SP-24 | SP-040378 | 004 | 1 | B | Introduction of a UICC-based Generic Bootstrapping Architecture | 6.0.0 | 6.1.0 | SEC1-SC |
| 2004-06 | SP-24 | SP-040379 | 005 | - | D | Editorial corrections to TS 33.220 | 6.0.0 | 6.1.0 | SEC1-SC |
| 2004-06 | SP-24 | SP-040380 | 006 | - | C | Support for NAF in visited network | 6.0.0 | 6.1.0 | SEC1-SC |
| 2004-06 | SP-24 | SP-040381 | 007 | - | C | Editorial changes and clarifications to TS 33.220 | 6.0.0 | 6.1.0 | SEC1-SC |
| 2004-06 | SP-24 | SP-040382 | 008 | - | F | Multiple key derivation mandatory | 6.0.0 | 6.1.0 | SEC1-SC |
| 2004-06 | SP-24 | SP-040383 | 009 | - | C | NAF's public hostname verification | 6.0.0 | 6.1.0 | SEC1-SC |
| 2004-09 | SP-25 | SP-040619 | 010 | - | C | Detailing of key lifetime | 6.1.0 | 6.2.0 | SEC1-SC |
| 2004-09 | SP-25 | SP-040619 | 011 | - | C | Details of USIM/ISIM usage in GAA | 6.1.0 | 6.2.0 | SEC1-SC |
| 2004-09 | SP-25 | SP-040619 | 012 | - | C | Generic Un interface requirements | 6.1.0 | 6.2.0 | SEC1-SC |
| 2004-09 | SP-25 | SP-040619 | 013 | - | F | B-TID generation | 6.1.0 | 6.2.0 | SEC1-SC |
| 2004-09 | SP-25 | SP-040619 | 014 | - | B | Securing Zn reference point | 6.1.0 | 6.2.0 | SEC1-SC |
| 2004-09 | SP-25 | SP-040619 | 015 | - | D | GBA User Security Settings | 6.1.0 | 6.2.0 | SEC1-SC |
| 2004-09 | SP-25 | SP-040619 | 016 | - | C | Creation of GBA_U AV in the BSF | 6.1.0 | 6.2.0 | SEC1-SC |

(continued)

| | Change history | | | | | | | | | |
|---|---|---|---|---|---|---|---|---|---|---|
| **Date** | **TSG #** | **TSG Doc.** | **CR** | **Rev** | **Cat** | **Subject/Comment** | **Old** | **New** | **WI** | |
| 2004-09 | SP-25 | SP-040619 | 017 | - | F | Clarification of the definition of a default type of NAF-specific key | 6.1.0 | 6.2.0 | SEC1-SC | |
| 2004-12 | SP-26 | SP-040855 | 018 | 1 | C | BSF discovery using default domain method | 6.2.0 | 6.3.0 | SEC1-SC | |
| 2004-12 | SP-26 | SP-040855 | 019 | 1 | C | Local validity condition set by NAF | 6.2.0 | 6.3.0 | SEC1-SC | |
| 2004-12 | SP-26 | SP-040855 | 020 | 3 | C | GBA User Security Settings (GUSS) usage in GAA and Introduction of NAF groups | 6.2.0 | 6.3.0 | SEC1-SC | |
| 2004-12 | SP-28 | SP-040855 | 021 | 2 | C | Details of USIM/ISIM selection in GAA | 6.2.0 | 6.3.0 | SEC1-SC | |
| 2004-12 | SP-26 | SP-040855 | 023 | - | B | TLS profile for securing Zn' reference point | 6.2.0 | 6.3.0 | SEC1-SC | |
| 2004-12 | SP-26 | SP-040855 | 025 | 2 | F | Optimization of the GBA_U key derivation procedure | 6.2.0 | 6.3.0 | SEC1-SC | |
| 2004-12 | SP-26 | SP-040855 | 027 | 2 | F | Requirement on ME capabilities for GBA_U | 6.2.0 | 6.3.0 | SEC1-SC | |
| 2004-12 | SP-26 | SP-040855 | 034 | 1 | D | Adding a note about replay protection | 6.2.0 | 6.3.0 | SEC1-SC | |
| 2004-12 | SP-26 | SP-040855 | 035 | 1 | C | Complete the MAC modification for GBA_U | 6.2.0 | 6.3.0 | SEC1-SC | |
| 2004-12 | SP-26 | SP-040855 | 036 | 1 | F | Removal of unnecessary editor's notes | 6.2.0 | 6.3.0 | SEC1-SC | |
| 2004-12 | SP-26 | SP-040855 | 038 | 1 | C | Fetching of one AV only on each Zh run between BSF and HSS | 6.2.0 | 6.3.0 | SEC1-SC | |
| 2004-12 | SP-26 | SP-040855 | 039 | 1 | B | Clean up of TS 33.220 | 6.2.0 | 6.3.0 | SEC1-SC | |
| 2004-12 | SP-26 | SP-040855 | 040 | 1 | F | New key management for ME based GBA keys | 6.2.0 | 6.3.0 | SEC1-SC | |
| 2004-12 | SP-28 | SP-040855 | 041 | 1 | C | Key derivation function | 6.2.0 | 6.3.0 | SEC1-SC | |
| 2004-12 | SP-26 | SP-040855 | 042 | 1 | D | Re-negotation of keys | 6.2.0 | 6.3.0 | SEC1-SC | |
| 2004-12 | SP-26 | SP-040855 | 043 | 1 | C | No GUSS/USS update procedures in Release-6 | 6.2.0 | 6.3.0 | GBA-SSC | |
| 2004-12 | SP-26 | SP-040855 | 044 | 1 | C | Clarify the number of NAF-specific keys stored in the UE per NAF-Id | 6.2.0 | 6.3.0 | SEC1-SC | |
| 2005-03 | SP-27 | SP-040139 | 045 | 1 | F | Key derivation function: character encoding | 6.3.0 | 6.4.0 | SEC1-SC | |

(continued)

| | Change history | | | | | | | | |
|---|---|---|---|---|---|---|---|---|---|
| Date | TSG # | TSG Doc. | CR | Rev | Cat | Subject/Comment | Old | New | WI |
| 2005-03 | SP-27 | SP-040139 | 047 | 1 | D | Bootstrapping timestamp | 6.3.0 | 6.4.0 | SEC1-SC |
| 2005-03 | SP-27 | SP-040139 | 048 | - | F | Storage of 8-TID in GBA_U NAF Derivation procedure | 6.3.0 | 6.4.0 | SEC1-SC |
| 2005-06 | SP-28 | SP-050262 | 050 | 1 | F | Usage of USS for local policy enforcement In BSF | 6.4.0 | 6.5.0 | SEC1-SC |
| 2005-06 | SP-28 | SP-050262 | 051 | 1 | F | Correcting figure 4.4 | 6.4.0 | 6.5.0 | SEC1-SC |
| 2005-06 | SP-28 | SP-050263 | 052 | - | B | GBA User Security Settings (GUSS) transfer optimisation | 6.4.0 | 7.0.0 | SEC1-SC |
| 2005-09 | SP-29 | SP-050553 | 0054 | - | A | Clarification of anonymous access to NAF in GBA | 7.0.0 | 7.1.0 | SEC1-SC |
| 2005-09 | SP-29 | SP-050554 | 0056 | - | A | Removing IMPI from USS | 7.0.0 | 7.1.0 | SEC1-SC |
| 2005-09 | SP-29 | SP-050572 | 0057 | - | C | Informative annex on usage of USS for local policy enforcement in BSF | 7.0.0 | 7.2.0 | SEC1-SC |
| 2005-09 | SP-29 | SP-050557 | 0059 | - | A | Removing duplication of text relating to BSF addressing | 7.0.0 | 7.1.0 | SEC-SC1 |
| 2005-09 | SP-29 | SP-050555 | 0061 | - | A | Clarification of lifetime of derived keys | 7.0.0 | 7.1.0 | SEC1-SC |
| 2005-09 | SP-29 | SP-050575 | 0062 | - | B | Introduction of key selection mechanism | 7.0.0 | 7.2.0 | SEC1-SC |
| 2005-09 | SP-29 | SP-050556 | 0064 | - | A | Addition of the Dz Interface for multiple HSS deployments | 7.0.0 | 7.1.0 | SEC1-SC |
| 2005-09 | SP-29 | SP-050565 | 0066 | - | A | Removing requirement to send authentication vectors In batches | 7.0.0 | 7.1.0 | GBA |
| 2005-09 | SP-29 | SP-050551 | 0068 | - | A | Clarification concerning input parameter encoding for GBA_U NAF derivation procedure | 7.0.0 | 7.1.0 | SEC1-SC |
| 2005-09 | SP-29 | SP-050577 | 0069 | 1 | B | Normative annex on 2G GBA | 7.0.0 | 7.1.0 | 2G GBA |
| 2005-09 | SP-29 | SP-050552 | 0071 | - | A | Providing Ua-security protocol based key separation | 7.0.0 | 7.1.0 | SEC1-SC |
| 2005-10 | post SP-29 | - | - | - | - | Editorial change to align annexes between Release 6 and Release 7 based on CRs at SP-29 | 7.1.0 | 7.1.1 | |

**APPENDIX C**

**Contents**

| | | | |
|---|---|---|---|
| 1 | | Scope | 4 |
| 2 | | References | 7 |
| 3 | | Definitions, symbols and abbreviations | 7 |
| 3.1 | | Definitions | 7 |
| 3.2 | | Symbols | 8 |
| 3.3 | | Abbreviations | 9 |
| 4 | | GBA Bootstrapping Zh interface | 10 |
| 4.1 | | Generic bootstrapping network architecture | 10 |
| 4.2 | | Protocol Zh between BSF and HSS | 10 |
| 5 | | GAA Application Zn interface | 14 |
| 5.1 | | Applications' network architecture | 14 |
| 5.2 | | Protocol Zn between NAF and BSF | 14 |
| 6 | | Diameter application for Zh and Zn interfaces | 17 |
| 6.1 | | Command-Code values. | 17 |
| 6.2 | | Result-Code AVP values | 17 |
| 6.2.1 | | Success | 17 |
| 6.2.2 | | Permanent failures | 18 |
| 6.2.2.1 | | DIAMETER_ERROR_IMPI_UNKNOWN (5401) | 18 |
| 6.2.2.2 | | DIAMETER_ERROR_NOT_AUTHORIZED (5402) | 18 |
| 6.2.2.3 | | DIAMETER_ERROR_TRANSACTION_IDENTIFIER_INVALID (5403) | 18 |
| 6.2.2.4 | | Void | 18 |
| 6.2.2.5 | | Void | 18 |
| 6.2.2.6 | | Void | 18 |
| 6.2.2.7 | | Void | 18 |
| 6.3 | | AVPs | 19 |
| 6.3.1 | | Common AVPs | 19 |
| 6.3.1.1 | | GBA-UserSecSettingsAVP | 19 |
| 6.3.1.2 | | Transaction-Identifier AVP | 19 |
| 6.3.1.3 | | NAF-Hostname | 19 |
| 6.3.1.4 | | GAA-Service-Identifier AVP | 20 |
| 6.3.1.5 | | Key-ExpiryTime AVP | 20 |
| 6.3.1.6 | | ME-Key-Material AVP | 20 |
| 6.3.1.7 | | UICC-Key-Material AVP | 20 |
| 6.3.1.8 | | GBA_U-Awareness-Indicator | 20 |
| 6.3.1.9 | | BootstrapInfoCreationTime AVP | 20 |
| 6.3.1.10 | | GUSS-Timestamp AVP | 20 |
| 6.4 | | User identity to HSS resolution | 20 |
| 7 | | Use of namespaces | 22 |
| 7.1 | | AVP codes | 22 |
| 7.2 | | Experimental-Result-Code AVP values | 22 |
| 7.3 | | Command Code values | .22 |
| **Annex A (normative):** | | **GBA-UserSecSettings XML definition** | **23** |
| **Annex B (normative):** | | **GAA Service Type Codes** | **26** |
| **Annex C (normative):** | | **GAA Authorization flag codes** | **26** |
| **Annex D (informative):** | | **Change history** | **27** |

**Foreword**

This Technical Specification has been produced by the 3rd Generation Partnership Project (3GPP).

The contents of the present document are subject to continuing work within the TSG and may change following formal TSG approval. Should the TSG modify the contents of the present document, it will be re-released by the TSG with an identifying change of release date and an increase in version number as follows:

Version x.y.z

where:

x     the first digit:

1 presented to TSG for information;
2 presented to TSG for approval;
3 or greater indicates TSG approved document under change control.

y     the second digit is incremented for all changes of substance, i.e. technical enhancements, corrections, updates, etc.

z     the third digit is incremented when editorial only changes have been incorporated in the document.

**1 Scope**

The present stage 3 specification defines the Diameter based implementation for bootstrapping Zh interface (BSF-HSS) and Dz interface (BSF-SLF) for HSS resolution for the BSF, and GAA Application Zn interface (BSF-NAF) in Generic Authentication Architecture (GAA). The definition contains procedures, message contents and coding. The procedures for bootstrapping and usage of bootstrapped security association are defined in 3GPP TS 33.220 [5].

This specification is a part of the Generic Authentication Architecture (GAA) specification series.

The diameter based implementation is based on re-usage of Cx interface Multimedia-Auth-Request/Answer messages originally between CSCF and HSS. These messages are defined in 3GPP TS 29.229 [3]. The 3GPP IMS mobility management uses the same definitions between CSCF and HSS. The present document defines how the defined messages are used with the bootstrapping and GAA application procedures (e.g. subscriber certificates) and the application logic that is needed in GAA network elements (BSF, HSS, and NAF).

Figure 1.1 depicts the relationships of these specifications to the other specifications.

**Figure 1.1: Relationships to other specifications**

Figure 1.2 provides an informal overall quick introduction to the whole signalling procedures in GAA system. The important identifiers are marked bold and optional data items are italicised. The Ub and Ua interfaces, not defined in this TS , are simplified.

Bold=Important Identity.   *Italic=optional items. Ub and Ua interfaces are simplified.*

**Figure 1.2: The whole signalling procedure in GAA system**

## 2 References

The following documents contain provisions that, through reference in this text, constitute provisions of the present document.

- References are either specific (identified by date of publication, edition number, version number, etc.) or non-specific.

- For a specific reference, subsequent revisions do not apply.

- For a non-specific reference, the latest version applies. In the case of a reference to a 3GPP document (including a GSM document), a non-specific reference implicitly refers to the latest version of that document *in the same Release as the present document.*

[1] IETF RFC 3588, "Diameter Base Protocol".

[2] 3GPP TS 29.228: "IP Multimedia (IM) Subsystem Cx and Dx Interfaces; Signalling flows and message contents".

[3] 3GPP TS 29.229: "Cx and Dx interfaces based on the Diameter protocol".

[4] 3GPP TR 33.919 "Generic Authentication Architecture (GAA); System Description (rel-6)".

[5] 3GPP TS 33.220 "Generic Authentication Architecture (GAA); Generic Bootstrapping Architecture (rel-6)".

[6] 3GPP TS 33.221 "Generic Authentication Architecture (GAA); Support for Subscriber Certificates (rel-6)".

[7] 3GPP TS 24.109: "Bootstrapping interface (Ub) and Network application function interface (Ua);Protocol details".

[8] 3GPP TS 29.230: "Diameter applications; 3GPP specific codes and identifiers (rel-6)"

[9] IETF RFC 3589: "Diameter Command Codes for Third Generation Partnership Project (3GPP) Release 5".

[10] 3GPP TS 23.008: "Organisation of subscriber data"

[11] 3GPP TS 33.222: "Generic Authentication Architecture (GAA); Access to network application functions using secure hypertext transfer protocol (HTTPS) (rel-6)".

[12] 3GPP TS 23.228: "IP Multimedia Subsystem (IMS); Stage 2"

**3 Definitions, symbols and abbreviations**

**3.1 Definitions**

For the purposes of the present document, the terms and definitions given in 3GPP TS 23.008 [10], 3GPP TR 33.919 [4], 3GPP TS 33.220 [5] apply with following additions.

**Bootstrapping information** (Bootstrapped data) in a BSF consists of a bootstrapping transaction identifier (B-TID), a key material (Ks), the key lifetime (expiry time), the boostrapinfo creation time, the IMPI and the GUSS (if received from HSS) with BSF control information. Each bootstrapping procedure creates a bootstrapped data entity with B-TID as retrieval key..

**GAA application** is an application that uses the security association created by GBA Bootstrapping procedure.

**GAA service** is an operator specific end user service that uses the security association created by GAA Bootstrapping procedure. GAA services are identified by **GAA Service Identifiers.** A GAA service is implemented using some standardised or propriatary GAA application defined by GAA application type.

**NAF specific Bootstrapping information** transferred from a BSF to a NAF contains NAF and its service specific parts from bootstrapped data and needed key information derived from the bootstrapped data.

**Service/Application.** The term service is used here in its common meaning. A service is something that a MNO offers to subscribers. GAA Services are identified by GAA Service Identifier (GSID). In stage 2 documents ([4], [5], [6] and [11]) the term application is used in the same meaning i.e. MNOs offer applications to subscribers. There is a reason to avoid the usage of the term application here. The application is an already reserved term in Diameter. In Diameter applications are identified by Application Identifiers.

**3.2 Symbols**

For the purposes of the present document, the terms and definitions given in 3GPP TS 23.008 [10].

**3.3 Abbreviations**

For the purposes of the present document, the following abbreviations apply:

| | |
|---|---|
| AK | Anonymity Key |
| AKA | Authentication and Key Agreement |
| AUTN | Authentication token |
| AV | Authentication Vector. 3GPP AV=[RAND,AUTN,XRES,CK,IK]. |
| AVP | Attribute-Value-Pair in Diameter messages. |
| BIA | BootstrappingInfo-Answer message |
| BIR | BootstrappingInfo-Request message |
| BS | BootStrapping Procedure |
| BSF | Bootstrapping server functionality BSF is hosted in a network element under the control of an MNO. |
| B-TID | Bootstrapping Transaction Identifier |
| CA | Certificate Authority |
| CK | Confidential Key |
| FQDN | Full Qualified Domain Name in URI (e.g. http://FQDN:80) |
| GAA | Generic Authentication Architecture |
| GBA | Generic Bootstrapping Architecture |
| GSID | GAA Service Identifier |
| GUSS | GBA User Security Settings |

| HSS | Home Subscriber System |
|---|---|
| IK | Integrity Key |
| IMPI | IP Multimedia Private Identity |
| IMPU | IP Multimedia Public Identity |
| Ks | Key Material |
| Ks_ext_NAF | MEbased key for a specific NAF |
| MNO | Mobile network operator |
| NAF | Operator-controlled network application function functionality. NAF is hosted in a network element under the control of an MNO. |
| RAND | Random challenge in authentication |
| REQ | In Diameter header indicates that the message is a Request. |
| SCTP | Stream Control Transmission Protocol |
| SLF | Subscription Location Function |
| SSC | Subscriber Certificate Procedure |
| Ua | UE-NAF interface for GAA applications |
| Ub | UE-BSF interface for bootstrapping |
| UE | User Equipment |
| Ks_int_NAF | UICC based key for a specific NAF |
| USS | User Security Settings (a part of GUSS) |
| XRES | Expected response in authentication |
| Zh | BSF-HSS interface for bootstrapping procedure |
| Zn | BSF-NAF interface for GAA applications. |

**4 GBA Bootstrapping Zh interface**

**4.1 Generic bootstrapping network architecture**

The network architecture of the Bootstrapping procedure is presented in Figure 4.1. The interface Ub (bootstrapping) is defined in 3GPP TS 24.109 [7] and the interface Zh in this specification.

**Figure 4.1: Network architecture of bootstrapping procedure**

The protocol stack of the Zh interface in Bootstrapping procedure is presented in Figure 4.2. The Diameter Base protocol is defined in [1] and the Diameter application in 3GPP TS 29.229 [3]. The requirements for Zh interface are defined in 3GPP TS 33.220 [5].

**Figure 4.2: Protocol stack of Zh interface**

**4.2 Protocol Zh between BSF and HSS**

The requirements for Zh interface are defined in 3GPP TS 33.220 [5].

The Bootstrapping Zh interface performs the retrieval of an authentication vector and possibly GBA User Security Settings from the HSS. The overall Bootstrapping procedure is depicted in Figure 4.3. The basic procedure is:

A) A UE starts the bootstrapping procedure by protocol Ub with a BSF giving the IMPI of the user (see 3GPP TS 24.109 [7]).

B) The BSF starts protocol Zh with user's HSS

- The BSF requests user's authentication vector and GBA User Security Settings(GUSS) corresponding to the IMPI.

- The HSS supplies to the BSF the requested authentication vector and GUSS (if any).

  NOTE: If there is more than one HSS deployed within the network, the BSF may have to contact the SLF using the Dz interface prior to sending the request for information to the HSS (see section 6.4).

C) The BSF continues the protocol Ub with the UE (see 3GPP TS 24.109 [7]).

Figure 4.3: The GBA bootstrapping procedure

The steps of the bootstrapping procedure in Figure 4.3 are:

**Step 1**
The BSF shall send the following Bootstrapping-Request to the HSS in the format of Multimedia-Auth-Request (MAR) message. The content of the message is given below in the same format as in 3GPP TS 29.229 [3]. The curly brackets indicate mandatory AVPs. The square brackets indicate optional AVPs. The "address of" refers to the Fully Qualified Host Name (FQDN).

```
<Multimedia-Auth-Request> ::=<Diameter Header: 303, REQ, PXY, 16777221 >
```

```
             < Session-Id >
             { Vendor-Specific-Application-Id }
             { Auth-Session-State } ; NO_STATE_MAINTAINED
             { Origin-Host } ; Address of BSF
             { Origin-Realm } ; Realm of BSF
             { Destination-Realm } ; Realm of HSS
             [ Destination-Host ] ; Address of the HSS
             { User-Name } ; IMPI from UE
             [ GUSS-Timestamp ] ; Timestamp of GUSS in BSF
           * [ AVP ]
           * [ Proxy-Info ]
           * [ Route-Record ]
```

The content of mandatory Vendor-Specific-Application-ID according [1] is:

```
<Vendor-Specific-Application-Id>::=<AVP header: 260>
                   1* [Vendor-Id] ; 3GPP is 10415
                   0*1 {Auth-Application-Id} ; 16777221
                   0*1 {Acct-Application-Id} ; Omitted
```

When determining the value of Destination-Host AVP the BSF can use redirector function (SLF) to resolve the address of the HSS if needed (see 3GPP TS 29.229 [3]). The BSF shall set the Auth-Session-State AVP to NO_STATE MAINTAINED to inform that the HSS does not need to maintain any status information for this session according 3GPP TS 29.229 [3]. The User-name is the IMS Private User Identity (IMPI) as required in 3GPP TS 29.228 [2]. If the BSF supports the GUSS timestamp mechanism and has local copy of the GUSS, which has a timestamp, the BSF may include the GUSS-Timestamp AVP. In this case the GUSS-Timestamp AVP shall contain the timestamp from subscriber's GUSS. Otherwise the GUSS-Timestamp AVP shall not be present.

**Step 2**

When the HSS receives the MAR message, the HSS shall derive the user Authentication Vector (AV) information according the IMPI and populates it into SIP-Auth-Data AVP as defined in 3GPP TS 29.229 [3]. If GUSS exists for the IMPI, the HSS shall do one of the following:

**1.** If the HSS supports the GUSS timestamp mechanism and received the GUSS-Timestamp AVP in MAR message then it shall compare the timestamp of the GUSS in the HSS with the received timestamp.

- If timestamps are equal, then it shall populate the GBA-UserSecSettings AVP with static string "GUSS TIMESTAMP EQUAL".

- If the GUSS-Timestamp AVP was not received, or timestamps are not equal, then it shall populate the GBA-UserSecSettings AVP with the GUSS.

**2.** If the HSS does not support GUSS timestamp mechanism, it shall populate the GBA-UserSecSettings AVP with the GUSS.

The MAR/MAA sequence in the Zh interface must not change possible status information of the possible simultaneously ongoing IMS MM application sessions in the HSS.
If the User-Name (IMPI) from the BSF is totally unknown to the HSS, the error situation 5401 is raised.

**Step 3**

The HSS shall send the following Bootstrapping-Answer message in the format of Multimedia-Auth-Answer (MAA) message back to the BSF.

```
 < Multimedia-Auth-Answer> ::= < Diameter Header: 303, PXY, 16777221 >
             < Session-Id >
             { Vendor-Specific-Application-Id }
             [ Result-Code ]
             [ Experimental-Result]
```

```
{ Auth-Session-State } ; NO_STATE_MAINTAINED
{ Origin-Host } ; Address of HSS
{ Origin-Realm } ; Realm of HSS
 [ User-Name ] ; IMPI
* [ SIP-Auth-Data-Item ]
 [ GBA-UserSecSettings ] ; GUSS
* [ AVP ]
* [ Proxy-Info ]
* [ Route-Record ]
```

The HSS shall set the mandatory Auth-Session-State AVP to NO_STATE_MAINTAINED because the HSS does not maintain any state information about this session and the BSF does not need to send any session termination request 3GPP TS 29.229 [3]. The User-name AVP (IMPI) may be sent back for checking. The required authentication vectors are sent in the SIP-Auth-Data-Items AVP. The security settings of user's all GAA applications are sent in GBA-UserSecSettings AVP.

**Step 4.**

When the BSF receives the MAA message, the BSF generates the needed key material (Ks) from confidential key (CK) and integrity key (IK) as described in 3GPP TS 33.220 [5] and stores temporarily the tuple <IMPI,Ks,GBA-UserSecSettings> for further use in GAA applications. The rest of the bootstrapping procedure in Ub interface will later add also the Bootstrapping Transaction Identifier (B-TID) to that tuple as key and the key lifetime (expiry time). If the BSF sent the GUSS-Timestamp AVP in step 1, and if the GBA-UserSecSettings AVP contains a static string "GUSS TIMESTAMP EQUAL", then the local copy of the GUSS in the BSF shall be preserved. If the GBA-User-SecSettings AVP was not present in the MAA message, the local copy of the GUSS shall be deleted. If the GBA-UserSecSettings AVP contains a new GUSS, the local copy of the GUSS shall be deleted, and the new GUSS shall be stored in the BSF.

**5 GAA Application Zn interface**

**5.1 Applications' network architecture**

The network architecture of the GAA applications procedure is presented in Figure 5.1. The 3GPP GAA applications are listed in annex B. Different GAA applications may implement the Ua interface in different way. The Zn interface is defined in this specification.

**Figure 5.1: Network architecture of GAA application**

The protocol stack of the Zn interface for GAA applications is presented in Figure 5.2. The diameter Base protocol is defined in [1] and the Diameter application in 3GPP TS 29.229 [3]. The requirements for Zn interface are defined in 3GPP TS 33.220 [5].

**Figure 5.2: Protocol stack of Zn interface**

**5.2 Protocol Zn between NAF and BSF**

The requirements for Zn interface are defined in 3GPP TS 33.220 [5].

The protocol Zn retrieves the key material and possibly user security settings data by NAF from BSF. After UE is authenticated with the BSF, every time the UE wants to interact with an NAF the following steps are executed as depicted in Figure 5.3. The basic procedure is:

A) The UE starts protocol Ua (see 3GPP TS 33.220 [5])

- In general, the UE and the NAF will not yet share the key(s) required to protect protocol Ua. If they already do, there is no need for the NAF to invoke protocol Zn.

- It is assumed that UE supplies sufficient information to NAF, i.e. the Bootstrapping Transaction Identifier (B-TID), to allow the NAF to retrieve specific key material (e.g. Ks_NAF in the case of GBA_ME, and Ks_ext_NAF or Ks_int_NAF or both in the case of GBA_U) from BSF.

- The UE derives the keys required to protect protocol Ua from the key material.

B) The NAF starts protocol Zn with BSF

- The NAF requests NAF specific key material corresponding to the information supplied by the UE to the NAF (i.e. the bootstrapping transaction identifier) in the start of protocol Ua.
- The BSF generates and supplies to the NAF the requested NAF specific key material, the expiry time, the bootstrapinfo creation time, and the appropriate User Security Settings defined for received application identifiers.

C) The NAF continues protocol Ua with the UE (see 3GPP TS 33.221 [6])

Once the run of protocol Ua is completed the purpose of bootstrapping is fulfilled as it enabled UE and NAF to run protocol Ua in a secure way.

The common GAA application procedure is presented in Figure 5.3.

**Figure 5.3: The GAA application procedure**

The steps of the GAA application procedure in Figure 5.3 are:

Step 1

The NAF shall send a Bootstrapping-Info-Request message (BIR) to the BSF. The content of the message is given here in the same format as in 3GPP TS 29.229 [3]. The curly brackets indicate mandatory AVPs. The square brackets indicate optional AVP. The address refers to the Fully Qualified Host Name (FQDN).

```
< Bootstrapping-Info-Request> ::=<Diameter Header: 310, REQ, PXY, 16777220 >
                < Session-Id >
                { Vendor-Specific-Application-Id }
                { Origin-Host } ; Address of NAF
                { Origin-Realm } ; Realm of NAF
                { Destination-Realm } ; Realm of BSF
                [ Destination-Host ] ; Address of the BSF
                * [ GAA-Service-Identifier ] Service identifiers
                { Transaction-Identifier } B-TID
                { NAF-Hostname } ; FQDN of NAF as seen by UE
                [ GBA_U-Awareness-Indicator ] ; GBA_U awareness of the NAF
                * [ AVP ]
                * [ Proxy-Info ]
                * [ Route-Record ]
```

The content of Vendor-Specific-Application-ID according [1] is:

```
<Vendor-Specific-Application-Id>::-<AVP header: 260>
                1* [Vendor-Id] ; 3GPP is 10415
                0*1 {Auth-Application-Id} ; 16777220
                0*1 {Acct-Application-Id} ; Omitted
```

The Destination-Realm AVP is set to subscriber's BSF. The address of the BSF is extracted from the B-TID.

NOTE: In the case where the subscriber has contacted a NAF that is in a visited network, the NAF contacts the subscriber's home BSF through a Diameter-Proxy (D-Proxy) that is located in the same network as the NAF. The local BSF and the D-Proxy may be co-located. See 3GPP TS 33.220 [6].

The NAF indicates the GAA services for which the information is retrieved by GAA-Service-Identifier AVPs.

The Bootstrapping Transaction Identifier defines the earlier bootstrapping procedure execution.

Step 2

In the successful case the BSF has a tuple <B-TID,IMPI,Ks, Key lifetime, Bootstrapinfo creation time, GBA-User-SecSettings> identified by Bootstrapping Transaction Identifier (B-TID). When the BSF receives the request it checks the existence and validity of the tuple for given B-TID. If checking fails the BSF sends an Answer message with Experimental-Result set to indicate the error type 5403. If the tuple for B-TID exists, but is expired, error type 5403 is also send to indicate needs for renewal of the boostrapping procedure. In successful case the Result-Code is set to 2xxx as defined in [1].

The BSF derives the key material for the ME (i.e., Ks_NAF in the case of GBA_ME, and Ks_ext_NAF in the case of GBA_U) and possibly the key material for the UICC (i.e., Ks_int_NAF in the case of GBA_U) according to the B-TID and packs them into ME-Key-Material AVP and possible UICC-Key-Material AVP. The ME-Key-Material contains Ks_(ext)_NAF and the UICC-key-Material contains the Ks_int_NAF key. The BSF select correct user's Security Settings according the request's GAA-Service-Identifier AVP to GBA-UserSecSettings AVP. If NAF grouping is used by the operator and there are one or more USSs corresponding to the requested GSID, then also the nafGroup attribute of USS is checked. If the NAF has sent a GAA-Service-Identifier that does not have corresponding user's security settings, and the BSF is locally configured to reject those requests from the NAF, then the error 5402 is raised. If the NAF has sent a GAA-Service-Identifier that have corresponding user's security settings, but the BSF is locally configured to reject those from that NAF, then the error 5402 is raised too.

The NAF may be addressed from the UE with different FQDNs. The BSF shall check if this NAF-Hostname is allowed to be used for the NAF. If the NAF identified by its Origin-Host AVP is configured in the BSF not to be authorized to use the given NAF-Hostname, the BSF may raise the error situation 5402. The BSF may also be configured so that a certain NAF is not authorized to use a certain GAA-Service-Identifier. This situation may be also indicated by error code 5402.

Step 3

After that the BSF shall send a Bootstrapping-Info-Answer message (BIA) back to the NAF.

```
< Boostrapping-Info-Answer> ::= < Diameter Header: 310, PXY, 16777220 >
                  < Session-Id >
                  { Vendor-Specific-Application-Id }
                  [ Result-Code ]
                  [ Experimental-Result]
                  { Origin-Host } Address of BSF
                  { Origin-Realm } ; Realm of BSF
                  [ User-Name ] ; IMPI
                  [ ME-Key-Material ] ; Required
                  [ UICC-Key-Material ] Conditional
                  [ Key-ExpiryTime ] ; Time of expiry
                  [ BootstrapInfoCreationTime ] ; Bootstrapinfo creation time
                  [ GBA-UserSecSettings ] ; Selected USSs
                  * [ AVP ]
                  * [ Proxy-Info ]
                  * [ Route-Record ]
```

The BSF may or may not send the User-name AVP (IMPI) according its configuration.

The mandatory common key material with the ME (Ks_NAF or Ks_ext_NAF) is sent in the ME-Key-Material AVP.

The common key material with the UICC (Ks_int_NAF) is optionally sent in the UICC-Key-Material AVP only if the "uiccType" tag in bsfInfo from the HSS is set to "GBA_U".

The Key-ExpiryTime AVP contains the expiry time of the Bootstrapping information in the BSF according its configuration. The expiry time is represented according the Diameter Time data format in seconds that have passed since 0h on January 1, 1900 UTC. If a special key lifetime value is given in the "lifeTime" tag inside the bsfInfo from the HSS in bootstraping procedure, it is used instead of the BSF default configuration value when the expiry time is calculated.

The BootstrapInfoCreationTime AVP contains the bootstrapinfo creation time, i.e., creation time of the Bootstrapping information in the BSF. The bootstrapinfo creation time is represented in seconds that have passed since January 1, 1900 00:00:00.000 UTC.

The BSF selects the appropriate User Security Settings (if any) to the GBA-UserSecSettings AVP from stored GAA-UserSecSettings in Bootstrapping information according the GBA-Service-Identifier AVPs in the request message.

The procedure in the NAF when the BIA is received is described in 3GPP TS 33.220 [5], 3GPP TS 33.222 [11] and optionally in GAA service type specific TSs.

## 6 Diameter application for Zh and Zn interfaces

### 6.1 Command-Code values

The Zn interface assigns new Command-Code 310.

The messages in Zh interface use the same Command-Code value 303 as Multimedia-Auth-Request/Answer messages defined in 3GPP TS 29.229 [3] for Cx interface.

### 6.2 Result-Code AVP values

This section defines new result code values that must be supported by all Diameter implementations that conform to this specification. When one of the result codes defined here is included in a response, it shall be inside an Experimental-Result AVP and Result-Code AVP shall be absent.

#### 6.2.1 Success

Errors that fall within the Success category are used to inform a peer that a request has been successfully completed.

The success category result codes defined in 3GPP TS 29.229 [3] for Cx interface are useless and therefore not required in Zh and Zn interfaces.

#### 6.2.2 Permanent failures

Errors that fall within the Permanent Failures category are used to inform the peer that the request failed, and should not be attempted again.

The Permanent failure category result codes defined in 3GPP TS 29.229 [3] for Cx interface are useless and therefore not required in Zh and Zn interfaces.

#### 6.2.2.1 DIAMETER_ERROR_IMPI_UNKNOWN (5401)

A message was received by the HSS for an IMPI that is unknown.

#### 6.2.2.2 DIAMETER_ERROR_NOT_AUTHORIZED (5402)

A message was received by the BSF which the BSF can not authorize. In this case the NAF should indicate to the UE that the service is not allowed.

#### 6.2.2.3 DIAMETER_ERROR_TRANSACTION_IDENTIFIER_INVALID (5403)

A message was received by the BSF for an invalid (e.g. unknown or expired) Bootstrapping Transaction Identifier (B-TID). In this case the NAF should request the UE to bootstrap again.

**6.2.2.4 Void**

**6.2.2.5 Void**

**6.2.2.6 Void**

**6.2.2.7 Void**

**6.3 AVPs**

The AVPs defined in 3GPP TS 29.229 [3] for 3GPP IMS Cx interface Multimedia-Auth-Request/Answer messages are used as they are.

The following table describes the additional new Diameter AVPs defined for the Zh and Zn interface protocol, their AVP Code values, types, possible flag values and whether or not the AVP may be encrypted. The Vendor-Id header of all AVPs defined in this specification shall be set to 3GPP (10415).

**Table 6.1: New Diameter Multimedia Application AVPs**

| Attribute Name | AVP Code | Section defined | Value Type | Must | May | Should not | Must not | May Encr. |
|---|---|---|---|---|---|---|---|---|
| GBA-UserSecSettings | 400 | 6.3.1.1 | OctedString | M, V | | | | No |
| Transaction-Identifier | 401 | 6.3.1.2 | OctetString | M, V | | | | No |
| NAF-Hostname | 402 | 6.3.1.3 | OctetString | M, V | | | | No |
| GAA-Service-Identifier | 403 | 6.3.1.4 | OctedString | M, V | | | | No |
| Key-ExpiryTime | 404 | 6.3.1.5 | Time | M, V | | | | No |
| ME-Key-Material | 405 | 6.3.1.6 | OctedString | M, V | | | | No |
| UICC-Key-Material | 406 | 6.3.1.7 | OctedString | M, V | | | | No |
| GBA_U-Awareness-Indicator | 407 | 6.3.1.8 | Enumerated | M, V | | | | No |
| BootstrapInfoCreationTime | 408 | 6.3.1.9 | Time | M, V | | | | No |
| GUSS-Timestamp | 409 | 6.3.1.10 | Time | V | | | M | No |
| NOTE 1: The AVP header bit denoted as 'M', indicates whether support of the AVP is required. The AVP header bit denoted as 'V', indicates whether the optional Vendor-ID field is present in the AVP header. | | | | | | | | |

**6.3.1 Common AVPs**

**6.3.1.1 GBA-UserSecSettings AVP**

The GAA-UserSecSettings AVP (AVP code 400) is of type OctetString. If transmitted on the Zh interface it contains GBA user security settings (GUSS). If transmitted on the the Zh interface it contains the relevant USSs only. The content of GBA-UserSecSettings AVP is a XML document which is defined in annex A.

**6.3.1.2 Transaction-Identifier AVP**

The Transaction-Identifier AVP (AVP code 401) is of type OctetString. This AVP contains the Bootstrapping Transcation Identifier (B-TID).

**6.3.1.3 NAF-Hostname**

The NAF-Hostname AVP (AVP code 402) is of type OctetString. This AVP contains the full qualified domain name (FQDN) of the NAF that the UE uses. This may be a different domain name that with which the BSF knows the NAF.

### 6.3.1.4 GAA-Service-Identifier AVP

The GAA-Service-identifier AVP (AVP code 403) is of type OctedString. This AVP informs a BSF about the support of a GAA-service by the NAF. According this AVP the BSF can select the right service's user security settings.

For 3GPP standardized services (e.g., PKI portal), the GAA-Service-Identifier (GSID) shall be in the range 0 to 999999, and the currently standardized values for GSID shall be the GAA-Application-Type-Code of the particular service. The GAA Service Type Codes for 3GPP standardized services are defined in Annex B.

NOTE: In the future, standardized GSID values that are different than the GAA Service Type Code may be standardised (e.g. to differentiate between the services "MBMS streaming" and "MBMS download").

Examples: The GSID is "1" for all PKI-portals, and "4" for all MBMS services.

### 6.3.1.5 Key-ExpiryTime AVP

The Key-ExpiryTime AVP (AVP code 404) is of type Time. This AVP informs the NAF about the expiry time of the key.

### 6.3.1.6 ME-Key-Material AVP

The required ME-Key-Material AVP (AVP code 405) is of type OctetString. The NAF is sharing this key material (Ks_NAF in the case of GBA_ME or Ks_ext_NAF in the case of GBA_U) with the Mobile Equipment (ME).

### 6.3.1.7 UICC-Key-Material AVP

The condition UICC-Key-Material AVP (AVP code 406) is of type OctetString. The NAF may share this key material (Ks_int_NAF in the case of GBA_U) with a security element (e.g. USIM, ISIM, etc..) in the UICC. Only some GAA applications use this conditional AVP.

### 6.3.1.8 GBA_U-Awareness-Indicator

The conditional GBA_U-Awareness-Indicator AVP (AVP code 407) is of type Enumerated. The following values are defined.

NO (0) The sending node is not GBA_U aware

YES(1) The sending node is GBA_U aware

The default value is 0 i.e. absence of this AVP indicates that the sending node is not GBA_U aware.

### 6.3.1.9 BootstrapInfoCreationTime AVP

The BootstrapInfoCreationTime AVP (AVP code 408) is of type Time. This AVP informs the NAF about the bootstrapinfo cration time of the key.

### 6.3.1.10 GUSS-Timestamp AVP

The GUSS-Timestamp AVP (AVP code 409) is of type Time. If transmitted this AVP informs the HSS about the timestamp of the GUSS stored in the BSF.

### 6.4 User identity to HSS resolution

The User identity to HSS resolution mechanism enables the BSF to find the address of the HSS that holds the subscriber data for a given subscriber when multiple and separately addressable HSSs have been deployed by the network operator. The resolution mechanism is not required in networks that utilise a single HSS or when an BSF is configured to use pre-defined HSS.

The resolution mechanism is based on the Subscription Locator Function (SLF) and is equivalent to that described for the Cx/Dx interface described in 3GPP TS 23.228 [12]. The BSF accesses the subscription locator via the Dz interface. The Dz interface is always used in conjunction with the Zh interface. The Dz interface is based on Diameter. Its functionality is implemented by means of the routing mechanism provided by an enhanced Diameter redirect agent, which is able to extract the Subscriber identity from the received requests.

To get the HSS address the BSF sends to the SLF the Zh requests aimed for the HSS. On receipt of the HSS address from the SLF, the BSF shall send the Zh requests to the HSS. The BSF may store the HSS address and use it in further requests associated to the same Subscriber.

In networks where the use of the user identity to HSS resolution mechanism is required and the BSF is not configured to use predefined HSS, each BSF shall be configured with the address/name of the SLF implementing this resolution mechanism.

## 7 Use of namespaces

This clause contains the namespaces that have either been created in this 3GPP specification, or in 3GPP specification 3GPP TS 29.229 [3] or the values assigned to existing namespaces managed by IANA.

### 7.1 AVP codes

This specification reserves the 3GPP vendor specific values 10415:400-499 and actually assign values 10415:400-408 for the GAA from the 3GPP AVP Code namespace for 3GPP Diameter applications ([8]). The 3GPP vendor specific AVP code space is managed by 3GPP CN4. See section 6 for the assignment of the namespace in this specification.

Besides the Diameter Base Protocol AVPs [1] this specification reuses the following AVPs from 3GPP TS 29.229 [3]: Authentication-Session-State, User-Name, SIP-Auth-Data-Item and SIP-Number-Auth-Items.

### 7.2 Experimental-Result-Code AVP values

This specification reserves Experimental-Result-Code AVP values 10415:2401-2409 and 10415:5401-5409. See section 6.2.

### 7.3 Command Code values

Only Command-Codes 310 and 303 from 3GPP TS 29.229 [3] is used in this specification.

This specification reuses only the Command-Code value, not the content of the original specification. The AVPs, that are defined required in TS 29.229 [3], but are not needed in Zh or Zn interfaces, are removed and are therefore not required in Zh or Zn interface messages. All new AVPs for GAA are defined optional although they may be mandatory in GAA viewpoint.

This specification does not assign new command codes to the 3GPP TS 29.229 [3].

**Annex A (normative):**

**GBA-UserSecSettings XML definition**

This annex contains the XML schema definition for an XML document carrying the GBA User Security Settings inside GBA-UserSecSettings AVP in Zh and Zn interface.

```
<?xml version="1.0" encoding="UTF-8"?>
<xs:schema targetNamespace="guss-schema-of-3gpp-gaa"
    xmlns:tns="guss-schema-of-3gpp-gaa"
    xmlns:xs="http://www.w3.org/2001/XMLSchema"
    elementFormDefault="qualified"
    attributeFormDefault="unqualified">

  <!-- This import brings in the XML language attribute xml:lang-->
  <xs:import namespace="http://www.w3.org/XML/1998/namespace"
      schemaLocation="http://www.w3.org/2001/xml.xsd"/>

  <!-- The whole user's GBA specific data set  -->
  <xs:complexType name="guss">
    <xs:sequence>
      <xs:element ref="bsfInfo" minOccurs="0"/>
      <xs:element ref="ussList"/>
      <xs:element name="timestamp" type="xs:dateTime" minOccurs="0"/>
<xs:any processContents="lax" minOccurs="0" maxOccurs="unbounded"/>
    </xs:sequence>
    <xs:attribute name="id" type="xs:string"/>
  </xs:complexType>

  <!-- BSF specific information element -->
  <xs:complexType name="bsfInfo">
    <xs:sequence>
      <xs:element name="uiccType"  type="xs:string"  minOccurs="0" />
      <xs:element name="lifeTime"  type="xs:integer" minOccurs="0" />
      <xs:any processContents="lax" minOccurs="0" maxOccurs="unbounded"/>
    </xs:sequence>
  </xs:complexType>

  <!--List of all users individual User Security Settings -->
  <xs:complexType name="ussList">
    <xs:sequence minOccurs="0" maxOccurs="unbounded">
      <xs:element ref="uss"/>
      <xs:any processContents="lax" minOccurs="0" maxOccurs="unbounded"/>
    </xs:sequence>
  </xs:complexType>

  <!-- User Security Setting data -->
  <xs:complexType name="uss">
    <xs:sequence>
      <xs:element ref="uids"/>
      <xs:element ref="flags"/>
      <xs:element name="keyChoice" type="xs:string" minOccurs="0" />
      <xs:any processContents="lax" minOccurs="0" maxOccurs="unbounded"/>
    </xs:sequence>
    <xs:attribute name="id"    use="required" type="xs:string"/>
    <xs:attribute name="type" use="required" type="xs:int"/>
    <xs:attribute name="nafGroup" use="optional" type="xs:string"/>
  </xs:complexType>

  <!-- User Public Identities for authentication -->
  <xs:complexType name="uids">
```

```
    <xs:sequence minOccurs="1" maxOccurs="unbounded">
      <xs:element name="uid"  type="xs:string"/>
      <xs:any processContents="lax" minOccurs="0" maxOccurs="unbounded"/>
    </xs:sequence>
  </xs:complexType>

  <!-- GAA Application type specific Authorization flag codes -->
  <xs:complexType name="flags">
    <xs:sequence minOccurs="0" maxOccurs="unbounded">
      <xs:element name="flag"  type="xs:int"/>
      <xs:any processContents="lax" minOccurs="0" maxOccurs="unbounded"/>
    </xs:sequence>
  </xs:complexType>

</xs:schema>
```

Note: The <xs:any> elements within the complex types allow for compatible extensions in future releases.

The values are:

- The value of the attribute "id" in the element "guss" is the same as user's IM Private Identity (IMPI) used in User-Name AVP.

- The value of the element "timestamp" in the element "guss" is the same type as GUSS-Timstamp used in GUSS-Timestamp AVP and indicates the timestamp of the GUSS. Timestamp value shall be expressed in UTC form, indicated by a time zone designator "Z" immediately following the time portion of the value.

- The value of the attribute "id" in the element "uss" is the same as service identifier (GSID) used in GAA-Service-Identifier AVP.

- The value of the element "uiccType" in the element "bsfInfo" is:

  GBA to indicate the basic case, or
  GBA_U to indicate that generation of Ks_int_NAF is also required in the BSF.
  The default value is GBA.

- The value of the element "lifeTime" in the element "bstInfo" indicates a user specific key lifetime (duration in seconds). If the lifeTime element is missing the default value in the BSF is used.

- The value of attribute "type" in the element "uss" is GAA service type code defined in annex B.

- The value of attribute "nafGroup" in the element "uss" is an operator internal group designator for a NAF group the USS is valid for. If this attribute is missing then only the attribute "id" is used for selection of this element.

- Values of the element "uid" are user's public authentication identities from the HSS.

- Values of element "flag" are user's authorization flag codes from the HSS for GAA service type indicated in the type attribute in the parent uss element. If an authorization flag exist the NAF have permission to give the corresponding service, otherwise not

- The value of the element "keyChoice" in the element "uss" is "ME-based-key", i.e., Ks_NAF or Ks_ext_NAF shall be used, or "UICC-based-key", i.e., Ks_int_NAF shall be used or "ME-UICC-based-keys", i.e., Ks_ext_NAF or Ks_int_NAF can be used. The value of this attribute inicates to the NAF, which key shall be used. If the keyChoice attribute is missing, then as a default the "ME-based-key" shall be used by the NAF.

In the following illustrative example the values are italised and underlined. The content of one User Security Setting tag is boxed.

```
<guss id="358500004836551@ims.mnc050.mcc358.3gppnetwork.org">
     <bsfInfo>
          <lifeTime>86400</lifeTime>
     </bsfInfo>


<ussList>
     <uss id="1" type="1">
          <uids>
               <uid>tel:358504836551</uid>
               <uid>lauri.laitinen@nokia.com</uid>
               ...
          </uids>
          <flags>
               <flag>1</flag>
               ...
          </flags>
     </uss>
          ...
     </ussList>
</guss>
```

The above GAA User Security Settings example for user "358500004836551@ ims.mnc050,mcc358.3gppnetwork.org" defines that for PKI-Portal (GAA service type code is 1) services are allowed for user identities "tel:358504836551" and "lauri.laitinen@nokia.com" and authentication is allowed (flag 1 exists) but non-repudiation is not allowed (flag 2 is missing) to NAFs that provide the GAA service identified by "1" GAA Service Identifier. The BSF shall not generate UICC-Ks, because uiccType is missing. A special key lifetime defines that athe duration after which the key expires is 86400 seconds

**Annex B (normative): GAA Service Type Codes**

The GAA Service Type Code values are used in GAA to indicate interpretation, coding and usage of GAA service type specific data.
For examples each GAA service type may have their own set of authorization flags. Meaning and coding of these flags are defined in Annex C. There may also be proprietary GAA service types with their own definitions in the future.
Code values 0 - 999999 are reserved for standardized GAA service types.
The following values are defined for standardized GAA service types with 3GPP specification:

 0 Unspecific service
 1 PKI-Portal
 2 Authentication Proxy
 3 Presence
 4 MBMS

Default value is 0. An unspecific service may or may not have user security settings containing or not a list of public identities. An unspecific service cannot have specified authorization flags or other service type specific data.

**Annex C (normative): GAA Authorization flag codes**

For GAA services which have a defined set of special authorization flag codes the following rule holds: The service specified by the GAA authorization flag codes is allowed for a user only if user's user security setting contains that flag.
The following standardised GAA service types that are listed in previous annex B have the following special authorization flag codes:

**PKI-Portal (1)**

 1 Authentication allowed

2 Non-repudiation allowed

**Annex D (informative):**

**Change history**

| Change history | | | | | | | | |
|---|---|---|---|---|---|---|---|---|
| **Date** | **TSG#** | **TSG Doc.** | **CR** | **Rev** | **Subject/Comment** | **Old** | **New** |
| 2004-09 | CN#25 | NP-040410 | | | Version 2.0.0 approved in CN#25 | 2.0.0 | 6.0.0 |
| 2004-12 | CN#26 | NP-040580 | 001 | | Authorisation Flag Code Annex | 6.0.0 | 6.1.0 |
| 2004-12 | | | 002 | | Finalization of GAA Service Identifier | | |
| 2004-12 | | | 003 | 1 | BSF control information (bsfInfo) tag to GUSS | | |
| 2004-12 | | | 005 | | Structure to GAA Service Indentifier | | |
| 2004-12 | | | 006 | 1 | Finalisation of terminology | | |
| 2004-12 | | | 008 | 1 | Command code 310 Zn messages | | |
| 2004-12 | | | 009 | | Introduction of NAF groups | | |
| 2005-01 | | | | | Fix Word problem | 6.1.0 | 6.1.1 |
| 2005-03 | CN#27 | NP-050041 | 010 | | GAA Error Codes | 6.1.1 | 6.2.0 |
| | | | 011 | | Only one AV from HSS to BSF | | |
| | | | 012 | | Clarification of LifeTime/ExpiryTime terminology | | |
| | | | 013 | 1 | Application Identifiers to Z-interfaces | | |
| | | | 014 | 1 | Modification of key lifetime material | | |
| 2005-06 | CT#28 | CP-050090 | 0015 | | XML extensibility | 6.2.0 | 6.3.0 |
| | | | 0016 | 1 | Remove BSF from visited network | | |
| 2005-09 | CT#29 | CP-050300 | 0017 | 1 | Correction for GBA with multiple HSS's | 6.3.0 | 6.4.0 |
| | | | 0021 | | Key naming alignment with TS 33.220 | | |
| 2005-09 | CT#29 | CP-050317 | 0019 | 1 | Key indication In USS | 6.4.0 | 7.0.0 |
| | | | 0020 | 2 | Addition of GUSS timestamp to Zh reference point | | |

**Claims**

1. An apparatus, comprising:

   a bootstrapping server function, BSF, (104) configured to
   transmit a first message to a home subscriber server, HSS, (106), wherein the first message includes a timestamp parameter corresponding to a generic bootstrapping architecture user security settings, GUSS, stored in the BSF, for a determination whether the timestamp parameter corresponding to the GUSS stored in the BSF equals with a timestamp parameter corresponding to a GUSS stored in the home subscriber server, HSS, and
   receive a second message from the HSS excluding the GUSS of the HSS when the timestamp parameters of the GUSS of the BSF and the HSS are equal.

2. An apparatus comprising:

   a home subscriber server, HSS, (106) configured to
   receive a first message from a bootstrapping server function, BSF, (104), wherein the first message includes a timestamp parameter corresponding to a generic bootstrapping architecture user security settings, GUSS, stored in the bootstrapping server function, BSF, (104),

compare the timestamp parameter corresponding to the GUSS stored in the BSF with a timestamp parameter corresponding to a GUSS stored in the HSS, and

transmit a second message back to the BSF excluding the GUSS of the HSS when the timestamp parameters of the GUSS of the BSF and the HSS are equal.

3. The apparatus as recited in claim 1 or 2, wherein the second message includes the GUSS and the corresponding timestamp parameter when the timestamp parameter of the GUSS of the BSF and the HSS are not equal.

4. The apparatus as recited in any preceding claim, wherein the timestamp parameter that corresponds to a particular GUSS is part of the same GUSS.

5. The apparatus as recited in claim 3 when dependent on claim 1, wherein the BSF (104) is configured to receive the second message, the GUSS, and the timestamp parameter associated with the GUSS from the HSS (106), and to update the GUSS and the timestamp parameter from the HSS.

6. The apparatus as recited in any preceding claim, wherein the first message comprises a request for an authentication vector, AV.

7. The apparatus as recited in claim 2, wherein the HSS (106) is configured to assign the timestamp parameters to the GUSS.

8. The apparatus as recited in any of claims 2 and 7 or any of claims 3, 4 and 6 when dependent on claim 2, wherein the HSS (106) is configured to change the timestamp parameter for the GUSS when the data of that GUSS has been modified.

9. The apparatus as recited in claim 7, wherein the HSS (106) is configured to assign the timestamp parameters for the GUSS in a monotonically increasing sequence or a monotonically decreasing sequence.

10. The apparatus as recited in claim 7, wherein the HSS (106) is configured to assign the timestamp parameters for the GUSS as a hash or part of the hash of a particular instance of the GUSS of the BSF (104) and the HSS.

11. The apparatus as recited in any of claims 1 and 5 or any of claims 3, 4 or 6 when dependent on claim 1, wherein the BSF (104) is configured to store the timestamp parameter in a different numeric or alphanumeric form from the timestamp parameter stored in the HSS (106).

12. The apparatus as recited in any of claims 1, 5 and 11, or any of claims 3, 4 or 6 when dependent on claim 1, wherein the BSF (104) is configured to transmit the timestamp parameter in different numeric or alphanumeric form from the timestamp parameter of the HSS (106).

13. The apparatus as recited in claim 7, wherein when the GUSS is first created, the timestamp is initialized to a numeric value or to a value indicative of time and/or date indicated by a clock in the HSS (106).

14. The apparatus as recited in claim 7, wherein each time the GUSS is modified, the GUSS becomes a new version, and the timestamp is incremented or decremented by 1 or is changed to a current time and/or date indicated by a clock in the HSS (106).

15. The apparatus as recited in claim 7, wherein the GUSS is assigned a timestamp value that is a hash or part of that hash of a particular instance of the GUSS.

16. A method, comprising:

transmitting a first message from a bootstrapping server function, BSF, (104) to a home subscriber server, HSS, (106) wherein the first message includes a timestamp parameter corresponding to a generic bootstrapping architecture user security settings, GUSS, stored in the BSF, for a determination whether the timestamp parameter corresponding to the GUSS stored in the BSF equals with a timestamp parameter corresponding to a GUSS stored in the HSS; and

receiving a second message from the HSS at the BSF excluding the GUSS of the HSS when the timestamp parameters of the GUSS of the BSF and the HSS are equal.

17. The method as recited in claim 16, further comprising:

receiving the second message at the BSF including the GUSS and the corresponding timestamp parameter from the HSS (106) when the timestamp parameter of the GUSS of the BSF (104) and the HSS are not equal.

18. The method as recited in claim 16 or 17, further comprising:

receiving at the BSF the second message, the GUSS, and the timestamp parameter associated with the GUSS from the HSS (106); and
updating the GUSS and the timestamp parameter from the HSS in the BSF (104).

19. The method as recited in any of claims 16 to 18, wherein sending of the first message comprises sending a request for an authentication vector, AV.

20. The method as recited in any of claims 16 to 19, wherein the assigning of the timestamp parameters for the GUSS is performed at the HSS in a monotonically increasing sequence or a monotonically decreasing sequence.

21. The method as recited in any of claims 16 to 19, wherein the assigning of the timestamp parameters for the GUSS is performed at the HSS as a hash or part of the hash of a particular instance of the GUSS of the BSF (104) and the HSS (106).

22. The method as recited in any of claims 16 to 21, further comprising:

storing the timestamp parameter of the BSF (104) at the BSF (104) in a different numeric or alphanumeric form from the timestamp parameter stored in the HSS (106).

23. The method as recited in any of claims 16 to 22, further comprising:

transmitting the timestamp parameter of the BSF (104) and timestamp parameter of the HSS (106) in different numeric or alphanumeric forms.

24. The method as recited in any of claims 16 to 24, further comprising:

changing at the HSS (106) the transmitted different numeric or alphanumeric form of the timestamp parameter back to its original form.

25. The method as recited in any of claims 16 to 24, further comprising:

assigning at the HSS (106) a value to the timestamp in a monotonically increasing sequence or a monotonically decreasing sequence.

26. The method as recited in any of claims 16 to 25, further comprising:

initializing at the HSS (106) the timestamp, when the GUSS is first created, to a numeric value or to a time and/or date indicated by a clock in the HSS (106).

27. The method as recited in any of claims 16 to 26, further comprising:

incrementing or decrementing at the HSS the timestamp by 1 each time the GUSS is modified and therefore becomes a new version.

28. The method as recited in any of claims 16 to 27, further comprising:

changing at the HSS (106) the timestamp to a current time and/or date of the timestamp each time the GUSS is modified.

**29.** The method as recited in any of claims 16 to 28, further comprising:

assigning at the HSS (106) the GUSS a timestamp value that is a hash or part of that hash of a particular instance of the GUSS.

**30.** A method comprising:

receiving at a home subscriber server, HSS, (106) a first message from a bootstrapping server function, BSF, (104), wherein the first message includes a timestamp parameter corresponding to a generic bootstrapping architecture user security settings, GUSS, stored in a bootstrapping server function, BSF, (104), comparing the timestamp parameter corresponding to the GUSS stored in the BSF with a timestamp parameter corresponding to a GUSS stored in the HSS, and transmitting a second message back to the BSF excluding the GUSS of the HSS when the timestamp parameters of the GUSS of the BSF and the HSS are equal.

**31.** The method as recited in claim 30, further comprising:

transmitting the second message to the BSF including the GUSS and the corresponding timestamp parameter from the HSS (106) when the timestamp parameter of the GUSS of the BSF (104) and the HSS are not equal.

**32.** The method as recited in claim 30 or 31, wherein the first message comprises a request for an authentication vector, AV.

**33.** The method as recited in any of claims 30 to 32, wherein the HSS (106) assigns the timestamp parameters to the GUSS.

**34.** The method as recited in any of claims 30 to 33, wherein the HSS (106) changes the timestamp parameter for the GUSS when the data of that GUSS has been modified.

**35.** The method as recited in any of claims 30 to 34, wherein the HSS (106) assigns the timestamp parameters for the GUSS in a monotonically increasing sequence or a monotonically decreasing sequence.

**36.** The method as recited in any of claims 30 to 35, wherein the HSS (106) assigns the timestamp parameters for the GUSS as a hash or part of the hash of a particular instance of the GUSS of the BSF (104) and the HSS.

**37.** A computer program embodied within a computer readable medium, the computer program being configured to control a processor to perform the steps of any of claims 16 to 36.

**38.** A communications system, comprising:

a network application function, NAF; a user equipment configured to communicate with the NAF and to transmit a request for authentication information; a bootstrapping server function, BSF, (104) configured to receive the request and to transmit a first message, wherein the message includes a timestamp parameter corresponding to a generic bootstrapping architecture user security settings, GUSS, stored in the BSF; and a home subscriber server, HSS, (106) configured to receive the first message, to compare the timestamp parameter corresponding to the GUSS stored in the BSF with a timestamp parameter corresponding to a GUSS stored in the HSS, and to transmit a second message back to the BSF excluding the GUSS of the HSS when the timestamp parameters of the GUSS of the BSF and the HSS are equal.

**Patentansprüche**

**1.** Gerät, das Folgendes aufweist:

ein Bootstrapping Server Function, BSF, (104), der zu Folgendem ausgelegt ist:

Übertragen einer ersten Nachricht an einen Home Subscriber Server, HSS, (106), wobei die erste Nachricht einen Zeitstempel-Parameter aufweist, der einer Generic Bootstrapping Architecture von benutzerseitigen Sicherheitseinstellungen, GUSS, die in dem BSF gespeichert sind, entspricht, um zu bestimmen, ob der Zeitstempel-Parameter, der den GUSS, die in dem BSF gespeichert sind, entspricht, gleich einem Zeitstempel-Parameter, der einer GUSS, die auf dem Home Subscriber Server, HSS, gespeichert ist, entspricht, ist, und

Empfangen einer zweiten Nachricht von dem HSS, ohne die GUSS des HSS, wenn die Zeitstempel-Parameter der GUSS des BSF und des HSS gleich sind.

2. Gerät, das Folgendes aufweist:

einen Home Subscriber Server, HSS, (106), der zu Folgendem ausgelegt ist:

Empfangen einer ersten Nachricht von einem Bootstrapping Server Function, BSF, (104), wobei die erste Nachricht einen Zeitstempel-Parameter aufweist, der einer Generic Bootstrapping Architecture von benutzerseitigen Sicherheitseinstellungen, GUSS, die in dem Bootstrapping Server Function, BSF, (104) gespeichert sind, entspricht,

Vergleichen des Zeitstempel-Parameters, der den GUSS, die in dem BSF gespeichert sind, entspricht, mit einem Zeitstempel-Parameter, der einer GUSS, die auf dem HSS gespeichert ist, entspricht, und

Übertragen einer zweiten Nachricht an das BSF zurück, ohne die GUSS des HSS, wenn die Zeitstempel-Parameter der GUSS des BSF und des HSS gleich sind.

3. Gerät nach Anspruch 1 oder 2, wobei die zweite Nachricht die GUSS und den entsprechenden Zeitstempel-Parameter aufweist, wenn die Zeitstempel-Parameter der GUSS des BSF und des HSS nicht gleich sind.

4. Gerät nach einem der vorhergehenden Ansprüche, wobei der Zeitstempel-Parameter, der einer bestimmten GUSS entspricht, Teil derselben GUSS ist.

5. Gerät nach Anspruch 3 in Abhängigkeit von Anspruch 1, wobei der BSF (104) dazu ausgelegt ist, die zweite Nachricht, die GUSS und den Zeitstempel-Parameter, der den GUSS zugeordnet ist, von dem HSS (106) zu empfangen und die GUSS und den Zeitstempel-Parameter des HSS zu aktualisieren.

6. Gerät nach einem der vorhergehenden Ansprüche, wobei die erste Nachricht eine Anfrage nach einem Authentifizierungsvektor, AV, aufweist.

7. Gerät nach Anspruch 2, wobei der HSS (106) dazu ausgelegt ist, die Zeitstempel-Parameter den GUSS zuzuordnen.

8. Gerät nach Anspruch 2 und 7, oder nach Anspruch 3, 4 und 6, in Abhängigkeit von Anspruch 2, wobei der HSS (106) dazu ausgelegt ist, den Zeitstempel-Parameter der GUSS zu ändern, wenn die Daten dieser GUSS verändert wurden.

9. Gerät nach Anspruch 7, wobei der HSS (106) dazu ausgelegt ist, die Zeitstempel-Parameter den GUSS in einer monoton steigenden Sequenz oder einer monoton fallenden Sequenz zuzuordnen.

10. Gerät nach Anspruch 7, wobei der HSS (106) dazu ausgelegt ist, die Zeitstempel-Parameter den GUSS als ein Hash oder als Teil des Hash einer bestimmten Instanz der GUSS des BSF (104) und des HSS zuzuordnen.

11. Gerät nach Anspruch 1 und 5, oder nach Anspruch 3, 4 und 6, in Abhängigkeit von Anspruch 1, wobei der BSF (104) dazu ausgelegt ist, den Zeitstempel-Parameter in einer von dem Zeitstempel-Parameter, der auf dem HSS (106) gespeichert ist, unterschiedlichen numerischen oder alphanumerischen Form zu speichern.

12. Gerät nach Anspruch 1, 5 und 11, oder nach Anspruch 3, 4 oder 6, in Abhängigkeit von Anspruch 1, wobei der BSF (104) dazu ausgelegt ist, den Zeitstempel-Parameter in einer von dem Zeitstempel-Parameter des HSS (106) unterschiedlichen numerischen oder alphanumerischen Form zu übertragen.

13. Gerät nach Anspruch 7, wobei der Zeitstempel bei der anfänglichen Erstellung der GUSS auf einen numerischen Wert oder einen Wert, der Zeit und/oder Datum, die bzw. das von der Uhr auf dem HSS (106) angegeben wird, anzeigt, initialisiert ist.

**14.** Gerät nach Anspruch 7, wobei die GUSS bei jeder Änderung der GUSS eine neue Version wird und der Zeitstempel um 1 inkrementiert oder dekrementiert wird oder auf eine aktuelle Zeit und/oder ein aktuelles Datum, die bzw. das von der Uhr auf dem HSS (106) angegeben wird, geändert wird.

**15.** Gerät nach Anspruch 7, wobei den GUSS ein Zeitstempel-Wert, der ein Hash oder Teil des Hash einer bestimmten Instanz der GUSS ist, zugeordnet ist.

**16.** Verfahren, das Folgendes aufweist:

Übertragen einer ersten Nachricht von einem Bootstrapping Server Function, BSF, (104) an einen Home Subscriber Server, HSS, (106), wobei die erste Nachricht einen Zeitstempel-Parameter aufweist, der einer Generic Bootstrapping Architecture von benutzerseitigen Sicherheitseinstellungen, GUSS, die in dem BSF gespeichert sind, entspricht, um zu bestimmen, ob der Zeitstempel-Parameter, der den GUSS, die in dem BSF gespeichert ist, entspricht, gleich einem Zeitstempel-Parameter, der einer GUSS, die auf dem HSS, gespeichert ist, ist; und
Empfangen einer zweiten Nachricht von dem HSS auf dem BSF, ohne die GUSS des HSS, wenn die Zeitstempel-Parameter der GUSS des BSF und des HSS gleich sind.

**17.** Verfahren nach Anspruch 16, das ferner Folgendes aufweist:

Empfangen der zweiten Nachricht mit den GUSS und dem entsprechenden Zeitstempel-Parameter von dem HSS (106) an dem BSF, wenn die Zeitstempel-Parameter der GUSS des BSF (104) und des HSS nicht gleich sind.

**18.** Verfahren nach Anspruch 16 oder 17, das ferner Folgendes aufweist:

Empfangen der zweiten Nachricht, der GUSS und des Zeitstempel-Parameters, der den GUSS zugeordnet ist, von dem HSS (106) an dem BSF; und
Aktualisieren der GUSS und des Zeitstempel-Parameters des HSS in dem BSF (104).

**19.** Verfahren nach einem der Ansprüche 16 bis 18, wobei das Senden der ersten Nachricht das Senden einer Anfrage nach einem Authentifizierungsvektor, AV, aufweist.

**20.** Verfahren nach einem der Ansprüche 16 bis 19, wobei das Zuordnen der Zeitstempel-Parameter zu den GUSS in einer monoton steigenden Sequenz oder einer monoton fallenden Sequenz auf dem HSS durchgeführt wird.

**21.** Verfahren nach einem der Ansprüche 16 bis 19, wobei das Zuordnen der Zeitstempel-Parameter zu den GUSS als ein Hash oder als Teil des Hash einer bestimmten Instanz der GUSS des BSF (104) und des HSS (106) auf dem HSS durchgeführt wird.

**22.** Verfahren nach einem der Ansprüche 16 bis 21, das ferner Folgendes aufweist:

Speichern des Zeitstempel-Parameters des BSF (104) auf dem BSF (104) in einer von dem Zeitstempel-Parameter, der auf den HSS (106) gespeichert ist, unterschiedlichen numerischen oder alphanumerischen Form.

**23.** Verfahren nach einem der Ansprüche 16 bis 22, das ferner Folgendes aufweist:

Übertragen des Zeitstempel-Parameters des BSF (104) und des Zeitstempel-Parameters des HSS (106) in unterschiedlichen numerischen und alphanumerischen Formen.

**24.** Verfahren nach einem der Ansprüche 16 bis 24, das ferner Folgendes aufweist:

Ändern der übertragenen unterschiedlichen numerischen oder alphanumerischen Form von dem Zeitstempel-Parameter zurück zu ihrer ursprünglichen Form auf dem HSS (106).

**25.** Verfahren nach einem der Ansprüche 16 bis 24, das ferner Folgendes aufweist:

Zuordnen eines Wertes zu dem Zeitstempel in einer monoton steigenden Sequenz oder einer monoton fallenden Sequenz auf dem HSS (106).

26. Verfahren nach einem der Ansprüche 16 bis 25, das ferner Folgendes aufweist:

Initialisieren des Zeitstempels auf dem HSS (106), bei der anfänglichen Erstellung der GUSS, auf einen numerischen Wert oder eine Zeit und/oder ein Datum, die bzw. das von der Uhr auf dem HSS (106) angegeben wird.

27. Verfahren nach einem der Ansprüche 16 bis 26, das ferner Folgendes aufweist:

Inkrementieren oder Dekrementieren des Zeitstempels um 1 auf dem HSS, jedes Mal, wenn die GUSS verändert wird und somit eine neue Version ist.

28. Verfahren nach einem der Ansprüche 16 bis 27, das ferner Folgendes aufweist:

Ändern des Zeitstempels auf dem HSS (106) auf eine aktuelle Zeit und/oder ein aktuelles Datum des Zeitstempels, jedes Mal, wenn die GUSS verändert wird.

29. Verfahren nach einem der Ansprüche 16 bis 28, das ferner Folgendes aufweist:

Zuordnen eines Zeitstempel-Werts, der ein Hash oder Teil des Hash einer bestimmten Instanz der GUSS ist, zu den GUSS auf dem HSS (106).

30. Verfahren, das Folgendes umfasst:

Empfangen einer ersten Nachricht von einem Bootstrapping Server Function, BSF, (104) auf einem Home Subscriber Server, HSS, (106), wobei die erste Nachricht einen Zeitstempel-Parameter aufweist, der einer Generic Bootstrapping Architecture von benutzerseitigen Sicherheitseinstellungen, GUSS, die in einem Bootstrapping Server Function, BSF, (104) gespeichert sind, entspricht,
Vergleichen des Zeitstempel-Parameters, der den GUSS, die in dem BSF gespeichert sind, entspricht, mit einem Zeitstempel-Parameter, der einer GUSS, die auf dem HSS gespeichert ist, entspricht, und
Übertragen einer zweiten Nachricht an das BSF zurück, ohne die GUSS des HSS, wenn die Zeitstempel-Parameter der GUSS des BSF und des HSS gleich sind.

31. Verfahren nach Anspruch 30, das ferner Folgendes aufweist:

Übertragen der zweiten Nachricht mit den GUSS und dem entsprechenden Zeitstempel-Parameter von dem HSS (106) an den BSF, wenn die Zeitstempel-Parameter der GUSS des BSF (104) und des HSS nicht gleich sind.

32. Verfahren nach Anspruch 30 oder 31, wobei die erste Nachricht eine Anfrage nach einem Authentifizierungsvektor, AV, aufweist.

33. Verfahren nach einem der Ansprüche 30 bis 32, wobei der HSS (106) die Zeitstempel-Parameter den GUSS zuordnet.

34. Verfahren nach einem der Ansprüche 30 bis 33, wobei der HSS (106) den Zeitstempel-Parameter für die GUSS ändert, wenn die Daten der GUSS verändert wurden.

35. Verfahren nach einem der Ansprüche 30 bis 34, wobei der HSS (106) die Zeitstempel-Parameter den GUSS in einer monoton steigenden Sequenz oder einer monoton fallenden Sequenz zuordnet.

36. Verfahren nach einem der Ansprüche 30 bis 35, wobei der HSS (106) die Zeitstempel-Parameter den GUSS als ein Hash oder als Teil des Hash einer bestimmten Instanz der GUSS des BSF (104) und des HSS zuordnet.

37. Computerprogramm, das in einem computerlesbaren Medium realisiert ist, wobei das Computerprogramm dazu ausgelegt ist, einen Prozessor zu steuern, um die Schritte nach einem der Ansprüche 16 bis 36 auszuführen.

38. Kommunikationssystem, das Folgendes aufweist:

ein Network Application Function, NAF;
ein Benutzergerät, das dazu ausgelegt ist, mit dem NAF zu kommunizieren und eine Anfrage nach Authentifizierungsinformationen zu übertragen;

ein Bootstrapping Server Function, BSF, (104), der dazu ausgelegt ist, die Anfrage zu empfangen und eine erste Nachricht zu übertragen, wobei die Nachricht einen Zeitstempel-Parameter aufweist, der einer Generic Bootstrapping Architecture von benutzerseitigen Sicherheitseinstellungen, GUSS, die in dem BSF gespeichert sind, entspricht; und

einen Home Subscriber Server, HSS, (106), der dazu ausgelegt ist, die erste Nachricht zu empfangen, den Zeitstempel-Parameter, der den GUSS, die in dem BSF gespeichert sind, entspricht, mit einem Zeitstempel-Parameter, der einer GUSS, die auf dem HSS gespeichert ist, entspricht, zu vergleichen, und eine zweite Nachricht, ohne die GUSS des HSS, an den BSF zurück zu übertragen, wenn die Zeitstempel-Parameter der GUSS des BSF und des HSS gleich sind.

## Revendications

1. Appareil, comprenant :

   une fonction de serveur d'amorçage, BSF, (104) configurée pour
   transmettre un premier message à un serveur d'abonné résidentiel, HSS, (106), dans lequel le premier message comprend un paramètre d'horodatage correspondant à un paramètre de sécurité d'utilisateur d'architecture d'amorçage générique, GUSS, stocké dans le BSF, pour déterminer si le paramètre d'horodatage correspondant au GUSS stocké dans la BSF est égal à un paramètre d'horodatage correspondant à un GUSS stocké dans le serveur d'abonné résidentiel, HSS, et
   recevoir un second message à partir du HSS excluant le GUSS du HSS lorsque les paramètres d'horodatage du GUSS de la BSF et du HSS sont égaux.

2. Appareil comprenant :

   un serveur d'abonné résidentiel, HSS, (106) configuré pour
   recevoir un premier message à partir d'une fonction de serveur d'amorçage, BSF, (104), dans lequel le premier message comprend un paramètre d'horodatage correspondant à un paramètre de sécurité d'utilisateur d'architecture d'amorçage générique, GUSS, stocké dans la fonction de serveur d'amorçage, BSF, (104),
   comparer le paramètre d'horodatage correspondant au GUSS stocké dans la BSF avec un paramètre d'horodatage correspondant à un GUSS stocké dans le HSS, et
   renvoyer un second message à la BSF excluant le GUSS du HSS lorsque les paramètres d'horodatage du GUSS de la BSF et du HSS sont égaux.

3. Appareil selon la revendication 1 ou 2, dans lequel le second message comprend le GUSS et le paramètre d'horodatage correspondant lorsque les paramètres d'horodatage du GUSS de la BSF et du HSS ne sont pas égaux.

4. Appareil selon l'une quelconque des revendications précédentes, dans lequel le paramètre d'horodatage qui correspond à un GUSS particulier fait partie du même GUSS.

5. Appareil selon la revendication 3, lorsqu'elle dépend de la revendication 1, dans lequel la BSF (104) est configurée pour recevoir le second message, le GUSS et le paramètre d'horodatage associé au GUSS à partir du HSS (106), et pour mettre à jour le GUSS et le paramètre d'horodatage du HSS.

6. Appareil selon l'une quelconque des revendications précédentes, dans lequel le premier message comprend une demande pour un vecteur d'authentification, AV.

7. Appareil selon la revendication 2, dans lequel le HSS (106) est configuré pour affecter les paramètres d'horodatage au GUSS.

8. Appareil selon l'une quelconque des revendications 2 et 7 ou l'une quelconque des revendications 3, 4 et 6 lorsqu'elles dépendent de la revendication 2, dans lequel le HSS (106) est configuré pour modifier le paramètre d'horodatage pour le GUSS lorsque les données de ce GUSS ont été modifiées.

9. Appareil selon la revendication 7, dans lequel le HSS (106) est configuré pour affecter les paramètres d'horodatage pour le GUSS dans une séquence monotoniquement croissante ou une séquence monotoniquement décroissante.

**10.** Appareil selon la revendication 7, dans lequel le HSS (106) est configuré pour affecter les paramètres d'horodatage pour le GUSS en tant que hachage ou partie du hachage d'une instance particulière du GUSS de la BSF (104) et du HSS.

**11.** Appareil selon l'une quelconque des revendications 1 et 5 ou l'une quelconque des revendications 3, 4 ou 6 lorsqu'elles dépendent de la revendication 1, dans lequel la BSF (104) est configurée pour stocker le paramètre d'horodatage sous une forme numérique ou alphanumérique différente du paramètre d'horodatage stocké dans le HSS (106).

**12.** Appareil selon l'une quelconque des revendications 1, 5 et 11 ou l'une quelconque des revendications 3, 4 ou 6 lorsqu'elles dépendent de la revendication 1, dans lequel la BSF (104) est configurée pour transmettre le paramètre d'horodatage sous une forme numérique ou alphanumérique différente du paramètre d'horodatage du HSS (106).

**13.** Appareil selon la revendication 7, dans lequel, lorsque le GUSS est créé, l'horodatage est initialisé à une valeur numérique ou à une valeur indicative de l'heure et/ou de la date indiquées par une horloge dans le HSS (106).

**14.** Appareil selon la revendication 7, dans lequel chaque fois que le GUSS est modifié, le GUSS devient une nouvelle version, et l'horodatage est incrémenté ou décrémenté de 1 ou est modifié en faveur de l'heure actuelle et/ou la date indiquées par une horloge dans le HSS (106).

**15.** Appareil selon la revendication 7, dans lequel le GUSS se voit affecter une valeur d'horodatage qui est un hachage ou une partie de ce hachage d'une instance particulière du GUSS.

**16.** Procédé, comprenant de :

transmettre un premier message à partir d'une fonction de serveur d'amorçage, BSF, (104) à un serveur d'abonné résidentiel, HSS, (106), dans lequel le premier message comprend un paramètre d'horodatage correspondant à un paramètre de sécurité d'utilisateur d'architecture d'amorçage générique, GUSS, stocké dans la BSF, pour déterminer si le paramètre d'horodatage correspondant au GUSS stocké dans le BSF est égal à un paramètre d'horodatage correspondant à un GUSS stocké dans le HSS ; et
recevoir un second message à partir du HSS au niveau de la BSF excluant le GUSS du HSS lorsque les paramètres d'horodatage du GUSS de la BSF et du HSS sont égaux.

**17.** Procédé selon la revendication 16, comprenant en outre de :

recevoir le second message au niveau de la BSF, comprenant le GUSS et le paramètre d'horodatage correspondant à partir du HSS (106) lorsque les paramètres d'horodatage du GUSS de la BSF (104) et du HSS ne sont pas égaux.

**18.** Procédé selon la revendication 16 ou 17, comprenant en outre de :

recevoir au niveau de la BSF, le second message, le GUSS et le paramètre d'horodatage associé au GUSS du HSS (106) ; et
mettre à jour le GUSS et le paramètre d'horodatage du HSS dans la BSF (104).

**19.** Procédé selon l'une quelconque des revendications 16 à 18, dans lequel l'envoi du premier message comprend d'envoyer une demande pour un vecteur d'authentification, AV.

**20.** Procédé selon l'une quelconque des revendications 16 à 19, dans lequel l'attribution des paramètres d'horodatage pour le GUSS est effectuée au niveau du HSS dans une séquence monotoniquement croissante ou une séquence monotoniquement décroissante.

**21.** Procédé selon l'une quelconque des revendications 16 à 19, dans lequel l'attribution des paramètres d'horodatage pour le GUSS est effectuée au niveau du HSS en tant que hachage ou partie du hachage d'une instance particulière du GUSS de la BSF (104) et du HSS (106).

**22.** Procédé selon l'une quelconque des revendications 16 à 21, comprenant en outre de :

stocker le paramètre d'horodatage de la BSF (104) au niveau de la BSF (104) sous une forme numérique ou alphanumérique différente du paramètre d'horodatage stocké dans le HSS (106).

23. Procédé selon l'une quelconque des revendications 16 à 22, comprenant en outre de :

transmettre le paramètre d'horodatage de la BSF (104) et le paramètre d'horodatage du HSS (106) sous différentes formes numériques ou alphanumériques.

24. Procédé selon l'une quelconque des revendications 16 à 24, comprenant en outre de :

ramener, au niveau du HSS (106), la forme numérique ou alphanumérique différente du paramètre d'horodatage à sa forme d'origine.

25. Procédé selon l'une quelconque des revendications 16 à 24, comprenant en outre de :

attribuer, au niveau du HSS (106), une valeur à l'horodatage dans une séquence monotoniquement croissante ou une séquence monotoniquement décroissante.

26. Procédé selon l'une quelconque des revendications 16 à 25, comprenant en outre de :

initialiser, au niveau du HSS (106), l'horodatage, lorsque le GUSS est d'abord créé, à une valeur numérique ou à une heure et/ou une date indiquées par une horloge dans le HSS (106).

27. Procédé selon l'une quelconque des revendications 16 à 26, comprenant en outre de :

incrémenter ou décrémenter, au niveau du HSS, l'horodatage de 1 chaque fois que le GUSS est modifié et devient par conséquent une nouvelle version.

28. Procédé selon l'une quelconque des revendications 16 à 27, comprenant en outre de :

modifier, au niveau du HSS (106), l'horodatage en faveur de l'heure et/ou de la date actuelle de l'horodatage chaque fois que le GUSS est modifié.

29. Procédé selon l'une quelconque des revendications 16 à 28, comprenant en outre de :

attribuer, au niveau du HSS (106), au GUSS, la valeur d'horodatage qui est un hachage ou une partie de ce hachage d'une instance particulière du GUSS.

30. Procédé comprenant de :

recevoir, au niveau d'un serveur d'abonné résidentiel, HSS, (106) un premier message à partir d'une fonction de serveur d'amorçage, BSF, (104), dans lequel le premier message comprend un paramètre d'horodatage correspondant à un paramètre de sécurité d'utilisateur d'architecture d'amorçage générique, GUSS, stocké dans une fonction de serveur d'amorçage, BSF, (104),
comparer le paramètre d'horodatage correspondant au GUSS stocké dans la BSF avec un paramètre d'horodatage correspondant à un GUSS stocké dans le HSS, et
renvoyer un second message à la BSF excluant le GUSS du HSS lorsque les paramètres d'horodatage du GUSS de la BSF et du HSS sont égaux.

31. Procédé selon la revendication 30, comprenant en outre de :

transmettre le second message à la BSF, comprenant le GUSS et le paramètre d'horodatage correspondant du HSS (106) lorsque les paramètres d'horodatage du GUSS de la BSF (104) et du HSS ne sont pas égaux.

32. Procédé selon la revendication 30 ou 31, dans lequel le premier message comprend une demande pour un vecteur d'authentification, AV.

33. Procédé selon l'une quelconque des revendications 30 à 32, dans lequel le HSS (106) attribue les paramètres d'horodatage au GUSS.

34. Procédé selon l'une quelconque des revendications 30 à 33, dans lequel le HSS (106) modifie le paramètre d'horodatage pour le GUSS lorsque les données de ce GUSS ont été modifiées.

35. Procédé selon l'une quelconque des revendications 30 à 34, dans lequel le HSS (106) attribue les paramètres d'horodatage pour le GUSS dans une séquence monotoniquement croissante ou une séquence monotoniquement décroissante.

36. Procédé selon l'une quelconque des revendications 30 à 35, dans lequel le HSS (106) attribue les paramètres d'horodatage pour le GUSS en tant que hachage ou partie du hachage d'une instance particulière du GUSS de la BSF (104) et du HSS.

37. Programme d'ordinateur incorporé sur un support lisible par ordinateur, le programme d'ordinateur étant configuré pour commander un processeur pour exécuter les étapes selon l'une quelconque des revendications 16 à 36.

38. Système de communication comprenant :

une fonction d'application de réseau, NAF ;
un équipement utilisateur configuré pour communiquer avec la NAF et pour transmettre une demande d'informations d'authentification ;
une fonction de serveur d'amorçage, BSF, (104) configurée pour recevoir la demande et pour transmettre un premier message, dans lequel le message comprend un paramètre d'horodatage correspondant à un paramètre de sécurité d'utilisateur d'architecture d'amorçage générique, GUSS, stocké dans la BSF ; et
un serveur d'abonné résidentiel, HSS, (106) configuré pour recevoir le premier message, pour comparer le paramètre d'horodatage correspondant au GUSS stocké dans la BSF avec un paramètre d'horodatage correspondant à un GUSS stocké dans le HSS, et pour renvoyer un second message à la BSF excluant le GUSS du HSS lorsque les paramètres d'horodatage du GUSS de la BSF et du HSS sont égaux.

# FIG. 1

# FIG. 2

100

UE

150
Request
(user identity)

104

BSF

152
Request
(user identity,
GUSS timestamp)

106

HSS

156
Unauthorized
WWW-Authenticate:
Digest (RAND, AUTN
delivered)

154
Answer
(AV, GUSS)

158
Client runs AKA
algorithms, verifies
AUTN, and session
keys derives RES

160
Request
Authorization:
Digest (RES is used)

162
Server checks the
given RES, if it is
correct.

166
Ok message, B-TID,
key lifetime

164
Ks=CK || IK

168
Ks=CK || IK

# FIG. 3A

| HSS creates GUSS. | 200 |

↓

| HSS initializes GUSSTIMESTAMP. | 210 |

| HSS modifies GUSS. | 220 |

↓

| HSS updates GUSSTIMESTAMP. | 230 |

EP 1 849 327 B1

**FIG.3B**

BSF prepares request for AV. ──300

BSF determines whether a GUSS is already stored in the BSF memory. ──310

YES → BSF reads GUSSTIMESTAMP associated with the GUSS stored in the BSF, and includes GUSSTIMESTAMP with request. ──320

NO

BSF sends request to HSS. ──330

HSS receives request from BSF. ──340

HSS determines whether GUSSTIMESTAMP is present in request. ──350

NO

YES

HSS determines if GUSSTIMESTAMP received from BSF and GUSSTIMESTAMP stored in the HSS are equal. ──360

NO → HSS includes GUSS stored in HSS to request. ──370

YES

HSS sends response to BSF. ──380

BSF receives response from HSS. ──390

BSF determines whether GUSS is present in response. ──400

NO

YES → BSF determines whether GUSS is present in BSF. ──410

YES → BSF deletes GUSS stored in BSF. ──420

NO

BSF stores received GUSS. ──430

BSF stores received AV. ──440

99

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2005028165 A


**Non-patent literature cited in the description**

- 3rd Generation Partnership Project; Technical Specification Group Services and System Aspects; 3G security; Generic Authentication Architecture (GAA); System description. *3GPP TS 33.919 version 6.2.0,* March 2005
- 3rd Generation Partnership Project; Technical Specification Group Services and System Aspects; 3G security; Generic Authentication Architecture (GAA); Generic bootstrapping architecture (Release 7). *3GPP TS 33.220 version 7.1.1,* October 2005
- 3rd Generation Partnership Project; Technical Specification Group Core Networks and Terminals; Generic Authentication Architecture (GAA); Zh and Zn Interfaces based on the Diameter protocol; Stage 3 (Release 7). *3GPP TS 29.109 version 7.0.0,* September 2005
- 3rd Generation Partnership Project; Technical Specification Group Core Network; Open Service Access (OSA); Parlay X web services; Part 1: Common. *3GPP TS 29.199-01*
- 3rd Generation Partnership Project; Technical Specification Group Terminals; Characteristics of the USIM application. *3GPP TS 31.102*
- 3rd Generation Partnership Project; Technical Specification Group Services and System Aspects; 3G Security; Security architecture. *3GPP TS 33.102*
- **FRANKS J. et al.** HTTP Authentication: Basic and Digest Access Authentication. *RFC 2617,* June 1999
- **A. NIEMI et al.** Hypertext Transfer Protocol (HTTP) Digest Authentication Using Authentication and Key Agreement (AKA). *RFC 3310,* September 2002
- 3rd Generation Partnership Project; Technical Specification Group Services and System Aspects; Generic Authentication Architecture (GAA); Support for Subscriber Certificates. *3GPP TS 33.221*
- **T. DIERKS et al.** The TLS Protocol Version 1.0. *RFC 2246,* January 1999
- Provisioning Content Version 1.1. *Open Mobile Alliance,* 13 August 2003

- 3rd Generation Partnership Project; Technical Specification Group Services and System Aspects; IP Multimedia Subsystem (IMS); Stage 2 (Release 6). *3GPP TS 23.228*
- Transport Layer Security (TLS) Extensions. RFC 3546. IETF, 2003
- 3rd Generation Partnership Project; Technical Specification Group Terminals; Characteristics of the IP Multimedia Services Identity Module (ISIM) application. *3GPP TS 31.103*
- 3rd Generation Partnership Project; Technical Specification Group Core Network; Numbering, addressing and identification. *3GPP TS 23.003*
- The Base16, Base32, and Base64 Data Encodings. RFC 3548. IETF, 2003
- 3rd Generation Partnership Project; Technical Specification Group Services and System Aspects; 3G Security; Network domain security; IP network layer security. *3GPP TS 33.210*
- Diameter Base Protocol. RFC 3588. IETF, 2003
- 3rd Generation Partnership Project; Technical Specification Group Terminals; UICC-terminal interface; Physical and logical characteristics. *3GPP TS 31.101*
- 3rd Generation Partnership Project; Technical Specification Group Services and System Aspects; 3G security; Access security for IP-based services. *3GPP TS 33.203*
- Internet X.509 Public Key Infrastructure Certificate and Certificate Revocation List (CRL) Profile. RFC 3280. IETF, 2002
- HTTP over TLS. RFC 2818. IETF, 2000
- 3rd Generation Partnership Project; Technical Specification Group Service and System Aspects; Network Domain Security (NDS); Authentication Framework (AF). *3GPP TS 33.310*
- X.509 Internet Public Key Infrastructure Online Certificate Status Protocol - OCSP. RFC 2560. IETF, 1999
- Secure Hash Standard. *FIPS PUB,* 2002, 180-2
- HMAC: Keyed-Hashing for Message Authentication. RFC 2104. IETF, 1997

- Information Technology-Security techniques-Hash-functions-Part 3: Dedicated hash-functions. *ISO/IEC,* 2004, 10118-3
- UTF-8, a transformation format of ISO 10646. RFC 3629. IETF, 2003
- 3rd Generation Partnership Project; Technical Specification Group Services and System Aspects; Generic Authentication Architecture (GAA); Access to network application functions using Hypertext Transfer Protocol over Transport Layer Security (HTTPS). *3GPP TS 33.222*
- 3G Security; Security of Multimedia Broadcast/Multicast Service (MBMS). *3GPP TS 33.246*
- Pre-Shared Key Ciphersuites for Transport Layer Security (TLS). Intemet-Draft. IETF, December 2005
- The TLS Protocol Version 1. RFC 2246. IETF, 1999
- 3rd Generation Partnership Project; Technical Specification Group Core Network and Terminals; Bootstrapping interface (Ub) and network application function interface (Ua); Protocol details. *3GPP TS 24.109*
- Diameter Base Protocol. RFC 3588. IETF
- IP Multimedia (IM) Subsystem Cx and Dx Interfaces; Signalling flows and message contents. *3GPP TS 29.228*
- Cx and Dx interfaces based on the Diameter protocol. *3GPP TS 29.229*
- Generic Authentication Architecture (GAA); System Description (rel-6). *3GPP TR 33.919*
- Generic Authentication Architecture (GAA); Generic Bootstrapping Architecture (rel-6). *3GPP TS 33.220*
- Generic Authentication Architecture (GAA); Support for Subscriber Certificates (rel-6). *3GPP TS 33.221*
- Bootstrapping interface (Ub) and Network application function interface (Ua);Protocol details. *3GPP TS 24.109*
- Diameter applications; 3GPP specific codes and identifiers (rel-6). *3GPP TS 29.230*
- Diameter Command Codes for Third Generation Partnership Project (3GPP) Release 5. RFC 3589. IETF
- Organisation of subscriber data. *3GPP TS 23.008*
- Generic Authentication Architecture (GAA); Access to network application functions using secure hypertext transfer protocol (HTTPS) (rel-6). *3GPP TS 33.222*
- IP Multimedia Subsystem (IMS); Stage 2. *3GPP TS 23.228*